# EUROPÄISCHE PATENTSCHRIFT

(11) **EP 2 483 142 B1**
(45) Veröffentlichungstag und Bekanntmachung des Hinweises auf die Patenterteilung: **30.09.2015**
(21) Anmeldenummer: 10754791.1
(22) Anmeldetag: 31.07.2010
(51) Int. Cl.: B62M 6/55, F16H 7/06

(54) **DREI-KETTEN-GETRIEBE FÜR EIN FAHRZEUG MIT ELEKTROMOTOR**
TRANSMISSION WITH THREE CHAINS FOR A VEHICLE WITH ELECTRICAL MOTOR
TRANSMISSION À TROIS CHAINES POUR VEHICULE AVEC ELECTROMOTEUR

(30) Priorität: 31.07.2009 DE 202009005093 U
(43) Veröffentlichungstag der Anmeldung: 08.08.2012
(73) Patentinhaber: TQ-Systems GmbH, 82229 Seefeld (DE)
(72) Erfinder: HOEBEL, Rudi, 82008 Munich (Unterhaching) (DE)
(74) Vertreter: Schweiger, Martin
(86) Internationale Anmeldenummer: PCT/IB2010/053492
(87) Internationale Veröffentlichungsnummer: WO 2011/013109

(56) Entgegenhaltungen:
- EP-A2- 0 739 812
- WO-A2-2009/098647
- DE-A1- 3 117 415
- GB-A- 658 966

## Beschreibung

Die vorliegende Anmeldung betrifft Getriebeeinheiten für Fahrzeuge und Fahrzeuge, insbesondere Fahrräder, die sowohl mit Muskelkraft als auch mit einem Motor, insbesondere einem elektrischen Motor, angetrieben werden. Fahrräder, die mit einem elektrischen Hiltsmotor ausgestattet sind, werden auch als Elektrofahrrad bezeichnet. Daneben betrifft die Anmeldung Fahrzeuge wie Boote, z.B. Tretboote.

Man unterscheidet grundsätzlich zwei Typen von Elektrofahrrädern, nämlich das E-Bike und das Pedelec. Beim E-Bike wird der Molor unabhängig von der Treileistung des Fahrrads gesteuert, dass heißt Fahren ist auch ohne Treten möglich. Dabei wird die Motorleistung über ein manuelles Bedienelement - einen Drehgriff oder Knopf-geregelt, wie das von Mopeds bereits bekannt ist. Muskelkraft und Motor sind unabhängig voreinander wirkende Systeme. E-Bikes können sowohl rein elektrisch wie auch im Mischbetrieb gefahren werden.

Beim Pedelec hingegen funktioniert die Hilfsantriebsunterstützung nur dann, wenn gleichzeitig getreten wird. In der Regel wird dabei bis zur einer bestimmten Höchstgeschwindigkeit ein Teil der vom Fahrer erbrachten Leistung durch den Hillsantrieb ergänzt. Die Motorleistung wird dabei über einen Kraft- bzw. Bewegungssensor automatisch an die Muskelkraft des Fahrers gekoppelt.

DE 31 17 415 A1 offenbart eine Getriebeeinheit für ein sowohl mit Menschenkraft als auch mit einem Elektromotor angetriebenes Fahrzeug, wobei das Getriebe die folgenden Merkmale aufweist:- eine durch Menschenkraft betätigbare Kurbelwelle, - eine Eingangswelle zum Anschluß an eine Rotorwelle eines Elektromotors - eine Ausgangswelle zum Anschluß an ein Abtriebselement eines Fahrzeugs, wobei im Kraftfluß zwischen der Kurbelwelle und der Ausgangswelle eine erste Freilaufeinrichtung vorgesehen ist, die die folgenden Merkmale aufweist: - ein erstes Einleitungselement, das mit der Kurbelwelle in Verbindung steht, - ein erstes Ausleitungselement, - ein zweites Ausleitungselement, das mit der Ausgangswelle in Verbindung steht, wobei das erste Ausleitungselement und ein zweites Ausleitungselement permanent miteinander verbunden sind, und wobei ferner zwischen der Eingangswelle und der Ausgangswelle ein dreistufiges Untersetzungsgetriebe vorgesehen ist, das drei Untersetzungsstufen mit jeweils zwei Zahnrädern aufweist, wobei die Untersetzungsstufen jeweils ein Abtriebszahnrad und ein Antriebszahnrad aufweisen, von denen ein Abtriebszahnrad einer ersten Untersetzungsstufe konzentrisch zu einer Achse der Eingangswelle angeordnet ist und von denen ein Abtriebszahnrad der ersten Untersetzungsstufe, ein Antriebszahnrad der zweiten Untersetzungsstufe und ein Abtriebszahnrad der dritten Untersetzungsstufe konzentrisch zu der Kurbelwelle angeordnet sind, wobei sich die erste Untersetzungsstufe im Kraftfluss zwischen dem Elektromotor und dem ersten Einleitungselement befindet.

Die Anmeldung stellt gemäß einem Aspekt ein Getriebe bereit, bei dem Muskelkraft und Elektroantrieb auf einfache Weise miteinander kombiniert werden können.

Die Getriebeeinheit der Anmeldung ist für ein sowohl mit Menschenkraft - also manuell oder auch peduell d.h. mit Pedalen angetrieben - als auch mit einem Elektromotor angetriebenes Fahrzeug, wobei das Getriebe eine durch Menschenkraft betätigbare Kurbelwelle zum Anschluß an eine erste Antriebsvorrichtung mit Kurbeln und Pedalen und eine davon separate Eingangswelle zum Anschluß an eine Rotorwelle eines Elektromotors aufweist. Das dort eingebrachte Drehmoment wird von der Getriebeeinheit an eine Ausgangswelle übertragen, die zum Anschluß an ein Abtriebselement z.B. Kettenrad, Riemenscheibe, Ausgangswelle, etc. eines Fahrzeugs bestimmt ist.

Irgendwo im Kraftfluß oder auch speziell direkt zwischen der Kurbelwelle und der Ausgangswelle kann eine erste Freilaufeinrichtung vorgesehen sein, die ein erstes Einleitungselement aufweist, das direkt oder indirekt, fest oder lösbar mit der Eingangswelle in Verbindung stehen kann. Ein erstes Ausleitungselement kann direkt oder indirekt sowie fest oder lösbar mit der Ausgangswelle in Verbindung stehen.

Irgendwo im Kraftfluß oder auch speziell direkt zwischen der Eingangswelle und der Ausgangswelle eine zweite Freilaufeinrichtung vorgesehen ist, die ein zweites Einleitungselement aufweist, das direkt oder indirekt, fest oder lösbar mit der Kurbelwelle in Verbindung stehen kann. Außerdem hat es ein zweites Ausleitungselement, das direkt oder indirekt bzw. fest oder lösbar mit der Ausgangswelle in Verbindung steht. Das erste Ausleitungselement und das zweite Ausleitungselement sind permanent miteinander verbunden und zwar im wesentlichen ohne Kupplung im Kraftfluss, also entweder über Übertragungselemente des Untersetzungsgetriebes oder direkt. Ferner sind zwischen der Eingangswelle und der Ausgangswelle ein dreistufiges Untersetzungsgetriebe vorgesehen ist. Bei dem Getriebe untersetzt in jeder Getriebestufe. Insgesamt sind drei Untersetzungsstufen mit jeweils zwei Zahnrädern vorgesehen, wobei die Untersetzungsstufen jeweils ein Abtriebszahnrad und ein Antriebszahnrad aufweisen. Davon ist ein Abtriebszahnrad einer ersten Untersetzungsstufe konzentrisch zu einer Achse der Eingangswelle angeordnet und ein Abtriebszahnrad der ersten Untersetzungsstufe, ein Antriebszahnrad der zweiten Untersetzungsstufe und ein Abtriebszahnrad der dritten Untersetzungsstufe sind konzentrisch zu der Kurbelwelle angeordnet. Die erste Untersetzungsstufe befindet sich im Kraftfluss zwischen dem Elektromotor und dem ersten Einleitungselement und die zweite Untersetzungsstufe und die dritte Untersetzungsstufe sind im Kraftfluss zwischen dem ersten Ausleitungselement der ersten Freilaufeinrichtung und dem zweiten Einleitungselement der zweiten Freilaufeinrichtung angeordnet.

Eine solche Getriebeeinheit lässt sich kompakt und einfach aufbauen, wobei die beiden Freiläufe eine komfortable Benutzung gestattet.

Eine einfache Konstruktion ergibt sich, wenn das erste Einleitungselement als Außenring der ersten Freilaufeinrichtung ausgebildet ist und wenn das erste Ausleitungselement als Innenring der ersten Freilaufeinrichtung ausgebildet ist. Weiterhin sollte dann das zweite Einleitungselement als Außenring der zweiten Freilaufeinrichtung ausgebildet sein und das zweite Ausleitungselement als Innenring der zweiten Freilaufeinrichtung ausgebildet sein.

Man kann reibungsarme Zentrifugalfreilaufe einsetzen, wenn das erste Einleitungselement als Außenring der ersten Freilaufeinrichtung ausgebildet ist und wenn das erste Ausleitungselement als Innenring der ersten Freilaufeinrichtung ausgebildet ist, wobei ferner das zweite Einleitungselement als Innenring der zweiten Freilaufeinrichtung ausgebildet ist und das zweite Ausleitungselement als Außenring der zweiten Freilaufeinrichtung ausgebildet ist.

Ein kompakter Aufbau der Getriebeeinheit ergibt sich, wenn das Abtriebszahnrad der ersten Untersetzungsstufe und das Antriebszahnrad der zweiten Untersetzungsstufe auf einer gemeinsamen Hohlwelle gelagert sind und wenn das Abtriebszahnrad der zweiten Untersetzungsstufe und das Antriebszahnrad der dritten Untersetzungsstufe auf einer gemeinsamen Welle gelagert sind. Dabei können das Abtriebszahnrad der ersten Untersetzungsstufe und das Antriebszahnrad der zweiten Untersetzungsstufe mittels einer ersten Lagerung gelagert sein, wobei das Abtriebszahnrad der zweiten Untersetzungsstufe und das Antriebszahnrad der dritten Untersetzungsstufe mittels einer zweiten Lagerung gelagert sind. Ein kompakter Aufbau wird begünstigt, wenn die erste Lagerung und die zweite Lagerung jeweils als zwei entgegengesetzt orientierte Schräglager ausgebildet sind, insbesondere als sogenannte O-Lagerung, bei der ein Zahnrad außerhalb der beiden Lagerstellen angeordnet werden kann. Zusätzlich kann dann die Abtriebswelle als innere Hohlwelle ausgebildet sein, wobei das Abtriebszahnrad der ersten Untersetzungsstufe und das Antriebszahnrad der zweiten Untersetzungsstufe auf einer äußeren Hohlwelle angeordnet sind, die drehbar auf der inneren Hohlwelle angeordnet ist.

In einer besonderen Ausgestaltung ist die zweite Freilaufeinrichtung an einem Ende der inneren Hohlwelle zwischen der Hohlwelle und der Kurbelwelle angeordnet, wobei die erste Freilaufeinrichtung zwischen dem Abtriebszahnrad der ersten Untersetzungsstufe und der äußeren Hohlwelle angeordnet sein kann. Dadurch wird die Gestaltungsfreiheit, die sich aus einer Verwendung einer Hohlwelle ergibt, vorteilhaft angewendet.

Die innere Hohlwelle kann auch als Ausgangswelle zur Verbindung mit einem Abtriebsrad für eine Abtriebsstufe des Fahrzeugs ausgebildet sein.

Eine günstige Lagerung ergibt sich, wenn die innere Hohlwelle an einer Seite in einem Gehäuse der Getriebeeinheit gelagert ist. Auf der anderen Seite ist die Kurbelwelle in dem Gehäuse der Getriebeeinheit gelagert. Die Kurbelwelle ist an der gegenüberliegenden Seite in der inneren Hohlwelle gelagert.

Die Getriebeeinheit hat in wenigstens einer Untersetzungsstufe eine Rollenkette oder einen Zahnriemen. Alternativ dazu sind auch Zahnräder, die direkt ineinander eingreifen möglich, also schräg oder gerade verzahnt.

Besonders günstig ist es, wenn die Getriebeeinheit mit wenigstens einer Zentrifugalfreilaufeinrichtung versehen ist. Dadurch ergeben sich geringe Reibungskräfte, was typisch ist für eine Freilaufeinrichtung, die unter Zuhilfenahme von Zentrifugalkräften aktiviert wird bzw. sperrt.

Die Anmeldung umfasst auch ein Fahrzeug mit einer solchen Getriebeeinheit, wobei die Ausgangswelle mit einem Laufrad des Fahrzeugs verbunden ist und wobei die Eingangswelle mit einem Elektromotor verbunden ist. Man kann sich dabei ein Elektrofahrrad oder einen Rollstuhl vorstellen.

Die Ausführungsformen der vorliegenden Anmeldung werden im folgenden unter Bezugnahme auf Figuren näher erläutert.
- Figur 1: zeigt eine Prinzipskizze mehrerer Ausführungsbeispiele einer MotorGetriebe Einheit mit doppeltem Freilauf und Kettengetriebe,
- Figur 2: zeigt eine Prinzipskizze eines Ausführungsbeispiels einer Motor Getriebe Einheit gemäß Fig. 1,
- Figur 3: zeigt eine Explosionszeichnung der Ausführungsform von Fig. 2,
- Figur 4: zeigt eine detaillierte Schnittzeichnung des Getriebes von Figur 1,
- Figur 5: zeigt eine Prinzipskizze eines weiteren Ausführungsbeispiels einer Motor Getriebe Einheit gemäß Fig. 1,

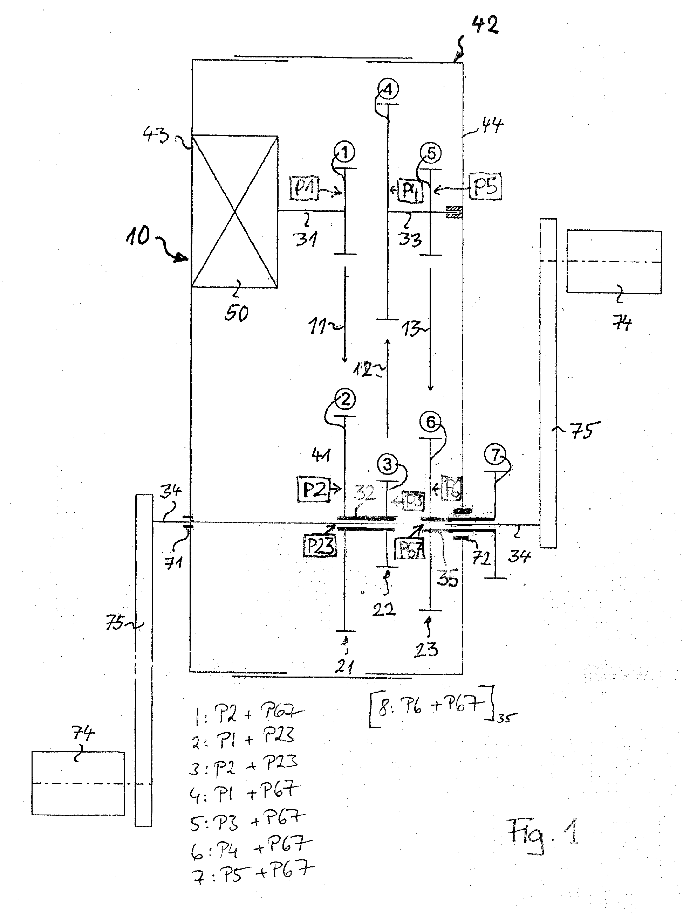

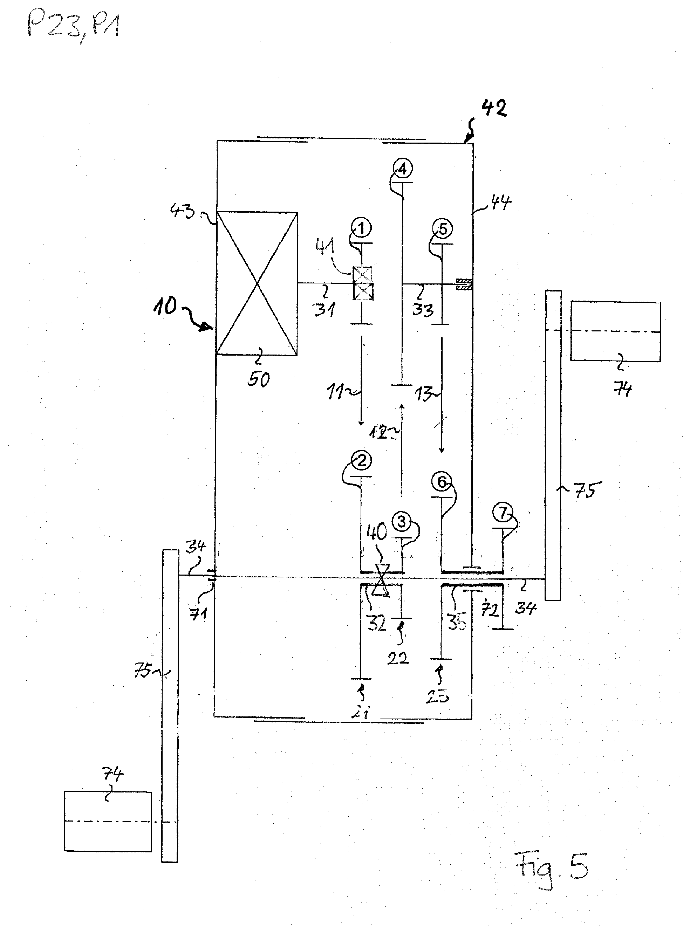

- Figur 5: zeigt eine Prinzipskizze eines weiteren Ausführungsbeispiels einer Motor Getriebe Einheit gemäß Fig. 1,

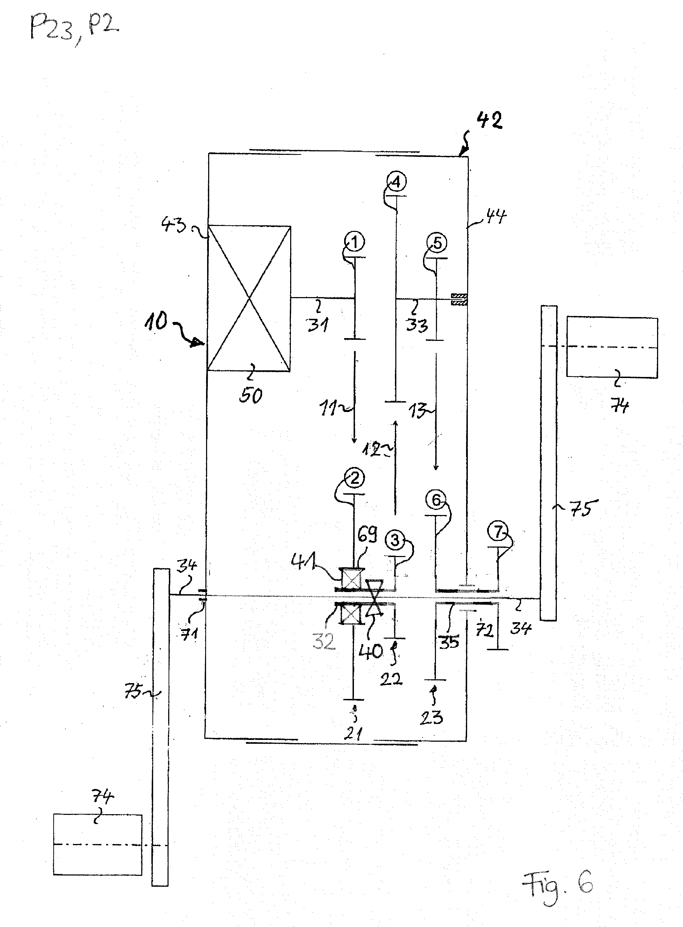

- Figur 6: zeigt eine Prinzipskizze eines weiteren Ausführungsbeispiels einer Motor Getriebe Einheit gemäß Fig. 1,

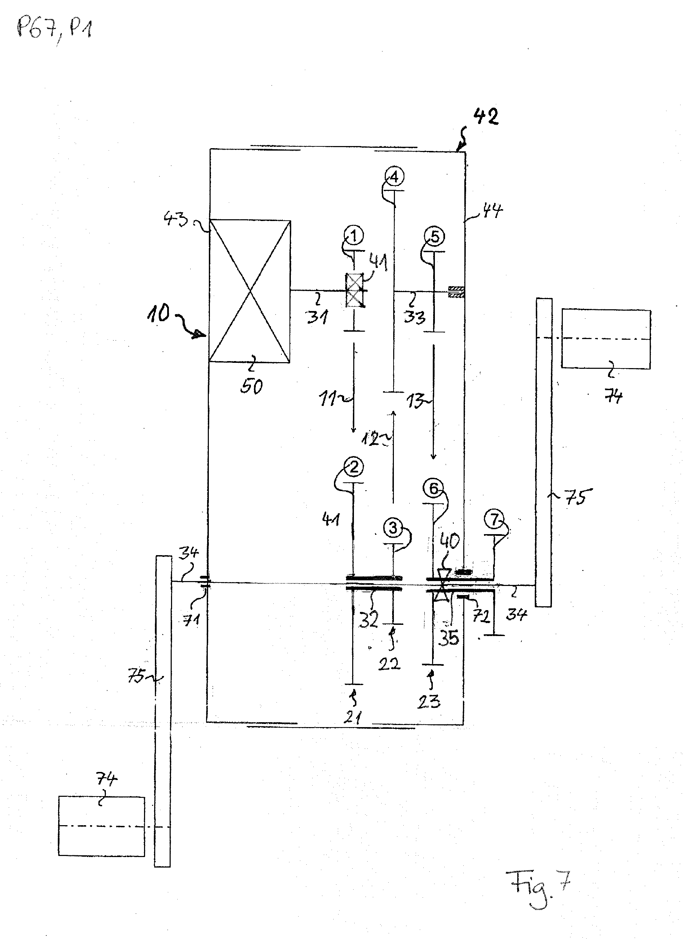

- Figur 7: zeigt eine Prinzipskizze eines weiteren Ausführungsbeispiels einer Motor Getriebe Einheit gemäß Fig. 1,

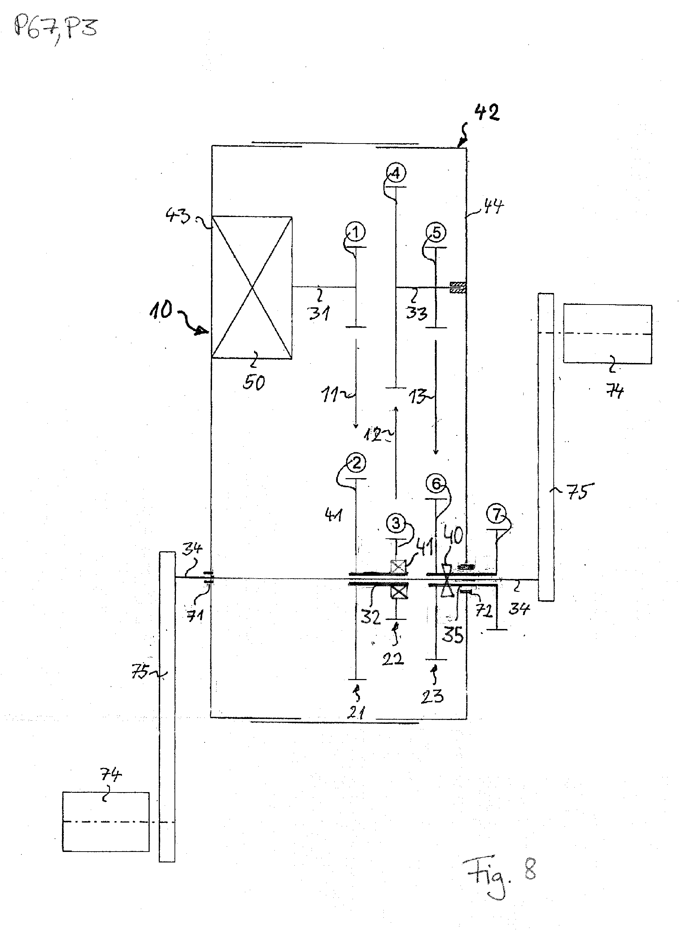

- Figur 8: zeigt eine Prinzipskizze eines weiteren Ausführungsbeispiels einer Motor Getriebe Einheit gemäß Fig. 1,

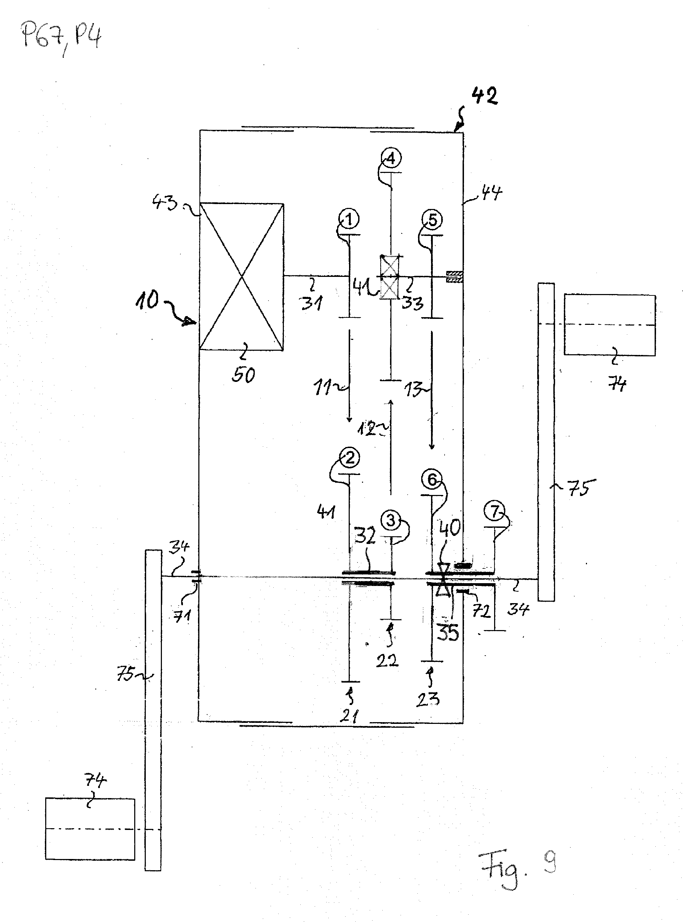

- Figur 9: zeigt eine Prinzipskizze eines weiteren Ausführungsbeispiels einer Motor Getriebe Einheit gemäß Fig. 1,

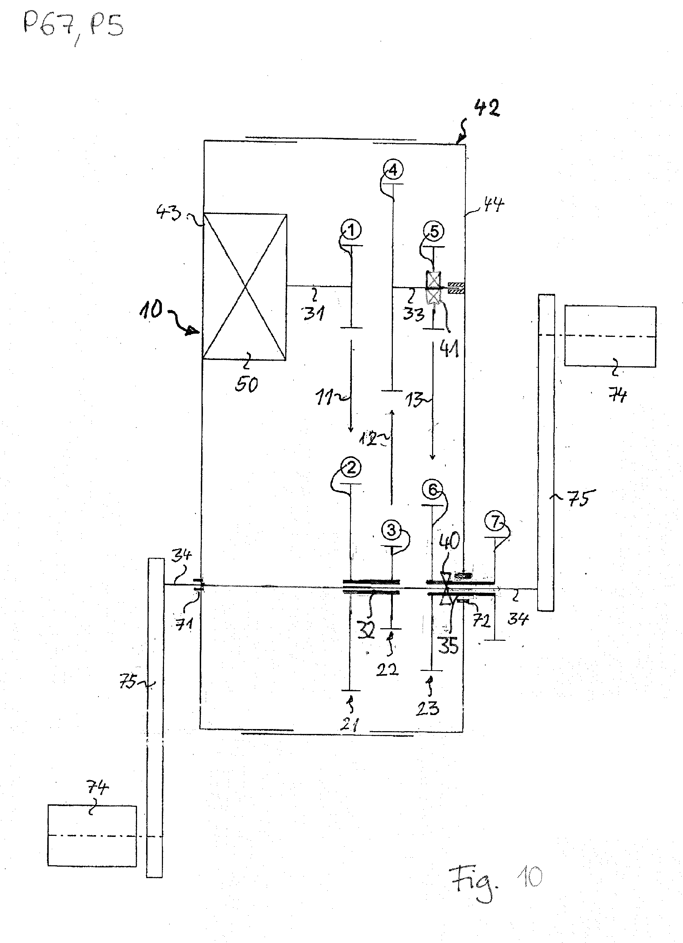

- Figur 10: zeigt eine Prinzipskizze eines weiteren Ausführungsbeispiels einer Motor Getriebe Einheit gemäß Fig. 1,

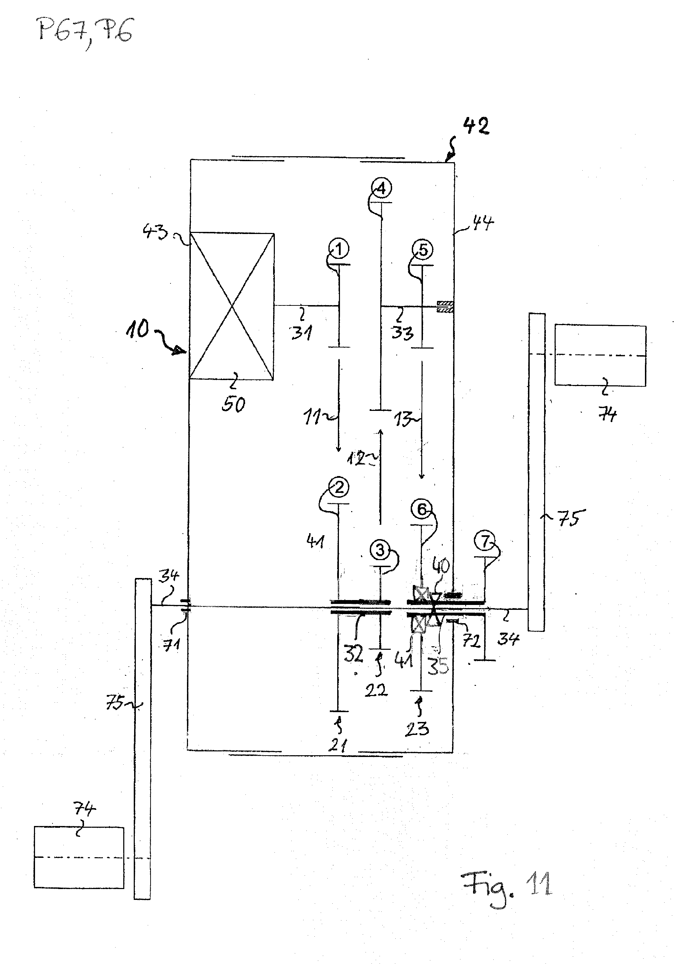

- Figur 11: zeigt eine Prinzipskizze eines weiteren Ausführungsbeispiels einer Motor Getriebe Einheit gemäß Fig. 1,

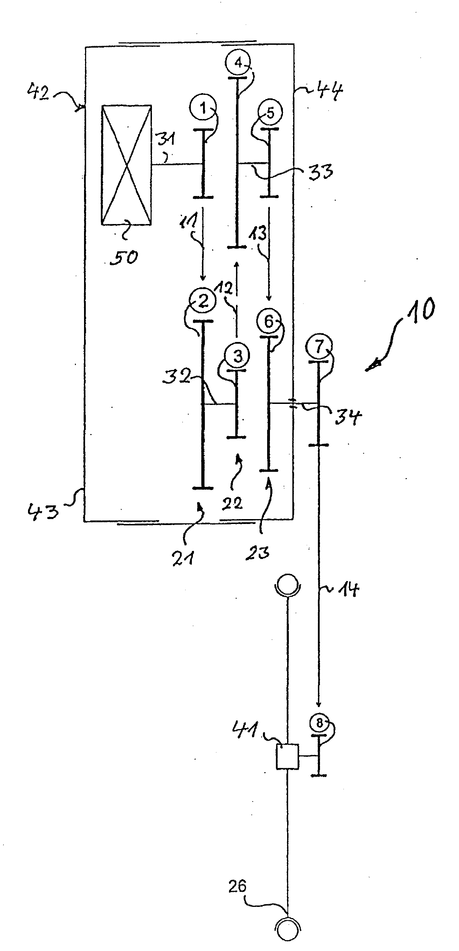

- Figur 12: zeigt eine Prinzipskizze eines Antriebs mit Elektromotor und Getriebe für ein Kleinfahrzeug,

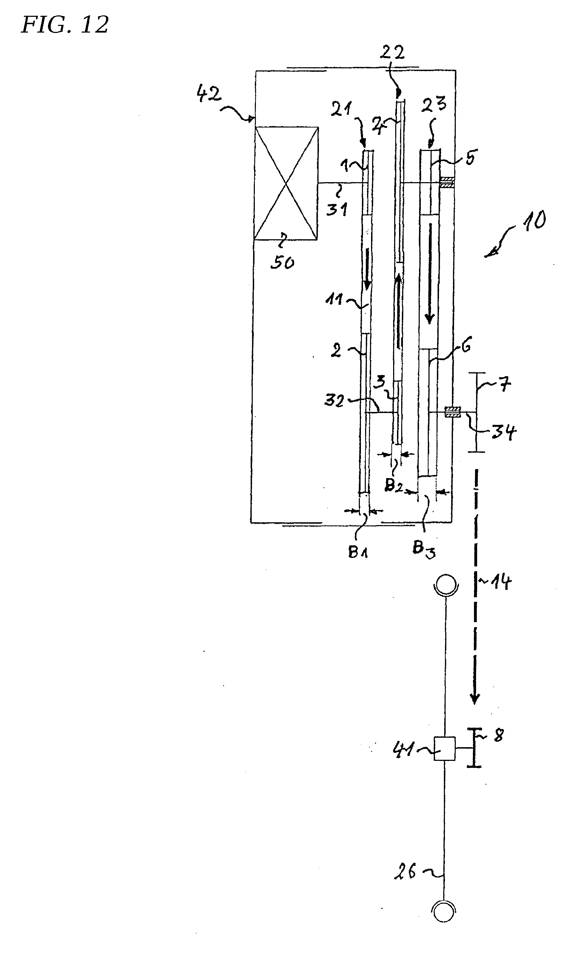

- Figur 13: zeigt eine weitere Prinzipskizze eines Antriebs mit Elektromotor und Getriebe für ein Kleinfahrzeug,

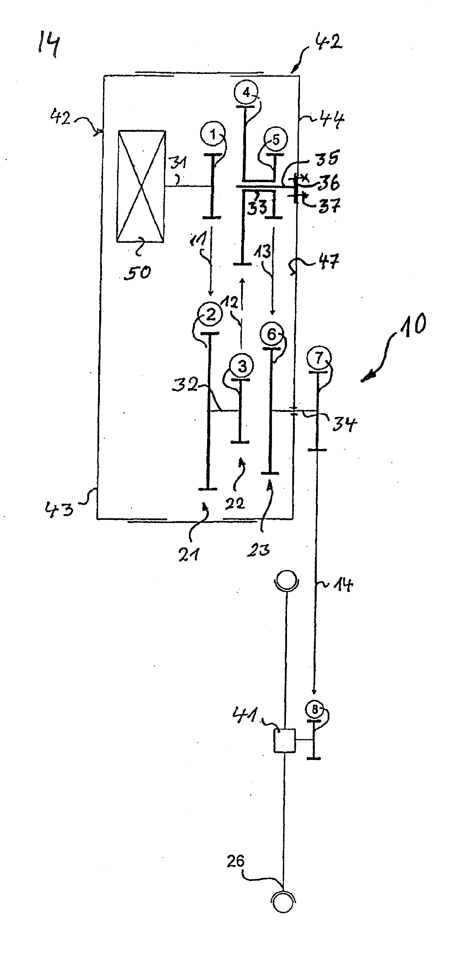

- Figur 14: zeigt eine weitere Prinzipskizze eines Antriebs mit Elektromotor und Getriebe für ein Kleinfahrzeug,

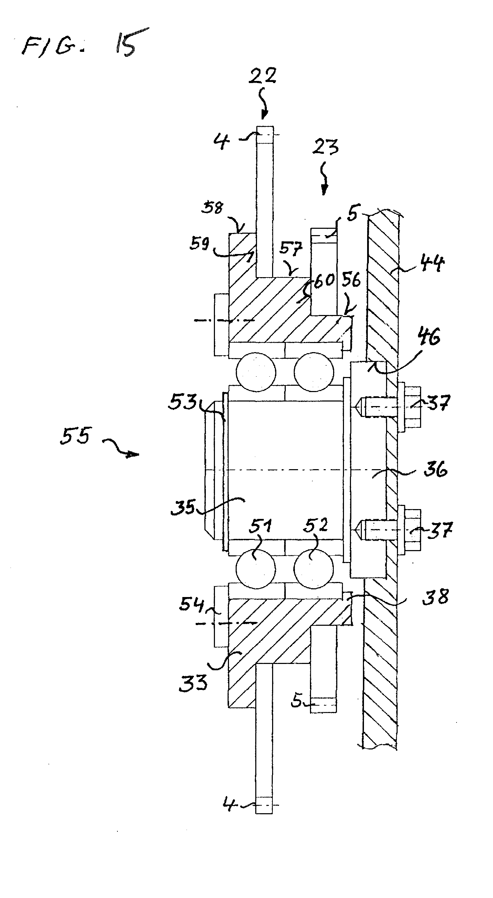

- Figur 15: zeigt eine schematische Darstellung einer Lagerung einer Zwischenwelle in Figur 14,

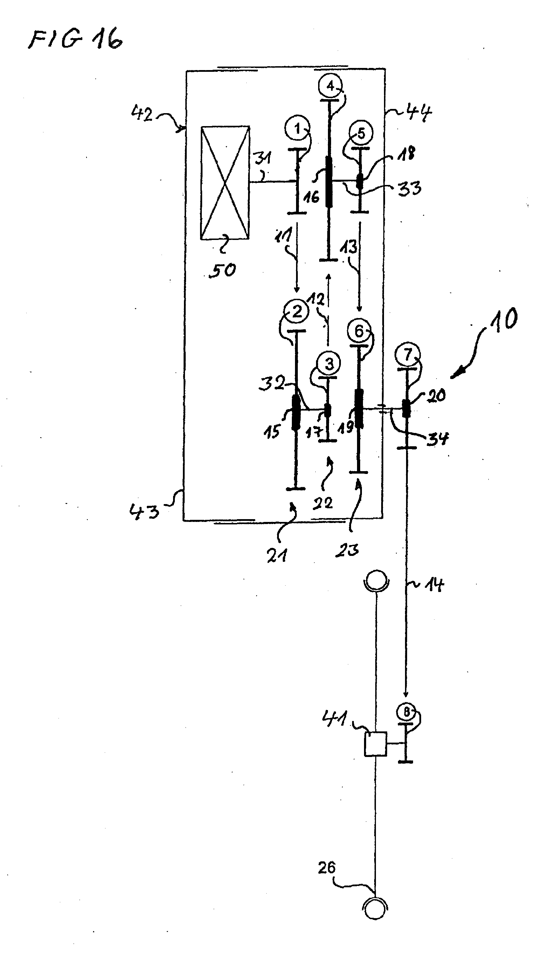

- Figur 16: zeigt eine Prinzipskizze eines weiteren Antriebs mit Elektromotor und Getriebe für ein Kleinfahrzeug,

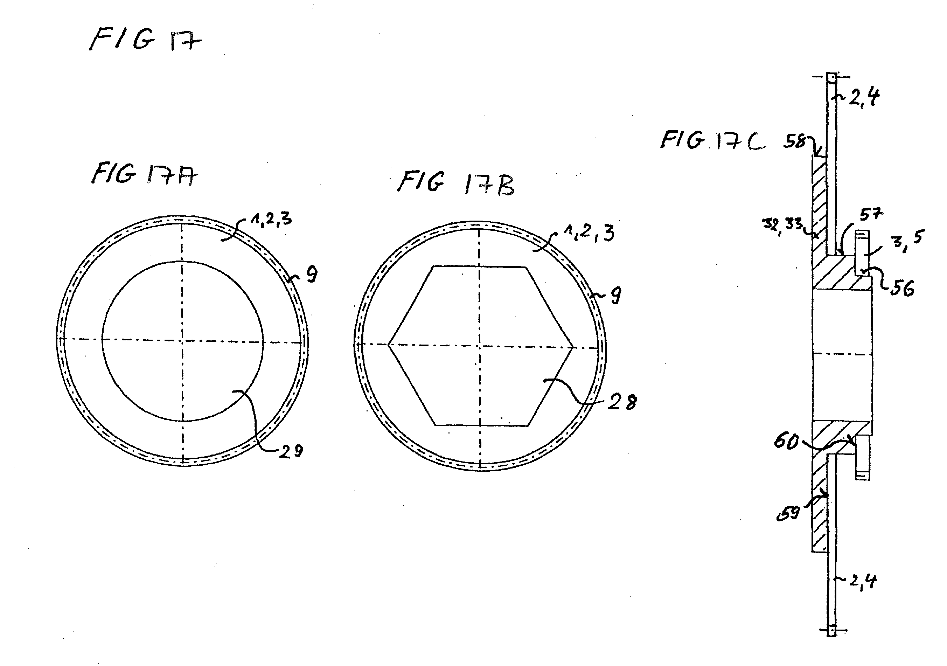

- Figur 17: zeigt schematische Darstellungen von unterschiedlichen Nabenformen von Zahnrädern des Getriebes aus Fig. 16,

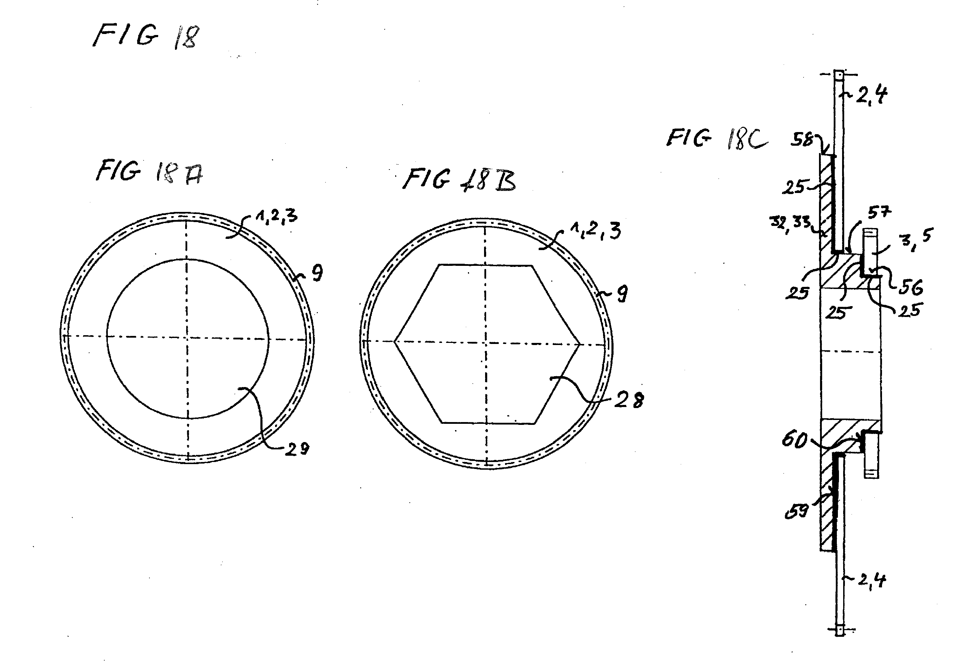

- Figur 18: zeigt schematische Darstellungen von unterschiedlichen Nabenformen mit aufgeklebten Zahnrädern des Getriebes aus Fig. 16 und 17,

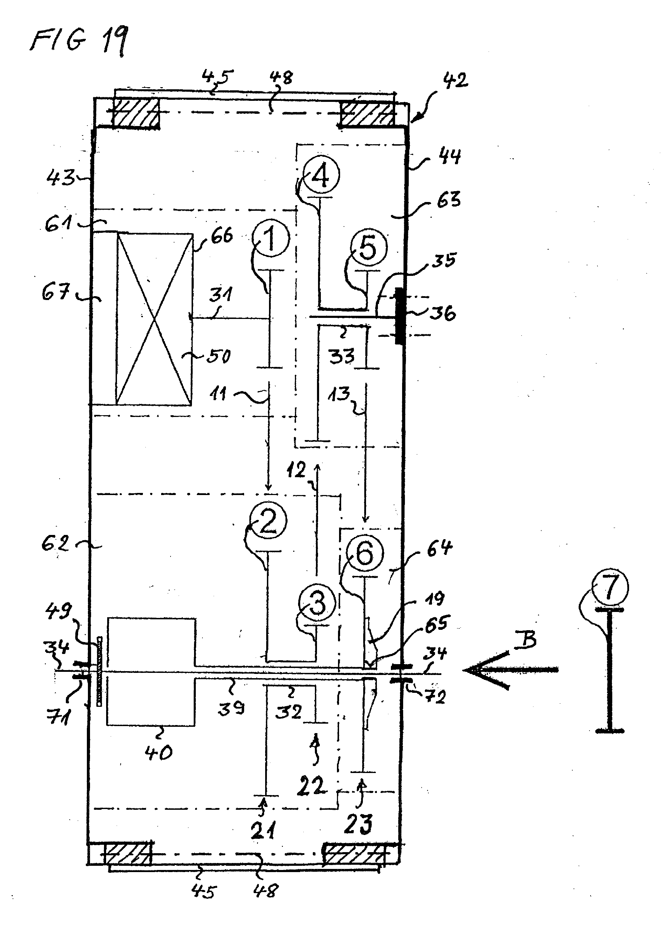

- Figur 19: zeigt eine Prinzipskizze eines weiteren Antriebs mit Elektromotor und Getriebe für ein Kleinfahrzeug;

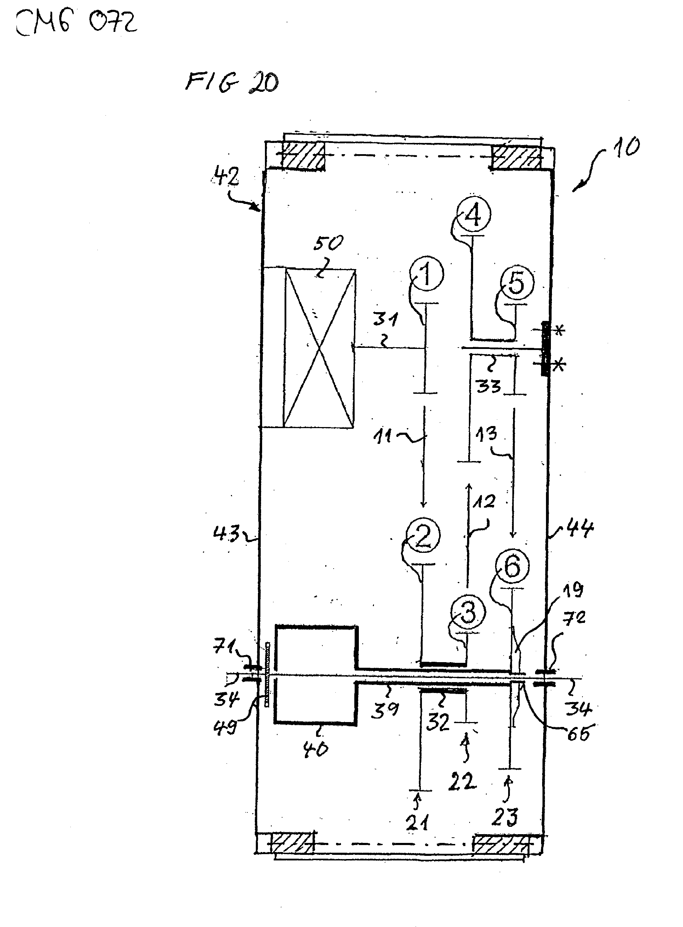

- Figur 20: zeigt eine Prinzipskizze eines weiteren Antriebs mit Elektromotor und Getriebe für ein Kleinfahrzeug,

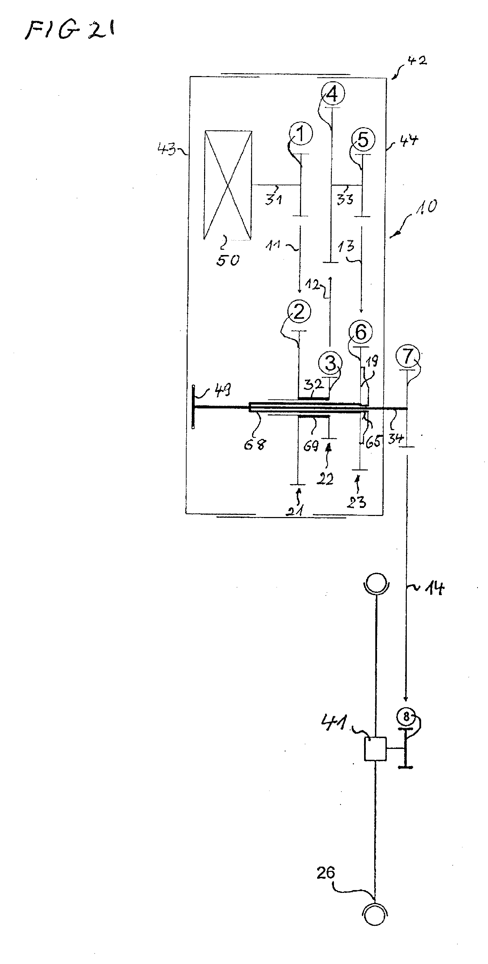

- Figur 21: zeigt eine Prinzipskizze eines weiteren Antriebs mit Elektromotor und Getriebe für ein Kleinfahrzeug,

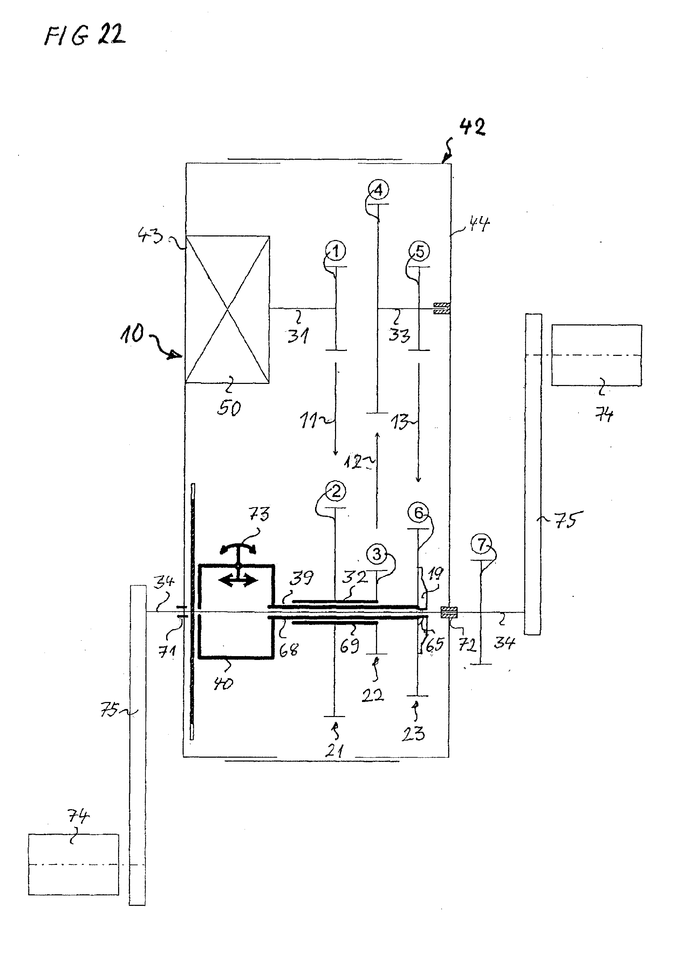

- Figur 22: zeigt eine Prinzipskizze eines weiteren Antriebs mit Elektromotor und Getriebe für ein Kleinfahrzeug,

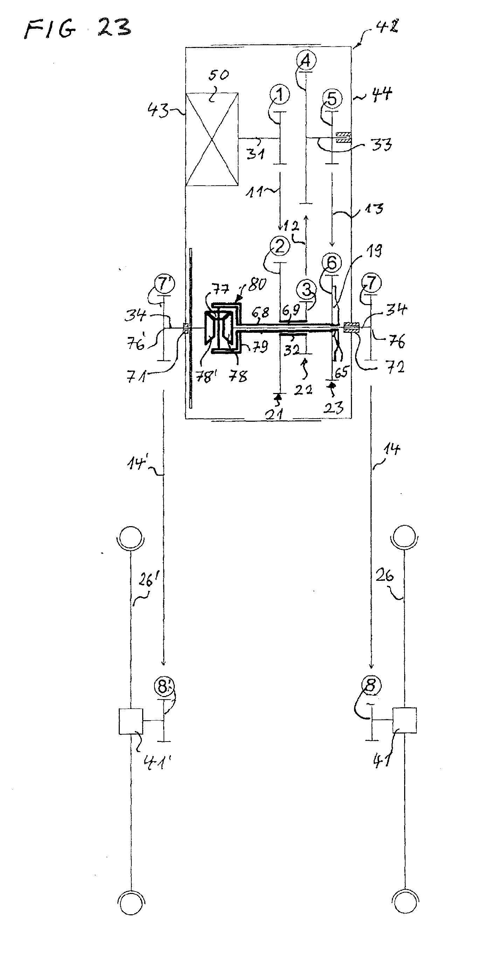

- Figur 23: zeigt eine Prinzipskizze eines weiteren Antriebs mit Elektromotor und Getriebe für ein Kleinfahrzeug,

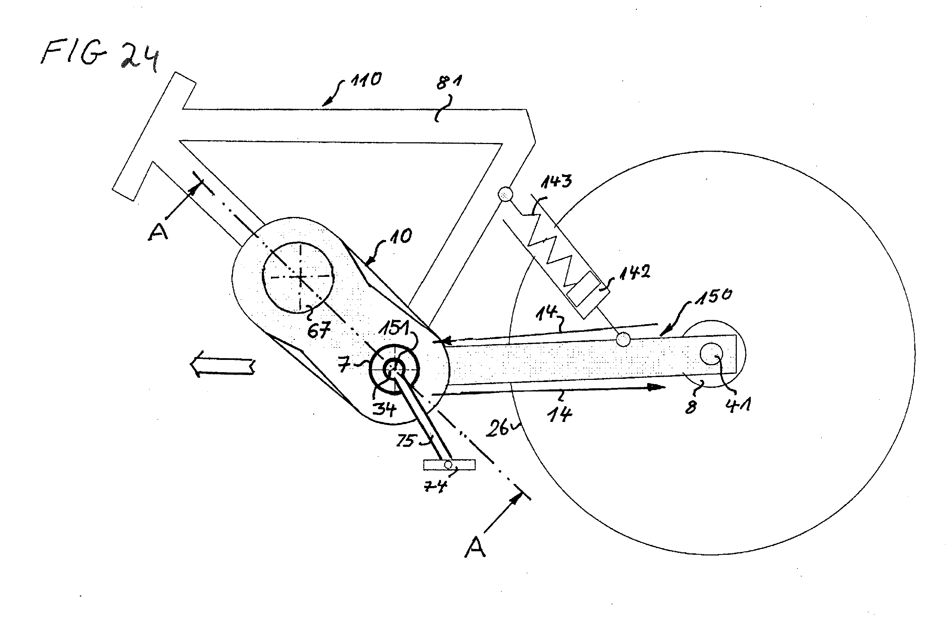

- Figur 24: zeigt eine Prinzipskizze eines Zweirads mit einer Schwinge für ein Laufrad und mit Elektromotor sowie Getriebe,

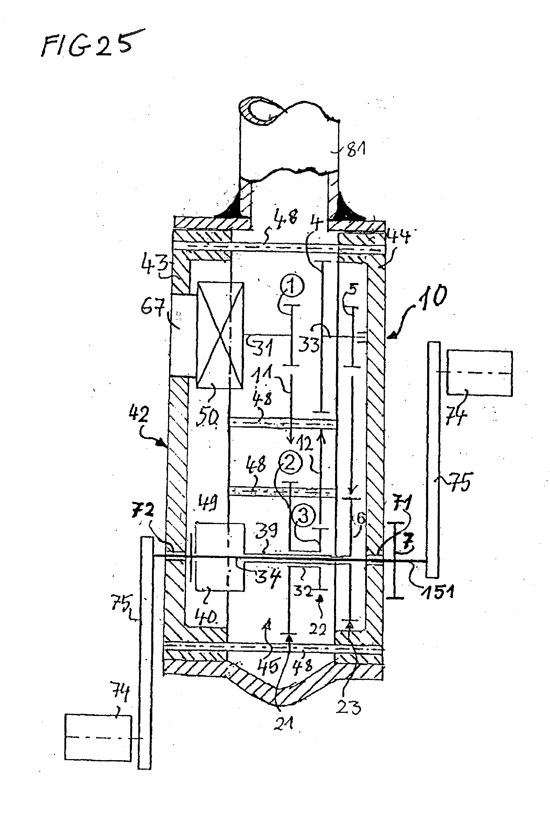

- Figur 25: zeigt einen schematischen Querschnitt durch das Zweirad in Figur 24,

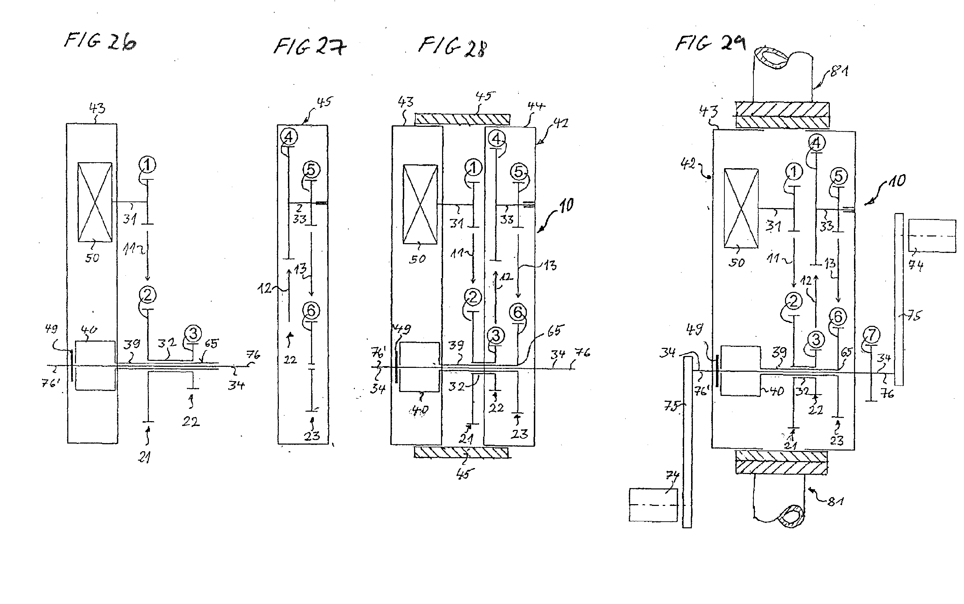

- Figur 26: zeigt eine Prinzipskizze eines ersten Gehäusedeckels eines weiteres Ausführungsbeispiel, an dem erste Zahnräder eines dreiteiligen Antriebsgehäuses gemäß eines ersten Ausführungsbeispiels angeordnet sind,
- Figur 27: zeigt eine Prinzipskizze von weiteren drei Zahnrädern eines Gehäusemittelteils des dreiteiligen Antriebsgehäuses gemäß Figur 26,
- Figur 28: zeigt eine Prinzipskizze des dreiteiligen Antriebsgehäuses nach Zusammenbau des ersten Gehäusedeckels mit dem Gehäusemittelteil und einem zweiten Gehäusedeckel,
- Figur 29: zeigt eine Prinzipskizze des dreiteiligen Antriebsgehäuses nach Einbau in einen Zweiradrahmen,

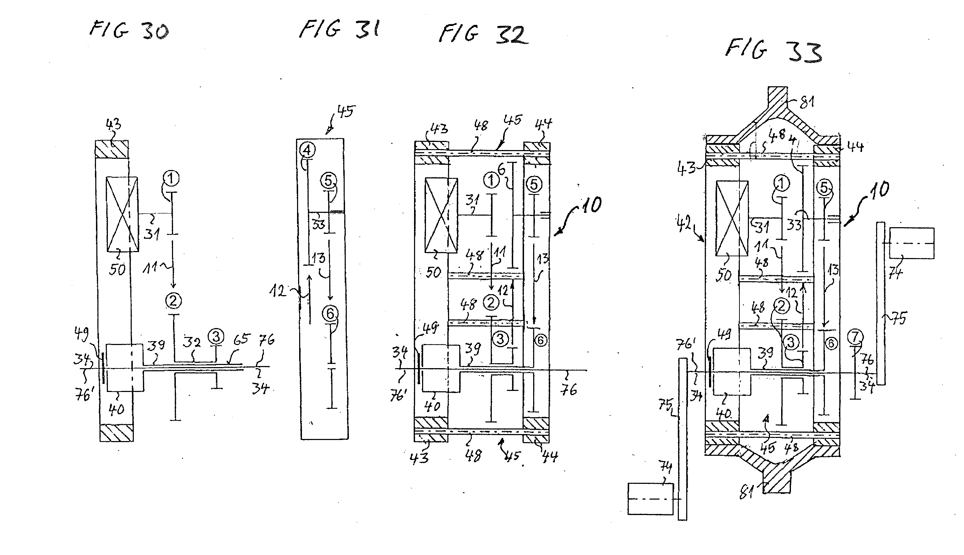

- Figur 30: zeigt eine Prinzipskizze eines ersten Gehäusedeckels, an dem erste Zahnräder eines dreiteiligen Antriebsgehäuses gemäß eines zweiten Ausführungsbeispiels angeordnet sind,
- Figur 31: zeigt eine Prinzipskizze von weiteren drei Zahnrädern eines Gehäusemittelteils des dreiteiligen Antriebsgehäuses gemäß Figur 30,
- Figur 32: zeigt eine Prinzipskizze eines dreiteiligen Antriebsgehäuses nach Zusammenbau des ersten Gehäusedeckels mit dem Gehäusemittelteil und einem zweiten Gehäusedeckel,
- Figur 33: zeigt eine Prinzipskizze des dreiteiligen Antriebsgehäuses nach Einbau in einen Zweiradrahmen,

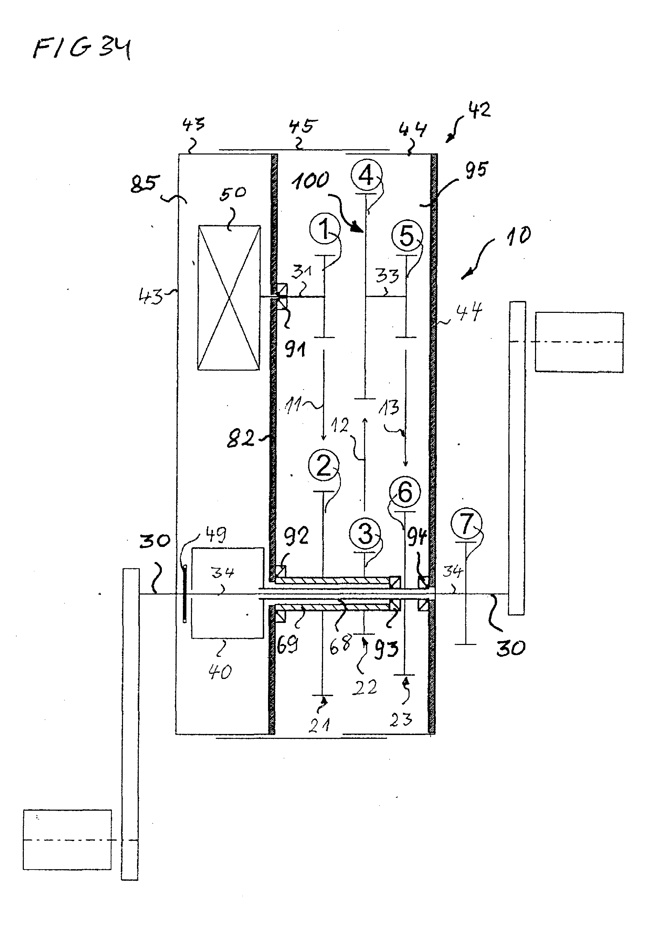

- Figur 34: zeigt eine Prinzipskizze eines weiteren Antriebs mit Elektromotor und dreikettrigem Getriebe mit Ölabdichtung,

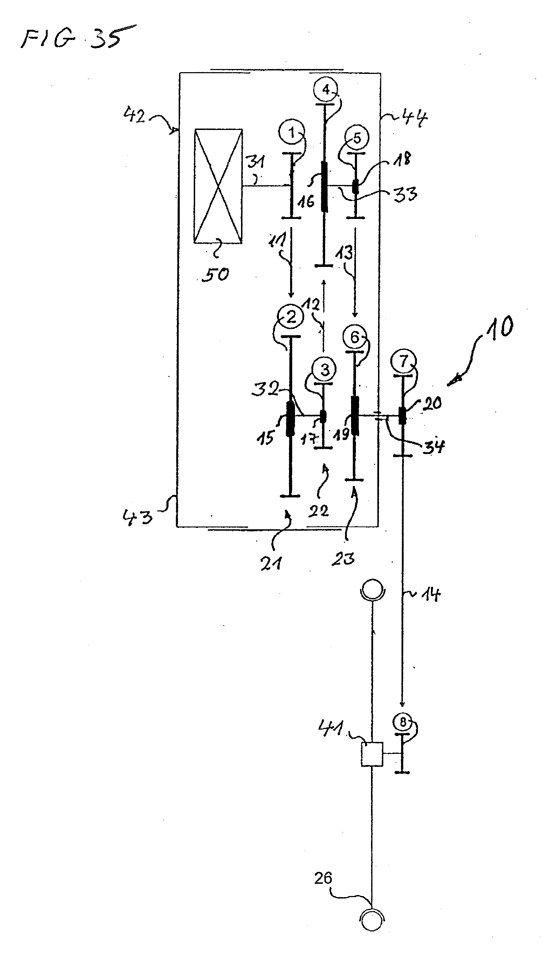

- Figur 35: zeigt eine Prinzipskizze eines weiteren Antriebs mit Elektromotor und Getriebe gemäß einem Ausführungsbeispiel der Anmeldung,

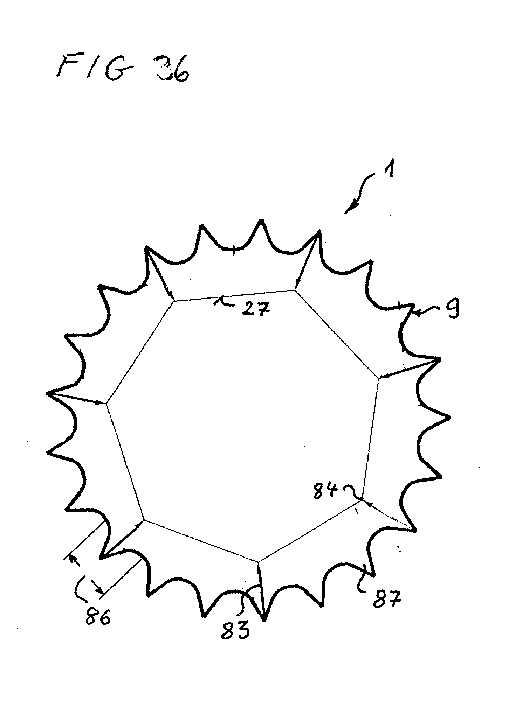

- Figur 36: zeigt eine Prinzipskizze einer Ritzelnabe für ein dreikettriges Getriebe gemäß Fig. 35,

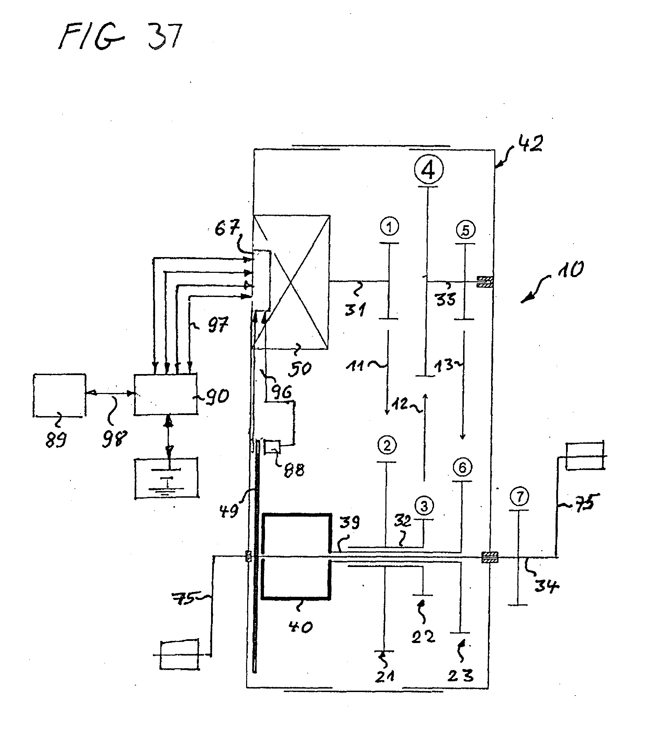

- Figur 37: zeigt eine Prinzipskizze eines Antriebs mit Elektromotor und Getriebe gemäß einem Ausführungsbeispiel der Anmeldung;

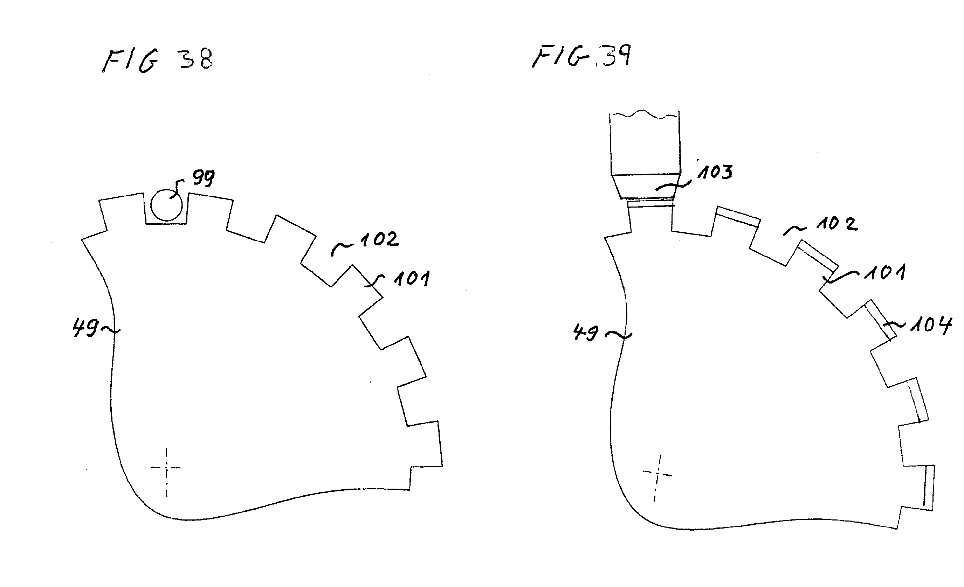

- Figur 38: zeigt eine Prinzipskizze eines Messrades zur optischen Drehzahlabtastung;
- Figur 39: zeigt eine Prinzipskizze eines Messrades zur elektromagnetischen Drehzahlabtastung.

In der nachfolgenden Beschreibung sind zahlreiche Ausführungsbeispiele sehr detailliert beschrieben. Dies erfolgte zur besseren Erklärung der beiliegenden Figuren. Ungeachtet dessen umfasst die Anmeldung auch Merkmalskombinationen, die nur einen Teil der Merkmale der Ausführungsbeispiele aufweisen. Wenn also mehrere Merkmale zusammen beschrieben werden, dann impliziert dies, daß auch nur einzelne dieser Merkmale für sich zusammen gesehen einen sinnvollen Teilzusammenhang ergeben.

Teile in Fig. 16 und 17, die mit Teilen der Ausführungsbeispiele in Fig. 12 bis 15 übereinstimmen, haben im Allgemeinen dieselben Bezugsziffern. Dies

Figur 1 zeigt eine Prinzipskizze eines Antriebs 10 mit Elektromotor 50 und Getriebe für ein Kleinfahrzeug. Figur 1 zeigt schematisch mehrere Ausführungsformen des Antriebs 10 mit unterschiedlichen Einbaupositionen für einen inneren und einen äußeren Freilauf. Ein Elektromotor 50 und ein Getriebe sind in einem Gehäuse 42 angeordnet, aus dem beidseitig eine Tretwelle 34 herausragt. Das Getriebe ist als dreikettriges Getriebe, d.h. als Getriebe mit drei Ketten 11, 12 und 13 ausgeführt.

Dazu weist eine erste Untersetzungsstufe 21 ein erstes Antriebszahnrad 1 auf, das auf einer Motorwelle 31 des Elektromotors 50 fixiert ist. Das erste Antriebszahnrad 1 ist mechanisch über die erste Kette 11 mit einem ersten Abtriebszahnrad 2 drehbar verbunden, das konzentrisch um eine erste Zwischenwelle 32 angeordnet ist. Die erste Zwischenwelle 32 ist als Hohlwelle ausgebildet, die konzentrisch zur Tretwelle 34 angeordnet ist.

Die zweite Untersetzungsstufe 22 weist ein zweites Antriebszahnrad 3 auf, das konzentrisch um die erste Zwischenwelle 32 angeordnet ist. Das zweite Antriebszahnrad 3 ist mechanisch über die zweite Kette 12 mit einem zweiten Abtriebszahnrad 4 drehbar verbunden, das auf einer zweiten Zwischenwelle 33 fixiert ist.

Die dritte Untersetzungsstufe 23 weist ein drittes Antriebszahnrad 5 auf, das auf der zweiten Zwischenwelle 33 zusammen mit dem zweiten Abtriebszahnrad 4 fixiert ist. Das dritte Antriebszahnrad 5 ist mechanisch über die dritte Kette 13 mit einem dritten Abtriebszahnrad 6 drehbar verbunden. Das dritte Abtriebszahnrad 6 ist konzentrisch um eine Abtriebswelle 35 angeordnet. Die Abtriebswelle 35 ist als Hohlwelle ausgebildet, die konzentrisch zur Tretwelle 34 gelagert ist.

Das Abtriebszahnrad 2 der ersten Untersetzungsstufe 21 und das Antriebszahnrad 1 der Motorwelle 31 sind in einer Ebene der ersten Untersetzungsstufe angeordnet, das Antriebszahnrad 3 und das Abtriebszahnrad 4 der zweiten Untersetzungsstufe 22 sind in einer Ebene der zweiten Untersetzungsstufe 22 angeordnet und das Antriebzahnrad 5 und das Abtriebszahnrad 6 der dritten Untersetzungsstufe 23 sind in einer Ebene der dritten Untersetzungsstufe angeordnet.

Die beidseitig aus dem Gehäuse 42 herausragende Tretwelle 34 ist in zwei Drehdurchführungen 71 und 72 von zwei sich gegenüberliegenden Gehäusedeckeln 43 und 44 des Gehäuses 42 gelagert.

In Fig. 1 sind mögliche Einbaupositionen für einen inneren Freilauf mit P23 und P67 gekennzeichnet. Der innere Freilauf überträgt im gesperrtem Zustand ein Antriebsmoment von der Tretwelle 34 auf eine Hohlwelle, die konzentrisch zur Tretwelle 34 angeordnet ist. Bei den Einbaupositionen P23 und P67 ist jeweils ein Innenring des inneren Freilaufs auf der Tretwelle 34 ausgebildet und ein Außenring der inneren Freilauf ist auf der Hohlwelle ausgebildet. Bei der Einbauposition P23 ist der Außenring des inneren Freilaufs an der ersten Zwischenwelle 32 ausgebildet, um welche die Zahnräder 2 und 3 konzentrisch angeordnet sind. Hingegen ist bei der Einbauposition P67 der Außenring des inneren Freilaufs an der Abtriebswelle 35 ausgebildet, auf der die Zahnräder 6 und 7 angeordnet sind.

Mögliche Einbaupositionen für einen äußeren Freilauf sind mit P1 - P6 gekennzeichnet. Der äußere Freilauf überträgt im gesperrten Zustand ein Antriebsmoment des Motors 43 auf eine Hohlwelle, die konzentrisch zur Tretwelle 34 angeordnet ist. Ein Einbau eines Freilaufs an den Positionen P1 beziehungsweise P2, P3, P4, P5, P6 bedeutet, dass das Zahnrad 1 beziehungsweise das Zahnrad 1, 2, 3, 4, 5, 6 auf dem äußeren Freilauf gelagert ist. Ein Innenring des äußeren Freilaufs ist auf der Hohlwelle ausgebildet.

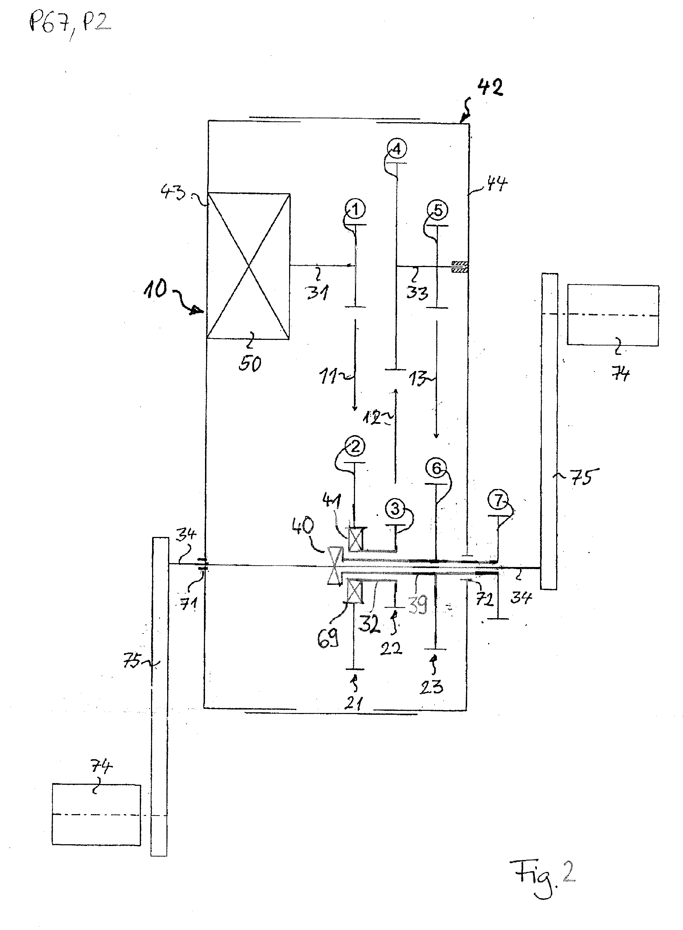

Figur 2 zeigt eine Ausführungsform eines Antriebs 10 gemäß Figur 1.

Gemäß Fig. 2 ist die zweite Zwischenwelle 35 als Freilaufwelle 39 ausgebildet. Die Freilaufwelle 39 ist durch die erste Zwischenwelle 32 hindurchgeführt. Durch die Freilaufwelle 39 und die erste Zwischenwelle 32 wird eine doppelte Hohlwelle beziehungsweise eine Doppelwelle gebildet, wobei die erste Zwischenwelle 32 eine äußere Hohlwelle der doppelten Hohlwelle bildet und die Freilaufwelle 39 eine innere Hohlwelle der doppelten Hohlwelle bildet. Die Freilaufwelle 39 trägt auf einer zu dem ersten Gehäusedeckel 43 gerichteten Seite einen inneren Freilauf 40, der mit der Tretwelle 34 klemmend in Eingriff bringbar ist. Dieser innere Freilauf 40 ist durch ein Symbol schematisch angedeutet. Der innere Freilauf 40 ist auf der Seite des Motors 43 und außerhalb der Ebenen der drei Untersetzungsstufen 21, 22, 23 angeordnet. Diese Anordnung des inneren Freilaufs 40 hat den Vorteil, dass der motorseitige Bauraum, der sich außerhalb der Ebenen der Untersetzungsstufen 21, 22, 23 befindet, für den inneren Freilauf 40 ausgenutzt wird. Vorteilhafterweise kann die von der Tretwelle 34 getragene Doppelwelle als eine vormontierbare Baugruppe des dreikettrigen Getriebes gefertigt und vor dem Einbau in den Antrieb als Baugruppe getestet werden.

Die erste Zwischenwelle 32 trägt einen äußeren Freilauf 41, der mit einer Hohlwelle 69, auf der das Antriebszahnrad 2 angeordnet ist, klemmend in Eingriff bringbar ist. Dieser äußere Freilauf 41 ist gleichfalls durch ein Symbol schematisch angedeutet.

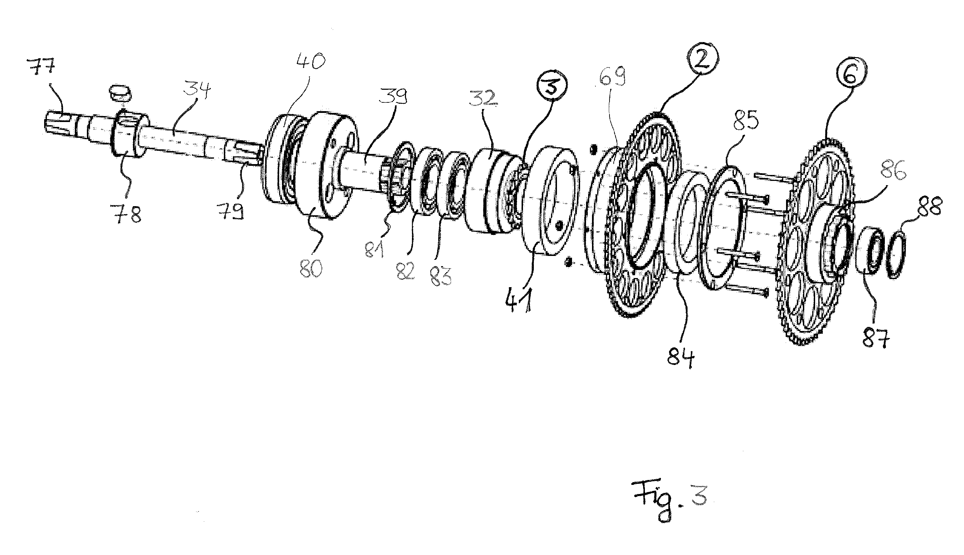

Die Freilaufwelle 39 ist mehrstufig aufgebaut und weist eine erste Stufe für den Sitz 65 mit einer Ansatzflanke auf, sodass eine Nabe 19 des Abtriebzahnrades 6 axial gesichert ist. Auf einer zweiten Stufe sind Lager der Zwischenwelle 32 angeordnet, die durch eine weitere Ansatzflanke zu einer dritten Stufe vor axialer Verschiebung gesichert sind. Dabei nimmt der Außendurchmesser der Freilaufwelle 39 von Stufe zu Stufe zu. Dies ist in Fig. 3 besonders gut erkennbar.

Auf dem aus dem Gehäuse herausragenden Enden der Tretwelle 34 sind Pedale 74 aufweisende Tretkurbeln 75 angeordnet, die aufgrund des inneren Freilaufs 40 sowohl in einem Vorwärtslauf als auch in einem Rückwärtslauf des Antriebs in einer Ruheposition gehalten werden können. Zwischen einer Tretkurbel 75 und dem Gehäuse 42 ist auf der Abtriebswelle 35 ein Abtriebszahnrad 7 angeordnet das über einen nicht gezeigten Kettentrieb ein nicht gezeigtes Laufrad eines Kleinfahrzeugs antreibt.

Die Antriebszahnräder 1, 3 und 5 weisen in dem gezeigten Getriebe die gleiche Anzahl 21 von Zähnen auf. Auch die Abtriebszahnräder 2 und 4 haben eine gleiche Anzahl 75 von Zähnen. Das dritte Abtriebszahnrad 6 auf dem Sitz 65 der Freilaufwelle 39 weist eine geringfügig verminderte Zähnezahl gegenüber den Abtriebszahnräder 2 und 4 von 57 auf. Aus den Verhältnissen der Anzahl der Zähne der Zahnkränze der drei Untersetzungsstufen 21, 22 und 23 ergibt sich eine Gesamtuntersetzung U von U = 75/21x75/21x57/21 ≈ 35:1.

Mit diesem Antrieb wird mit der ersten Untersetzungsstufe 21 das relativ geringe Motordrehmoment um den Faktor 75/21 auf eine höheres Drehmoment der ersten Zwischenwelle 32 der doppelten Hohlwelle erhöht, und die Drehzahl der ersten Zwischenwelle 32 um den gleichen Faktor vermindert. Da in diesem Getriebe das Untersetzungsverhältnis der ersten Untersetzungsstufe 21 gleich dem Untersetzungsverhältnis der zweiten Untersetzungsstufe 22 ist, wird mit der zweiten Untersetzungsstufe 22 das Drehmoment um den gleichen Faktor weiter erhöht und die Drehzahl der zweiten Zwischenwelle 33 um den gleichen Faktor weiter vermindert. Schließlich wird das Drehmoment mit der dritten Untersetzungsstufe 23 nochmals um einen Faktor 57/21 erhöht, sodass ein Ausgangsdrehmoment über die Freilaufwelle 39 der doppelten Hohlwelle an der Tretwelle 34 zur Verfügung steht. Das Ausgangsdrehmoment ist um den Faktor von ca. 35 höher, als das Motordrehmoment und reicht aus, um ein angepasstes Anfahrdrehmoment auf ein Laufrad eines Kleinfahrzeugs zu übertragen. Dabei ist die Ausgangsdrehzahl der Tretwelle 34 um die Gesamtuntersetzung des Getriebes von ca. 35 gegenüber der Motordrehzahl vermindert.

Fig. 3 zeigt eine Explosionszeichnung, die Bauteile zeigt, die auf der Tretwelle 34 beziehungsweise um die Tretwelle 34 herum angeordnet sind. Fig.2 zeigt, von der Antriebsseite zur Abtriebsseite her, einen ersten Kurbelansatz 77, ein motorseitiges Tretwellenlager 78, einen zweiten Kurbelansatz 79, den inneren Freilauf 40, einen Außenring 80 des inneren Freilaufs 40 mit daran befestigter Freilaufwelle 39, einen Haltering 81, ein antriebsseitiges Lager 82 des Antriebszahnrads 3, ein abtriebsseitiges Lager 83 des Abtriebszahnrads 3, eine erste Zwischenwelle 32 mit daran angebrachtem dritten Abtriebszahnrad 3, den äußeren Freilauf 41, eine Hohlwelle 69 mit daran angebrachten Abtriebszahnrad 2, ein Lager 84 des Abtriebszahnrads 2, einen Haltering 85, eine Hohlwelle 86 des Abtriebszahnrads 6, sowie ein Lager 87 des Abtriebszahnrads 6 und einen Haltering 88.

Die Hohlwelle 86 des Abtriebszahnrads ist auf die Freilaufwelle 39 aufgesteckt. Somit stellt die Hohlwelle 86 einen Bestandteil der in Fig. 2 gezeigten Hohlwelle 39 dar. Dieser Bestandteil ist in Fig. 2 aus Gründen der Übersichtlichkeit nicht als separates Bauteil dargestellt.

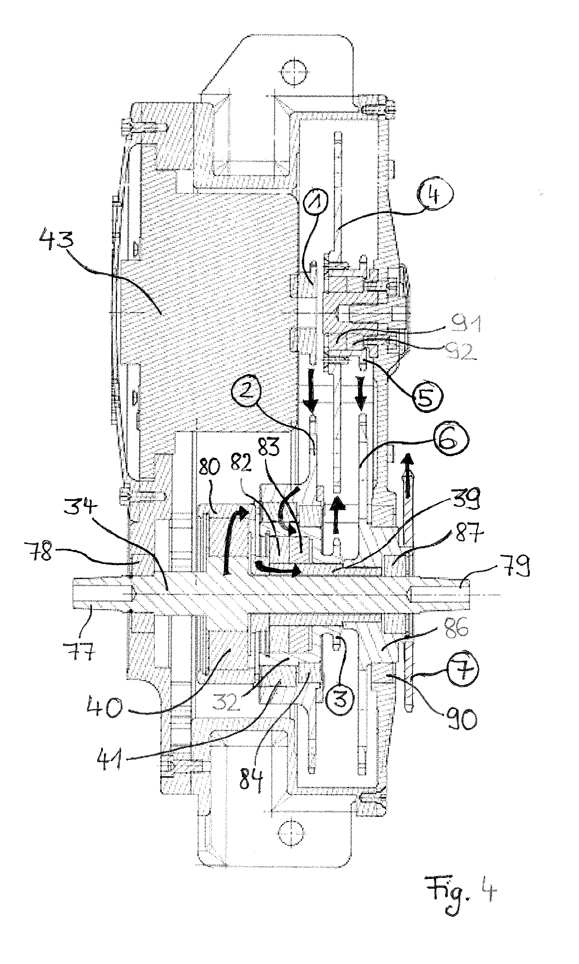

Figur 4 zeigt eine Schnittzeichnung der Motorgetriebe Einheit von Fig. 2. Zusätzlich zu den in Figur 3 gezeigten Bauteilen sind weiterhing gezeigt: Ein Kugellager 90 zur Lagerung des Abtriebszahnrads 6 der dritten Übersetzungsstufe in dem Gehäuse sowie zwei entgegengesetzt orientierte Schräglager 91, 92 zur Lagerung des Abtriebszahnrads 4 der zweiten Untersetzungsstufe und des Antriebszahnrads 5 der dritten Untersetzungsstufe.

Die Figuren 5 bis 11 zeigen weitere Ausführungsformen eines Antriebs 10 gemäß Fig. 1. Auch bei den Ausführungsformen gemäß der Figuren 5 bis 11 ist es möglich, den inneren Freilauf 40 motorseitig einzubauen. Bei den Ausführungsformen der Figuren 7 bis 11 wird hierzu, ähnlich wie in Figur 2 gezeigt, die Abtriebswelle 35 durch die erste Zwischenwelle 32 hindurchgeführt, so dass die Abtriebswelle eine innere Hohlwelle 39 einer doppelten Hohlwelle bildet.

Bei einem Pedalbetrieb werden alle Getriebeteile mitbewegt, die sich im Kraftfluss zwischen dem äußeren Freilauf 41 und dem inneren Freilauf 41 befinden und alle Getriebeteile, die sich im Kraftfluss hinter dem inneren Freilauf 40 befinden. Daher kann es vorteilhaft sein, den inneren Freilauf an der Position P67 einzubauen und den äußeren Freilauf an der Position P6. Aus Platzgründen kann bei dem Kettengetriebe gemäß Fig. 1 ein Einbau des äußeren Freilaufs 41 weiter vorn im Kraftfluss vorteilhaft sein. Dabei sind die Positionen P2 und P4 unter den größeren Abtriebszahnrädern 4 und 2 aus Platzgründen vorteilhaft. Figur 2 zeigt einen Einbau des inneren Freilaufs 40 an Position P67 und einen Einbau des äußeren Freilaufs unter dem Abtriebszahnrad 2. Der in Figur 2 gezeigt Einbau ist bei einem mehrkettrigen Getriebe aus Platzgründen vorteilhaft, da ein Teil des äußeren Freilaufs 41 in dem Bauraum untergebracht werden kann, der sich motorseitig der Ebenen der Untersetzungsstufen befindet.

Durch einen Einbau des inneren Freilaufs an der Position P23 gemäß Fig. 5 oder Fig. 6 ist eine doppelte Hohlwelle zum motorseitigen Anbringen des inneren Freilaufs 40 nicht nötig. Für den äußeren Freilauf sind dann die Einbaupositionen P1 und P2 möglich, wobei die Einbauposition P2 für den äußeren Freilauf 41 aus Platzgründen vorteilhafter ist. Hierbei muss jedoch berücksichtigt werden, dass der manuelle Antrieb erst wirksam wird, wenn die Tretwelle schneller rotiert als die schnelleren Zahnräder 2 und 3, während bei der Einbauposition P23 der manuelle Antrieb bereits wirksam wird, wenn die Tretwelle schneller rotiert als die langsameren Zahnräder 6 und 7.

Die Verwendung eines inneren Freialufs ermöglicht es, die Pedalen der Tretkurbeln in einer Ruhposition beim Vorwärts- bzw. Rückwärtslauf des Elektromotors zu belassen, ohne dass die Pedalen gegen die Beine eines Fahrers des Kleinfahrzeugs schlagen.

Darüber hinaus wird durch die doppelte Hohlwellenstruktur ein kompakter raumsparender Antrieb geschaffen. Dabei wird die Tretwelle als Tretlagerwelle eingesetzt, wobei der innere Freilauf sicherstellt, dass die Pedalen von Tretkurbeln in Ruheposition gehalten werden können, obgleich der Elektromotor das Abtriebszahnrad 6 antreibt. Durch die Anordnung des Freilaufs gegenüberliegend zu dem in den Antrieb eingebauten Elektromotor wird der dort vorhandene Raum genutzt und eine kompakte Antriebseinheit geschaffen.

Dieser Antrieb ist nicht nur für Fahrradantriebe geeignet sondern für alle Kleinfahrzeuge mit Tretkurbelantrieb wie Tretboote, Tretroller u.a., die mit einem zusätzlichen Antrieb mit Elektromotor versehen sind.

Gemäß der beschriebenen Ausführungsbeispiele ragt die innere Abtriebswelle 35 aus dem Gehäuse einseitig heraus und das Ausgangszahnrades 7 ist auf diesem herausragenden Ende der Freilaufwelle zu fixiert. Abweichend davon kann das Ausgangszahnrad 7 auch auf dem herausstehenden Ende der Tretwelle 34 angeordnet sein.

Außerdem kann die beidseitig aus dem Gehäuse herausragende Welle zusätzlich ein Differentialgetriebe aufweisen. Dieses ermöglicht einen verbesserten Antrieb und eine verbesserte Kurvenfahrt für Kleinfahrzeuge mit zwei angeriebenen Laufrädern auf zwei Halbwellen.

Durch die Verwendung eines doppelten Freilaufs gemäß der Anmeldung kann eine besonders einfache Kombination von elektrischem Antrieb und Muskelkraft erreicht werden. Im Betrieb kann ein Fahrer den Grad der Motorunterstützung mit Hilfe eines doppelten Freilaufs gemäß der Anmeldung zum Beispiel dadurch festlegen, dass er nach Gefühl bestimmt, wie lange die Tretfrequenz höher ist als die Motordrehzahl und wie lange die Motordrehzahl höher ist als die Tretfrequenz.

Auch die Motordrehzahl passt sich gemäß der Anmeldung an die Tretfrequenz an: Wenn zum Beispiel die Trittfrequenz höher ist als die Motordrehzahl wird sich die Motordrehzahl bei einer gegebenen Motorleistung von selbst erhöhen, da der Motor durch den äußeren Freilauf nun quasi ohne Last läuft. Unter anderem durch die Trägheit des Antriebsstrangs verläuft das Hin- und Herschalten zwischen Motor- und Muskelkraft weitgehend ruckelfrei.

Zusätzlich kann der elektrische Antrieb mit einer manuellen Regelung ausgestattet werden. Besonders einfach zu realisieren ist ein Drehgriff, durch den die zugeführte elektrische Leistung geregelt wird. Anders als beispielsweise bei einer Drehzahl- oder Kraftregelung ist hierzu kein Sensor erforderlich, der an bewegten Teilen angebracht wird, sondern lediglich ein Sensor im Stromkreis der Batterie.

Ein Elektrofahrrad mit einem doppelten Freilauf gemäß der Anmeldung benötigt keinen separaten Bewegungs- oder Kraftsensor, kann jedoch zur genaueren Ansteuerung des Motors zusätzlich mit einem Regelkreis ausgestattet werden, in dem ein solcher Sensor vorgesehen ist.

Der Gegenstand der Anmeldung umfasst auch die nachfolgenden, als Liste aufgeführten Merkmalskombinationen. Diese können ggf. mit einzelnen anderen Merkmalen insbesondere aus den Figuren und der Einleitung der Anmeldung kombiniert werden.
Ziffer 1. Getriebeeinheit für ein sowohl mit Menschenkraft (manuell bzw. peduell Pedalen) als auch mit einem Elektromotor angetriebenes Fahrzeug, wobei das Getriebe die folgenden Merkmale aufweist:
   - eine durch Menschenkraft betätigbare Kurbelwelle (zum Anschluß an eine erste Antriebsvorrichtung z.B. Kurbeln und Pedale),
   - eine Eingangswelle zum Anschluß an eine Rotorwelle eines Elektromotors
   - eine Ausgangswelle zum Anschluß an ein Abtriebselement (z.B. Kettenrad, Riemenscheibe, Ausgangswelle, etc.) eines Fahrzeugs,
   wobei im Kraftfluß (auch speziell direkt dazwischen) zwischen der Kurbelwelle und der Ausgangswelle eine erste Freilaufeinrichtung vorgesehen ist, die die folgenden Merkmale aufweist:
   - ein erstes Einleitungselement, das (direkt oder indirekt, fest oder lösbar) mit der Eingangswelle in Verbindung steht,
   - ein erstes Ausleitungselement, das (direkt oder indirekt, fest oder lösbar) mit der Ausgangswelle in Verbindung steht,
   und wobei im Kraftfluß (auch speziell direkt dazwischen) zwischen der Eingangswelle und der Ausgangswelle eine zweite Freilaufeinrichtung vorgesehen ist, die die folgenden Merkmale aufweist:
   - ein zweites Einleitungselement, das (direkt oder indirekt, fest oder lösbar) mit der Kurbelwelle in Verbindung steht,
   - ein zweites Ausleitungselement, das (direkt oder indirekt, fest oder lösbar) mit der Ausgangswelle in Verbindung steht,
   wobei das erste Ausleitungselement und das zweite Ausleitungselement permanent (permanent heißt: ohne Kupplung im Kraftfluss, also entweder über Übertragungselemente des Untersetzungsgetriebes oder direkt) miteinander verbunden sind,
   und wobei ferner zwischen der Eingangswelle und der Ausgangswelle ein dreistufiges Untersetzungsgetriebe (d.h. jede Stufe untersetzt) vorgesehen ist, das drei Untersetzungsstufen mit jeweils zwei Zahnrädern aufweist, wobei die Untersetzungsstufen jeweils ein Abtriebszahnrad und ein Antriebszahnrad aufweisen, von denen ein Abtriebszahnrad einer ersten Untersetzungsstufe konzentrisch zu einer Achse der Eingangswelle angeordnet ist und von denen ein Abtriebszahnrad der ersten Untersetzungsstufe, ein Antriebszahnrad der zweiten Untersetzungsstufe und ein Abtriebszahnrad der dritten Untersetzungsstufe konzentrisch zu der Kurbelwelle angeordnet sind.

Die obenstehend unter Ziffer 1 aufgelisteten Merkmale können mit einzelnen Merkmalen oder auch mit Merkmalskombinationen der folgenden Ziffern ergänzt werden.
Ziffer 2. Getriebeeinheit nach Ziffer 1,
   wobei die erste Untersetzungsstufe zwischen dem ersten Ausleitungselement des ersten Freilaufs und dem zweiten Einleitungselement des zweiten Freilaufs angeordnet ist und die zweite Untersetzungsstufe und die dritte Untersetzungsstufe im Kraftfluss zwischen dem zweiten Ausleitungselement der zweiten Freilaufeinrichtung und der Abtriebswelle angeordnet sind.
Ziffer 3. Getriebeeinheit nach Ziffer 1,
   wobei die erste Untersetzungsstufe zwischen der Eingangswelle und dem ersten Einleitungselement des ersten Freilaufs angeordnet ist und die zweite Untersetzungsstufe und die dritte Untersetzungsstufe im Kraftfluss zwischen dem zweiten Ausleitungselement der zweiten Freilaufeinrichtung und der Abtriebswelle angeordnet sind.
Ziffer 4. Getriebeeinheit nach Ziffer 1,
   wobei die erste Untersetzungsstufe, die zweite Untersetzungsstufe und die dritte Untersetzungsstufe zwischen dem ersten Ausleitungselement der ersten Freilaufeinrichtung und dem zweiten Ausleitungselement der zweiten Freilaufeinrichtung angeordnet sind.
Ziffer 5. Getriebeeinheit nach Ziffer 1,
   wobei die erste Untersetzungsstufe zwischen der Eingangswelle und dem ersten Einleitungselement des ersten Freilaufs angeordnet ist und die zweite Untersetzungsstufe und die dritte Untersetzungsstufe im Kraftfluss zwischen dem ersten Ausleitungselement der ersten Freilaufeinrichtung und dem zweiten Einleitungselement der zweiten Freilaufeinrichtung angeordnet sind.
Ziffer 6. Getriebeeinheit nach Ziffer 1,
   wobei die erste Untersetzungsstufe und die zweite Untersetzungsstufe zwischen der Eingangswelle und dem ersten Einleitungselement des ersten Freilaufs angeordnet sind und die dritte Untersetzungsstufe im Kraftfluss zwischen dem ersten Ausleitungselement der ersten Freilaufeinrichtung und dem zweiten Einleitungselement der zweiten Freilaufeinrichtung angeordnet ist und das ersten Einleitungselement des ersten Freilaufs mit einem Abtriebszahnrad der zweiten Untersetzungsstufe verbunden ist.
Ziffer 7. Getriebeeinheit nach Ziffer 1,
   wobei die erste Untersetzungsstufe und die zweite Untersetzungsstufe zwischen der Eingangswelle und dem ersten Einleitungselement des ersten Freilaufs angeordnet sind und die dritte Untersetzungsstufe im Kraftfluss zwischen dem ersten Ausleitungselement der ersten Freilaufeinrichtung und dem zweiten Einleitungselement der zweiten Freilaufeinrichtung angeordnet ist und das ersten Einleitungselement des ersten Freilaufs mit einem Antriebszahnrad der dritten Untersetzungsstufe verbunden ist.
Ziffer 8. Getriebeeinheit nach Ziffer 1,
   wobei das erste Einleitungselement als Außenring der ersten Freilaufeinrichtung ausgebildet ist und das erste Ausleitungselement als Innenring der ersten Freilaufeinrichtung ausgebildet ist, und wobei das zweite Einleitungselement als Außenring der zweiten Freilaufeinrichtung ausgebildet ist und das zweite Ausleitungselement als Innenring der zweiten Freilaufeinrichtung ausgebildet ist.
Ziffer 9. Getriebeeinheit nach Ziffer 1, wobei
   das erste Einleitungselement als Außenring der ersten Freilaufeinrichtung ausgebildet ist und das erste Ausleitungselement als Innenring der ersten Freilaufeinrichtung ausgebildet ist, und wobei das zweite Einleitungselement als Innenring der zweiten Freilaufeinrichtung ausgebildet ist und das zweite Ausleitungselement als Außenring der zweiten Freilaufeinrichtung ausgebildet ist.
Ziffer 10. Getriebeeinheit nach einer der vorhergehenden Ziffern, wobei wenigstens eine Untersetzungsstufe eine Rollenkette aufweist.
Ziffer 10. Getriebeeinheit nach einem der vorhergehenden Ziffern, wobei wenigstens eine Untersetzungsstufe einen Zahnriemen aufweist.
Ziffer 11. Getriebeeinheit nach einem der vorhergehenden Ziffern, wobei wenigstens eine Zentrifugalfreilaufeinrichtung vorgesehen ist.)geringe Reibungskräfte, Freilaufeinrichtung, die unter Zuhilfenahme von Zentrifugalkräften aktiviert wird oder sperrt.
Ziffer 12. Fahrzeug mit Getriebe Einheit nach einem der vorhergehenden Ansprüche, wobei die Ausgangswelle mit einem Laufrad des Fahrzeugs verbunden ist und wobei die Eingangswelle mit einem Elektromotor verbunden ist.

Die Vorteile aus der Beschreibungseinleitung finden entsprechend auf die Merkmalskombinationen aus den vorstehenden Ziffern Anwendung.

**Bezugszeichenliste für Fig. 1 bis 11**

| | | | |
|---|---|---|---|
| 1 | erstes Antriebszahnrad der ersten Untersetzungsstufe | 6 | drittes Abtriebszahnrad der dritten Untersetzungsstufe |
| 2 | erstes Abtriebszahnrad der ersten Untersetzungsstufe | 7 | Abtriebsritzel |
| | | 10 | Antrieb |
| 3 | zweites Antriebszahnrad der zweiten Untersetzungsstufe | 11 | erste Kette der ersten Untersetzungsstufe |
| 4 | zweites Abtriebszahnrad der zweiten Untersetzungsstufe | 12 | zweite Kette der ersten Untersetzungsstufe |
| 5 | drittes Antriebszahnrad der dritten Untersetzungsstufe | 13 | dritte Kette der ersten Untersetzungsstufe |
| 19 | Zahnradnabe von Zahnrad 6 | 74 | Pedale |
| 21 | erste Untersetzungsstufe | 75 | Tretkurbel |
| 22 | zweite Untersetzungsstufe | 77 | erster Kurbelansatz |
| 23 | dritte Untersetzungsstufe | 78 | motorseitiges Tretwellenlager |
| 31 | Motorwelle | 79 | zweiter Kurbelansatz |
| 32 | erste Zwischenwelle | 80 | Außenring des inneren Freilaufs |
| 33 | zweite Zwischenwelle | 81 | Haltering |
| 34 | Tretwelle | 82 | antriebsseitiges Lager des Abtriebszahnrads 3 |
| 45 | abtriebsseitige Hohlwelle | | |
| 39 | Freilaufwelle | 83 | abtriebsseitiges Lager des Abtriebszahnrads 3 |
| 40 | innerer Freilauf | | |
| 41 | äußerer Freilauf | 84 | Lager des Abtriebszahnrads 2 |
| 42 | Gehäuse | 85 | Haltering |
| 43 | erster Gehäusedeckel | 86 | Hohlwelle des Abtriebszahnrads 6 |
| 44 | zweiter Gehäusedeckel | | |
| 50 | Elektromotor | 87 | Lager des Abtriebszahnrads 6 |
| 65 | Sitz des Abtriebszahnrads | 88 | Haltering |
| 69 | Hohlwelle des Abtriebszahnrads 2 | 90 | Kugellager |
| | | 91 | Schräglager |
| 71 | erste Drehdurchführung | 92 | Schräglager |
| 72 | (zweite) Drehdurchführung | | |

Figur 12 zeigt eine Prinzipskizze eines weiteren Ausführungsbeispiels eines Antriebs 10 mit Elektromotor 50 und Getriebe, hier angewendet auf ein Kleinfahrzeug. Dies stellt einen verbesserten Antrieb mit Elektromotor und ein Verfahren zum Betreiben des Antriebs bereit.

Der Elektromotor 50 und das Getriebe sind in einem Gehäuse 42 angeordnet, aus dem einseitig eine Ausgangswelle 34 herausragt. Das Getriebe ist als dreikettriges Getriebe, d.h. als Getriebe mit drei Ketten 11, 12 und 13 ausgeführt.

Eine erste Untersetzungsstufe 21 weist ein erstes Antriebszahnrad 1 auf, das auf einer Motorwelle 31 des Elektromotors 50 fixiert ist. Das erste Antriebszahnrad 1 ist mechanisch über eine erste Kette 11 mit einem ersten Abtriebszahnrad 2 drehbar verbunden, das auf einer ersten Zwischenwelle 32 angeordnet ist. In dem in Figur 12 gezeigten Getriebe weist das erste Antriebszahnrad 1 eine Zähnezahl Z₁ mit Z₁ = 21 und das erste Abtriebszahnrad eine Zähnezahl Z₂ mit Z₂ = 75 auf.

Eine zweite Untersetzungsstufe 22 weist ein zweites Antriebszahnrad 3 auf, das auf der ersten Zwischenwelle 32 zusammen mit dem ersten Abtriebszahnrad 2 fixiert ist. Das zweite Antriebszahnrad 3 ist mechanisch über eine zweite Kette 12 mit einem zweiten Abtriebszahnrad 4 drehbar verbunden. Das auf einer zweiten Zwischenwelle 33 fixiert ist. In dem in Figur 12 gezeigten Getriebe weist das zweite Antriebszahnrad 3 eine Zähnezahl Z₃ mit Z₃ = 21 und das zweite Abtriebszahnrad 4 eine Zähnezahl Z₄ mit Z₄ = 75 auf.

Eine dritte Untersetzungsstufe 23 weist ein drittes Antriebszahnrad 5 auf, das auf der zweiten Zwischenwelle 33 zusammen mit dem zweiten Abtriebszahnrad 4 fixiert ist. Das dritte Antriebszahnrad 5 ist mechanisch über eine dritte Kette 13 mit einem dritten Abtriebszahnrad 6 drehbar verbunden, wobei das dritte Abtriebszahnrad 6 auf der Ausgangswelle 34 des Antriebs 10 fixiert ist. In dem in Figur 1 gezeigten Getriebe weist das dritte Antriebszahnrad 5 eine Zähnezahl Z₅ mit Z₅ = 21 und das dritte Abtriebszahnrad 6 eine Zähnezahl Z₆ mit Z₆ = 57 auf.

In dem gezeigten Antrieb 10 sind die Motorwelle 31 und die zweite Zwischenwelle 33 zueinander fluchtend vorgesehen. Zusätzlich sind ebenfalls die Ausgangswelle 34 und die erste Zwischenwelle 32 zueinander fluchtend angeordnet.

Die Antriebszahnräder 1, 3 und 5 weisen in dem gezeigten Getriebe die gleiche Anzahl von Zähnen auf. Auch die Abtriebszahnräder 2 und 4 haben eine gleiche Zähnezahl. Das dritte Abtriebszahnrad 6 weist eine geringfügig verminderte Zähnezahl gegenüber den Abtriebszahnräder 2 und 4 auf. Aus den Verhältnissen der Anzahl der Zähne der Zahnkränze der drei Untersetzungsstufen 21, 22 und 23 ergibt sich eine Gesamtuntersetzung U von U = Z₂/Z₁xZ₄/Z₃xZ₆/Z₅.= 75/21x75/21x57/21 ≈ 35:1.

Mit diesem Antrieb wird mit der ersten Untersetzungsstufe 21 das relativ geringe Motordrehmoment um den Faktor Z₂/Z₁ auf eine höheres Drehmoment der ersten Zwischenwelle 32 erhöht, und die Drehzahl der ersten Zwischenwelle 32 um den gleichen Faktor vermindert. Da in diesem Getriebe Z₂/Z₁ = Z₄xZ₃ ist, wird mit der zweiten Untersetzungsstufe 22 das Drehmoment um den gleichen Faktor weiter erhöht und die Drehzahl der zweiten Zwischenwelle 33 um den gleichen Faktor weiter vermindert. Schließlich wird das Drehmoment mit der dritten Untersetzungsstufe 23 nochmals um einen Faktor Z₆/Z₅ erhöht, sodass ein Ausgangsdrehmoment zur Verfügung steht, das um den Faktor von ca. 35 höher ist, als das Motordrehmoment und ausreicht um ein angepasstes Anfahrdrehmoment auf ein Laufrad 26 eines Kleinfahrzeugs mit Hilfe eines Kettentriebs 14 zu übertragen. Dabei ist die Ausgangsdrehzahl der Ausgangswelle 34 um die Gesamtuntersetzung des Getriebes von ca. 35 gegenüber der Motordrehzahl vermindert.

Auf der Ausgangswelle 34, die einseitig aus dem Gehäuse 42 herausragt, ist zum Antrieb des Laufrades 26 außerhalb des Gehäuses 42 ein Ausgangszahnrad 7 angeordnet. Das Ausgangszahnrad 7 ist über den Kettentrieb 14 und über ein Antriebszahnrad 8 mit einer Nabenschaltung 41 des Laufrades 26 eines Kleinfahrzeugs gekoppelt.

Wenn mehrere der Zahnkränze der Zahnräder 1 bis 6 mit einer gleichen Anzahl von Zähnen vorgesehen sind werden Fertigungskosten, Lagerkosten und Montagekosten vermindert. Wenn weiterhin identische Nabendimensionen der Zahnräder vorgesehen werden, können diese Kosten weiter optimiert werden.

Wenn außerdem das Untersetzungsverhältnis der ersten und der zweiten Untersetzungsstufe gleich sind und mit gleich großen Zahnrädern verwirklich werden, und wenn die Motorwelle und die erste Zwischenwelle und ebenfalls die Ausgangswelle und die zweite Zwischenwelle fluchtend angeordnet werden, dann können bei gleicher Zahnteilung und Kettengliederteilung beispielsweise von 6 mm gleich lange Ketten eingesetzt und die Gehäusestruktur kann kostengünstig vereinfacht werden.

Sollen Elektromotoren mit höherer Drehzahl eingesetzt werden, so wird das Übersetzungsverhältnis U durch Anpassung der Zähnezahlen erhöht.

Als bevorzugtes Untersetzungsverhältnis ist eine Bereich von 8:1 bis 60:1 vorgesehen.

Die Zähneanzahl pro Zahnkranz der Antriebzahnräder 1, 3 und 5 ist nicht kleiner als 19, vorzugsweise zwischen 19 bis 25, was eine geringe Lärmentwicklung begünstigt. Die Zähneanzahl pro Zahnkranz der Abtriebzahnräder 2, 4 und 6 der Untersetzungsstufen 21, 22 und 23 kann zwischen 45 und 85 liegen, ohne dass der Umschlingungswinkel der Ketten auf den zugehörigen Abtriebszahnädern zu gering wird.

Dieses ermöglicht eine verbesserte Variationsbreite der Untersetzungen ohne gravierende Änderungen des Raumbedarfs für den Antrieb.

Anstelle der Nabenschaltung 41 kann das Laufrad eine Kettenschaltung aufweisen. Damit ist eine höhere Variation der Anfahr- und Beschleunigungsmomente möglich, zumal nicht nur im Nabenbereich zusätzliche Gänge möglich sind, sondern auch mehrere Kettenräder auf der Ausgangswelle fixiert sein können, und der Kettentrieb 14 zwischen diesen schaltbar gestaltet werden kann.

Anstelle des Kettentriebs 14 mit den Zahnrädern 7 und 8 kann die Ausgangswelle 34 direkt mit einer Nabe eines Laufrades eines Kleinfahrzeugs gekoppelt sein, was besonders für Rollstühle, motorgetriebene Drei- und Vierräder geeignet ist.

Anstelle des Kettentriebs 14 mit den Zahnrädern 7 und 8 kann die Ausgangswelle 34 mit der Nabe 41 über einen Riementrieb gekoppelt sein, wobei die Ausgangswelle 34 eine erste Riemenscheibe aufweist und die Nabe 41 des Laufrades 26 über eine zweite Riemenscheibe mittels eines Treibriemens oder eines Keilriemens oder eines Zahnriemens angetrieben wird.

Diese Alternative hat den Vorteil, dass Keilriementriebe gegenüber Kettentrieben eine verminderte Geräuschentwicklung ermöglichen, was für Kleinfahrzeuge in medizinischen Bereichen von Vorteil ist.

Außerdem ist es möglich die Ausgangswelle 34 mit einem Reibrad zu versehen, wobei das Reibrad mit einem Laufradreifen oder mit einer Laufradfelge koppelbar ist.

Damit kann der Fertigungs- und Montageaufwand verringert werden, zumal der Antrieb praktisch ohne kostspielige Änderungen eines Kleinfahrzeugs angebaut werden kann.

Anstelle des Kettentriebs 14 mit den Zahnrädern 7 und 8 kann die Ausgangswelle 34 ein Zahnradritzel tragen und die Felge des Laufrades einen Innenzahnkranz aufweisen, wobei die Zähne des Ritzels mit dem Innenzahnkranz der Felge in Eingriff bringbar sind.

Nach Einbau einer Felge mit Innenzahnkranz, kann diese Konstruktion auch zur Rekuperation von Bremsenergie genutzt werden. Da Bremsbeschleunigungen bei Bergabfahrten und bei Bremsvorgängen des Laufrades im Elektromotor Ladestrom generieren können.

Anstelle einer einseitig aus dem Gehäuse herausstehenden Ausgangswelle kann diese auch beidseitig aus dem Gehäuse herausragen. Eine beidseitig aus dem Gehäuse herausragende Welle kann mit Pedalen aufweisenden Tretkurbeln verbunden sein, wobei ein Freilauf für die Tretkurbeln vorgesehen ist.

Diese Variante ist besonders geeignet für Fahrradantriebe und Kleinfahrzeuge mit Tretkurbelantrieb wie Tretboote, Tretroller u.a., die mit einen zusätzlichen Antrieb mit Elektromotor versehen sind.

Der Elektromotor kann mit einer Drehrichtungsumkehr ausgestattet sein, wobei im Falle einer beidseitig aus dem Gehäuse heraustretenden Welle ein umschaltbarer Freilauf vorgesehen werden kann. Damit kann die Manövrierfähigkeit für Rollstühle und andere drei- oder vierrädrige Kleinfahrzeuge verbessert werden.

Eine beidseitig aus dem Gehäuse herausragende Welle kann zusätzlich ein Differentialgetriebe aufweisen. Dieses ermöglicht einen verbesserten Antrieb und eine verbesserte Kurvenfahrt für Kleinfahrzeuge mit zwei angeriebenen Laufrädern auf zwei Halbwellen.

**Bezugszeichenliste für Figur 12**

| | | | |
|---|---|---|---|
| 1 | erstes Antriebszahnrad der ersten Untersetzungsstufe | 2 | erstes Abtriebszahnrad der ersten Untersetzungsstufe |
| 3 | zweites Antriebszahnrad der zweiten Untersetzungsstufe | 13 | dritte Kette der ersten Untersetzungsstufe |
| 4 | zweites Abtriebszahnrad der zweiten Untersetzungsstufe | 14 | Kettentrieb |
| | | 21 | erste Untersetzungsstufe |
| 5 | drittes Antriebszahnrad der dritten Untersetzungsstufe | 22 | zweite Untersetzungsstufe |
| | | 23 | dritte Untersetzungsstufe |
| 6 | drittes Abtriebszahnrad der dritten Untersetzungsstufe | 26 | Laufrad |
| | | 31 | Motorwelle |
| 7 | Antriebszahnrad des Antriebs | 32 | erste Zwischenwelle |
| 8 | Antriebszahnrad des Laufrades | 33 | zweite Zwischenwelle |
| 10 | Antrieb | 34 | Ausgangswelle |
| 11 | erste Kette der ersten Untersetzungsstufe | 41 | Nabe des Laufrads |
| | | 42 | Gehäuse |
| 12 | zweite Kette der ersten Untersetzungsstufe | 50 | Elektromotor |

Der Gegenstand der Anmeldung umfasst auch die nachfolgenden, als Liste aufgeführten Merkmalskombinationen des Ausführungsbeispiels aus Figur 12, Rückbezüge bei einzelnen Ziffern schaffen zusätzlich relevante Merkmalskombinationen. Diese können ggf. auch mit einzelnen anderen Merkmalen insbesondere aus den anderen Figuren und auch der Einleitung der Anmeldung kombiniert werden.
Ziffer 1. Getriebe für ein mit Elektromotor (50) angetriebenes Fahrzeug, insbesondere ein Kleinfahrzeug, wobei das Getriebe ein dreistufiges Untersetzungsgetriebe aufweist, das die Drehzahl n_{M} einer Motorwelle (31) des Elektromotors (M) auf die Drehzahl n_{A} einer Ausgangswelle (34) des Elektroantriebs (10) um ein Verhältnis n_{M} : n_{A} heruntersetzen kann, wobei n_{A} kleiner als n_{M} ist, wobei jede Stufe des Untersetzungsgetriebes des Elektroantriebs (10) ein Antriebszahnrad (1, 3, 5) und ein Abtriebszahnrad (2, 4, 6) aufweist, wobei die beiden Zahnräder (1, 2; 3, 4; 5, 6) einer Untersetzungsstufe (21, 22, 23) über eine Kette (11, 12, 13) mechanisch und drehbar untereinander verbunden sind und wobei für ein Untersetzungsverhältnis jedes Abtriebszahnrad (2, 4, 6) eine größere Zähnezahl als das zugehörige Antriebszahnrad (1, 3, 5) aufweist, und wobei das dreikettrige Getriebe ein Untersetzungsverhältnis U zwischen 8:1 ≤ U ≤ 60:1 oder ein anderes geeignetes Untersetzungsverhältnis aufweist.
Ziffer 2. Verfahren zum Betreiben eines Elektroantriebs (10) mit mindestens einem Elektromotor (50) und einem mehrstufigen Getriebe, das folgende Verfahrensschritte aufweist:
   - Vermindern der Drehzahl des Elektromotors (50) mittels einer ersten Untersetzungsstufe (21) über eine erste Kette (11) um den Faktor Z₂/Z₁, wobei Z₁ eine Zähnezahl eines ersten Antriebszahnrads (1) auf einer Motorwelle (31) und Z₂ die Zähnezahl eines Abtriebszahnrads (2) auf einer ersten Zwischenwelle (32) ist und wobei das Drehmoment um den gleichen Faktor erhöht wird;
   - Vermindern der Drehzahl der ersten Zwischenwelle (31) mittels einer zweiten Untersetzungsstufe (22) über eine zweite Kette (12) um den Faktor Z_{A}/Z₃, wobei Z₃ eine Zähnezahl eines zweiten Antriebszahnrads (3) auf der ersten Zwischenwelle (32) und Z₄ die Zähnezahl eines zweiten Abtriebszahnrads (4) auf einer zweiten Zwischenwelle (33) ist und wobei das Drehmoment um den gleichen Faktor erhöht wird;
   - Vermindern der Drehzahl der zweiten Zwischenwelle (33) mittels einer dritten Untersetzungsstufe (23) über eine dritte Kette (13) um den Faktor Z₆/Z₅, wobei Z₅ eine Zähnezahl eines dritten Antriebszahnrads (5) auf der zweiten Zwischenwelle (33) und Z₆ die Zähnezahl eines dritten Abtriebszahnrads (6) auf einer Ausgangswelle (34) ist und wobei das Drehmoment um den gleichen Faktor erhöht wird;
   - Antreiben der Ausgangswelle mit einer um den Faktor der Gesamtuntersetzung U von U = Z2/Z1xZ4/Z3xZ6/Z5. im Bereich zwischen 10:1 ≤ U ≤ 50:1 verminderten Ausgangsdrehzahl und im wesentlichen mit einem um den gleichen Faktor erhöhten Drehmoment, Reibungsverluste sind dabei natürlich zu berücksichtigen.
Ziffer 3. Getriebe, das ein dreistufiges Untersetzungsgetriebe aufweist, das die Drehzahl n_{M} einer Eingangswelle auf die Drehzahl n_{A} einer Ausgangswelle (34) des Elektroantriebs (10) um ein Verhältnis n_{M} : n_{A} heruntersetzt, wobei n_{A} kleiner als n_{M} ist,
   dadurch gekennzeichnet, dass
   jede Stufe des Untersetzungsgetriebes des Elektroantriebs (10) ein Antriebszahnrad (1, 3, 5) und ein Abtriebszahnrad (2, 4, 6) aufweist, wobei die beiden Zahnräder (1, 2; 3, 4; 5, 6) einer Untersetzungsstufe (21, 22, 23) über eine Kette (11, 12, 13) mechanisch und drehbar untereinander verbunden sind und wobei für ein Untersetzungsverhältnis jedes Abtriebszahnrad (2, 4, 6) eine größere Zähnezahl als das zugehörige Antriebszahnrad (1, 3, 5) aufweist, und wobei jedes der Antriebszahnräder (1, 3, 5) der Untersetzungsstufen eine Mindestzähnezahl aufweist.
Ziffer 4. Verfahren zum Betreiben eines Elektroantriebs (10) mit mindestens einem Elektromotor (50) und einem mehrstufigen Getriebe, das folgende Verfahrensschritte aufweist:
   - Bereitstellen von Antriebszahnrädern (1, 3, 5) mit einer Mindestzähnezahl;
   - Vermindern der Drehzahl des Elektromotors (50) mittels einer ersten Untersetzungsstufe (21) über eine erste Kette (11) um den Faktor Z2/Z1, wobei Z1 eine Zähnezahl eines ersten Antriebszahnrads (1) auf einer Motorwelle (31) und Z2 die Zähnezahl eines Abtriebszahnrads (2) auf einer ersten Zwischenwelle (32) ist und wobei das Drehmoment um den gleichen Faktor erhöht wird;
   - Vermindern der Drehzahl der ersten Zwischenwelle (31) mittels einer zweiten Untersetzungsstufe (22) über eine zweite Kette (12) um den Faktor Z4/Z3, wobei Z3 eine Zähnezahl eines zweiten Antriebszahnrads (3) auf der ersten Zwischenwelle (32) und Z4 die Zähnezahl eines zweiten Abtriebszahnrads (4) auf einer zweiten Zwischenwelle (33) ist und wobei das Drehmoment um den gleichen Faktor erhöht wird;
   - Vermindern der Drehzahl der zweiten Zwischenwelle (33) mittels einer dritten Untersetzungsstufe (23) über eine dritte Kette (13) um den Faktor Z6/Z5, wobei Z5 eine Zähnezahl eines dritten Antriebszahnrads (5) auf der zweiten Zwischenwelle (33) und Z6 die Zähnezahl eines dritten Abtriebszahnrads (6) auf einer Ausgangswelle (34) ist und wobei das Drehmoment um den gleichen Faktor erhöht wird;
   - Antreiben der Ausgangswelle mit einer um den Faktor der Gesamtuntersetzung U von U = Z2/Z1xZ4/Z3xZ6/Z5. verminderten Ausgangsdrehzahl.
Ziffer 5. Getriebe, das ein dreistufiges Untersetzungsgetriebe aufweist, das die Drehzahl n_{M} einer Eingangswelle auf die Drehzahl n_{A} einer Ausgangswelle (34) des Elektroantriebs (10) um ein Verhältnis n_{M} : n_{A} heruntersetzt, wobei n_{A} kleiner als n_{M} ist,
   dadurch gekennzeichnet, dass
   jede Stufe des Untersetzungsgetriebes des Elektroantriebs (10) ein Antriebszahnrad (1, 3, 5) und ein Abtriebszahnrad (2, 4, 6) aufweist, wobei die beiden Zahnräder (1, 2; 3, 4; 5, 6) einer Untersetzungsstufe (21, 22, 23) über eine Kette (11, 12, 13) mechanisch und drehbar untereinander verbunden sind und wobei für ein Untersetzungsverhältnis jedes Abtriebszahnrad (2, 4, 6) eine größere Zähnezahl als das zugehörige Antriebszahnrad (1, 3, 5) aufweist und wobei jedes der Zahnräder (1, bis 6) der Untersetzungsstufen eine ungerade Zähnezahl aufweist.
Ziffer 6. Verfahren zum Betreiben eines Elektroantriebs (10) mit mindestens einem Elektromotor (50) und einem mehrstufigen Getriebe, das folgende Verfahrensschritte aufweist:
   - Bereitstellen von Zahnrädern (1 bis 6) mit einer ungeraden Zähnezahl;
   - Vermindern der Drehzahl des Elektromotors (50) mittels einer ersten Untersetzungsstufe (21) über eine erste Kette (11) um den Faktor Z₂/Z₁, wobei Z₁ eine Zähnezahl eines ersten Antriebszahnrads (1) auf einer Motorwelle (31) und Z₂ die Zähnezahl eines Abtriebszahnrads (2) auf einer ersten Zwischenwelle (32) ist und wobei das Drehmoment um den gleichen Faktor erhöht wird;
   - Vermindern der Drehzahl der ersten Zwischenwelle (31) mittels einer zweiten Untersetzungsstufe (22) über eine zweite Kette (12) um den Faktor Z_{A}/Z₃, wobei Z₃ eine Zähnezahl eines zweiten Antriebszahnrads (3) auf der ersten Zwischenwelle (32) und Z₄ die Zähnezahl eines zweiten Abtriebszahnrads (4) auf einer zweiten Zwischenwelle (33) ist und wobei das Drehmoment um den gleichen Faktor erhöht wird;
   - Vermindern der Drehzahl der zweiten Zwischenwelle (33) mittels einer dritten Untersetzungsstufe (23) über eine dritte Kette (13) um den Faktor Z₆/Z₅, wobei Z₅ eine Zähnezahl eines dritten Antriebszahnrads (5) auf der zweiten Zwischenwelle (33) und Z₆ die Zähnezahl eines dritten Abtriebszahnrads (6) auf einer Ausgangswelle (34) ist und wobei das Drehmoment um den gleichen Faktor erhöht wird;
   - Antreiben der Ausgangswelle mit einer um den Faktor der Gesamtuntersetzung U von U = Z₂/Z₁xZ₄/Z₃xZ₆/Z₅. verminderten Ausgangsdrehzahl und mit einem um den gleichen Faktor erhöhten Drehmoment.

Figur 13 zeigt eine Prinzipskizze eines weiteren Antriebs 10 mit Elektromotor 50 und Getriebe für ein Kleinfahrzeug gemäß einem Ausführungsbeispiel der Anmeldung. Der Elektromotor und das Getriebe sind in einem Gehäuse 42 angeordnet, aus dem einseitig eine Ausgangswelle 34 herausragt. Das Getriebe ist als dreikettriges Getriebe, d.h. als Getriebe mit drei Ketten 11, 12 und 13 ausgeführt. Die drei Ketten weisen unterschiedliche Teilungen gemäß DIN 8187 auf, wobei mit zunehmender Teilung der Durchmesser der Querrollen auf stärkerwerdenden Querbolzen der Kettenglieder und damit die Kettenstärke zunimmt.

Teile in Fig. 13, die mit Teilen des Ausführungsbeispiels in Fig. 12 übereinstimmen, haben im Allgemeinen dieselben Bezugsziffern.

In dem gezeigten Ausführungsbeispiel der Anmeldung weist die erste Kette 11 einer Untersetzungsstufe 21 eine Teilung von 6 mm mit einem Rollendurchmesser von 4,00 mm für Zahnbreitenprofile B1 mit B1 = 2,80 x 0,93 mm auf. Obgleich die zweite Kette 12 einer zweiten Untersetzungsstufe 22 ein höheres Drehmoment zu übertragen hat, was durch einen längeren Richtungspfeil in Figur 1 verdeutlicht wird, kann die zweite Kette 12 die gleiche Teilung von 6 mm und damit die gleiche Kettenstärke aufweisen mit gleichem Rollendurchmesser wie die erste Kette 11, so dass B1 = B2 ist.

In der dritten Untersetzungsstufe 23 wird das von der dritten Kette 13 zu übertragende Drehmoment so groß, dass eine stärkere Kette 13 mit einer Teilung von 8 mm vorgesehen ist, die einen Rollendurchmesser von 5,00 mm für ein Zahnbreitenprofil B3 = 3,00 x 0,93 mm aufweist.

Dazu weist die erste Untersetzungsstufe 21 ein erstes Antriebszahnrad 1 auf, das auf einer Motorwelle 31 des Elektromotors 50 fixiert ist. Das erste Antriebszahnrad 1 ist mechanisch über die erste Kette 11 mit einem ersten Abtriebszahnrad 2 drehbar verbunden, das auf einer ersten Zwischenwelle 32 angeordnet ist. In dem in Figur 1 gezeigten Getriebe weist das erste Antriebszahnrad 1 eine Zähnezahl Z₁ mit Z₁ = 21 und das erste Abtriebszahnrad eine Zähnezahl Z₂ mit Z₂ = 75 auf.

Die zweite Untersetzungsstufe 22 weist ein zweites Antriebszahnrad 3 auf, das auf der ersten Zwischenwelle 32 zusammen mit dem ersten Abtriebszahnrad 2 fixiert ist. Das zweite Antriebszahnrad 3 ist mechanisch über die zweite Kette 12 mit einem zweiten Abtriebszahnrad 4 drehbar verbunden. Das auf einer zweiten Zwischenwelle 33 fixiert ist. In dem in Figur 1 gezeigten Getriebe weist das zweite Antriebszahnrad 3 eine Zähnezahl Z₃ mit Z₃ = 21 und das zweite Abtriebszahnrad 4 eine Zähnezahl Z₄ mit Z₄ = 75 auf.

Die dritte Untersetzungsstufe 23 weist ein drittes Antriebszahnrad 5 auf, das auf der zweiten Zwischenwelle 33 zusammen mit dem zweiten Abtriebszahnrad 4 fixiert ist. Das dritte Antriebszahnrad 5 ist mechanisch über die dritte Kette 13 mit einem dritten Abtriebszahnrad 6 drehbar verbunden, wobei das dritte Abtriebszahnrad 6 auf der Ausgangswelle 34 des Antriebs 10 fixiert ist. In dem in Figur 1 gezeigten Getriebe weist das dritte Antriebszahnrad 5 eine Zähnezahl Z₅ mit Z₅ = 21 und das dritte Abtriebszahnrad 6 eine Zähnezahl Z₆ mit Z₆ = 57 auf.

In dem gezeigten Antrieb 10 sind die Motorwelle 31 und die zweite Zwischenwelle 33 zueinander fluchtend vorgesehen. Zusätzlich sind ebenfalls die Ausgangswelle 34 und die erste Zwischenwelle 32 zueinander fluchtend angeordnet.

Die Antriebszahnräder 1, 3 und 5 weisen in dem gezeigten Getriebe die gleiche Anzahl von Zähnen auf. Auch die Abtriebszahnräder 2 und 4 haben eine gleiche Zähnezahl. Das dritte Abtriebszahnrad 6 weist eine geringfügig verminderte Zähnezahl gegenüber den Abtriebszahnräder 2 und 4 auf. Aus den Verhältnissen der Anzahl der Zähne der Zahnkränze der drei Untersetzungsstufen 21, 22 und 23 ergibt sich eine Gesamtuntersetzung U von U = Z₂/Z₁xZ₄/Z₃XZ₆/Z₅.= 75/21x75/21x57/21 ≈ 35:1.

Mit diesem Antrieb wird mit der ersten Untersetzungsstufe 21 das relativ geringe Motordrehmoment um den Faktor Z₂/Z₁ auf eine höheres Drehmoment der ersten Zwischenwelle 32 erhöht, und die Drehzahl der ersten Zwischenwelle 32 um den gleichen Faktor vermindert. Da in diesem Getriebe Z₂/Z₁ = Z₄xZ₃ ist, wird mit der zweiten Untersetzungsstufe 22 das Drehmoment um den gleichen Faktor weiter erhöht und die Drehzahl der zweiten Zwischenwelle 33 um den gleichen Faktor weiter vermindert. Schließlich wird das Drehmoment mit der dritten Untersetzungsstufe 23 nochmals um einen Faktor Z₆/Z₅ erhöht, sodass ein Ausgangsdrehmoment zur Verfügung steht, das um den Faktor von ca. 35 höher ist, als das Motordrehmoment und ausreicht um ein angepasstes Anfahrdrehmoment auf ein Laufrad 26 eines Kleinfahrzeugs mit Hilfe eines Kettentriebs 14 zu übertragen. Dabei ist die Ausgangsdrehzahl der Ausgangswelle 34 um die Gesamtuntersetzung des Getriebes von ca. 35 gegenüber der Motordrehzahl vermindert.

Auf der Ausgangswelle 34, die einseitig aus dem Gehäuse 42 herausragt, ist zum Antrieb des Laufrades 26 außerhalb des Gehäuses 42 ein Ausgangszahnrad 7 angeordnet. Das Ausgangszahnrad 7 ist über den Kettentrieb 14 mittels einer konventionellen Fahrradkette und über ein Antriebszahnrad 8 mit einer Nabenschaltung 41 des Laufrades 26 eines Kleinfahrzeugs gekoppelt.

In diesem Ausführungsbeispiel richtet sich die Teilung und Stärke der ersten Kette 11 nach der größeren Stärke und Teilung der zweiten Kette 12, obgleich die erste Kette ein geringeres Drehmoment zu übertragen hat. Dieses wird möglich, wenn außerdem das Untersetzungsverhältnis der ersten und der zweiten Untersetzungsstufe wie in diesem Getriebe gleich sind und mit gleich großen Zahnrädern verwirklich werden, und wenn die Motorwelle und die erste Zwischenwelle und ebenfalls die Ausgangswelle und die zweite Zwischenwelle fluchtend angeordnet werden. Dann können bei gleicher Zahnteilung und Kettengliederteilung und damit gleicher Kettenstärke gleich lange Ketten eingesetzt und die Gehäusestruktur kann kostengünstig vereinfacht werden.

Anstelle des Kettentriebs 14 mit den Zahnrädern 7 und 8 kann die Ausgangswelle 34 mit der Nabe 41 über einen Riementrieb gekoppelt sein, wobei die Ausgangswelle 34 eine erste Riemenscheibe aufweist und die Nabe 41 des Laufrades 26 über eine zweite Riemenscheibe mittels eines Treibriemens oder eines Keilriemens oder eines Zahnriemens angetrieben wird. Diese Alternative hat den Vorteil, dass Keilriementriebe gegenüber Kettentrieben eine verminderte Geräuschentwicklung ermöglichen, was für Kleinfahrzeuge in medizinischen Bereichen von Vorteil ist.

Außerdem ist es möglich die Ausgangswelle 34 mit einem Reibrad zu versehen, wobei das Reibrad mit einem Laufradreifen oder mit einer Laufradfelge koppelbar ist. Damit kann der Fertigungs- und Montageaufwand verringert werden, zumal der Antrieb praktisch ohne kostspielige Änderungen eines Kleinfahrzeugs angebaut werden kann.

Anstelle des Kettentriebs 14 mit den Zahnrädern 7 und 8 kann die Ausgangswelle 34 ein Zahnradritzel tragen und die Felge des Laufrades einen Innenzahnkranz aufweisen, wobei die Zähne des Ritzels mit dem Innenzahnkranz der Felge in Eingriff bringbar sind. Nach Einbau einer Felge mit Innenzahnkranz, kann diese Konstruktion auch zur Rekuperation von Bremsenergie genutzt werden. Da Bremsbeschleunigungen bei Bergabfahrten und bei Bremsvorgängen des Laufrades im Elektromotor Ladestrom generieren können.

Der Elektromotor kann mit einer Drehrichtungsumkehr ausgestattet sein, wobei im Falle einer beidseitig aus dem Gehäuse heraustretende Welle ein umschaltbarer Freilauf vorgesehen werden kann. Damit kann die Manövrierfähigkeit für Rollstühle und andere drei- oder vierrädrige Kleinfahrzeuge verbessert werden.

Die übrigen Varianten und Anwendungsbeispiele des Ausführungsbeispiels aus Figur 12 sind auch auf das vorliegende Ausführungsbeispiel anwendbar.

### Zusätzliche Bezugszeichen

- B1: Zahnbreitenprofil der erste Untersetzungsstufe
- B1: Zahnbreitenprofil der zweiten Untersetzungsstufe
- B1: Zahnbreitenprofil der dritten Untersetzungsstufe

Der Gegenstand der Anmeldung umfasst auch die nachfolgenden, als Liste aufgeführten Merkmalskombinationen des Ausführungsbeispiels aus Figur 13, Rückbezüge bei einzelnen Ziffern schaffen zusätzlich relevante Merkmalskombinationen. Diese können ggf. auch mit einzelnen anderen Merkmalen insbesondere aus den anderen Figuren und auch der Einleitung der Anmeldung kombiniert werden.
Ziffer 1. Getriebe, das ein dreistufiges Untersetzungsgetriebe aufweist, das die Drehzahl nM einer Eingangswelle auf die Drehzahl nA einer Ausgangswelle (34) des Elektroantriebs (10) um ein Verhältnis nM : nA heruntersetzt, wobei nA kleiner als nM ist,
   dadurch gekennzeichnet, dass
   jede Stufe des Untersetzungsgetriebes des Elektroantriebs (10) ein Antriebszahnrad (1, 3, 5) und ein Abtriebszahnrad (2, 4, 6) aufweist, wobei die beiden Zahnräder (1, 2; 3, 4; 5, 6) einer Untersetzungsstufe (21, 22, 23) über eine Kette (11, 12, 13) mechanisch und drehbar untereinander verbunden sind, und wobei die ersten beiden Untersetzungsstufen (21, 22) Ketten (11, 12) mit gleicher Kettenstärke aufweisen und die dritte Untersetzungsstufe (23) eine Kette (13) mit größerer Kettenstärke als die ersten beiden Untersetzungsstufen (21, 22) aufweist.
Ziffer 2. Verfahren zum Betreiben eines Elektroantriebs (10) mit mindestens einem Elektromotor (50) und einem mehrstufigen Getriebe, das folgende Verfahrensschritte aufweist:
   Bereitstellen von Ketten (11, 12, 13) von unterschiedlicher Kettenstärke für drei Untersetzungsstufen (21, 22, 23), wobei die ersten beiden Untersetzungsstufen (21, 22) mit Ketten (11, 12) gleicher Kettenstärke betrieben werden, und wobei die dritte Untersetzungsstufe (23) mit einer Kette (13) mit größerer Kettenstärke als die Ketten (11, 12) der ersten beiden Untersetzungsstufen (21, 22) betrieben wird;
   Vermindern der Drehzahl des Elektromotors (50) mittels einer ersten Untersetzungsstufe (21) über die erste Kette (11) um den Faktor Z2/Z1, wobei Z1 eine Zähnezahl eines ersten Antriebszahnrads (1) auf einer Motorwelle (31) und Z2 die Zähnezahl eines Abtriebszahnrads (2) auf einer ersten Zwischenwelle (32) ist und wobei das Drehmoment um den gleichen Faktor erhöht wird;
   Vermindern der Drehzahl der ersten Zwischenwelle (31) mittels einer zweiten Untersetzungsstufe (22) über die zweite Kette (12) um den Faktor Z4/Z3, wobei Z3 eine Zähnezahl eines zweiten Antriebszahnrads (3) auf der ersten Zwischenwelle (32) und Z4 die Zähnezahl eines zweiten Abtriebszahnrads (4) auf einer zweiten Zwischenwelle (33) ist und wobei das Drehmoment um den gleichen Faktor erhöht wird;
   Vermindern der Drehzahl der zweiten Zwischenwelle (33) mittels der dritten Untersetzungsstufe (23) über eine dritte Kette (13) um den Faktor Z6/Z5, wobei Z5 eine Zähnezahl eines dritten Antriebszahnrads (5) auf der zweiten Zwischenwelle (33) und Z6 die Zähnezahl eines dritten Abtriebszahnrads (6) auf einer Ausgangswelle (34) ist und wobei das Drehmoment um den gleichen Faktor erhöht wird;
   Antreiben der Ausgangswelle mit einer um den Faktor der Gesamtuntersetzung U von U = Z2/Z1xZ4/Z3xZ6/Z5. verminderten Ausgangsdrehzahl.

Figur 14 (CMG 068) zeigt eine Prinzipskizze eines Antriebs 10 mit Elektromotor 50 und Getriebe für ein Kleinfahrzeug gemäß einem Ausführungsbeispiel der Anmeldung. Der Elektromotor 50 und das Getriebe sind in einem Gehäuse 42 angeordnet, aus dem einseitig eine Ausgangswelle 34 herausragt. Das Getriebe ist als dreikettriges Getriebe, d.h. als Getriebe mit drei Ketten 11, 12 und 13 ausgeführt.

Teile in Fig. 14 und 15, die mit Teilen der Ausführungsbeispiele in Fig. 12 und 13 übereinstimmen, haben im Allgemeinen dieselben Bezugsziffern.

Dazu weist eine erste Untersetzungsstufe 21 ein erstes Antriebszahnrad 1 auf, das auf einer Motorwelle 31 des Elektromotors 50 fixiert ist. Das erste Antriebszahnrad 1 ist mechanisch über die erste Kette 11 mit einem ersten Abtriebszahnrad 2 drehbar verbunden, das auf einer ersten Zwischenwelle 32 angeordnet ist.

Die zweite Untersetzungsstufe 22 weist ein zweites Antriebszahnrad 3 auf, das auf der ersten Zwischenwelle 32 zusammen mit dem ersten Abtriebszahnrad 2 fixiert ist. Das zweite Antriebszahnrad 3 ist mechanisch über die zweite Kette 12 mit einem zweiten Abtriebszahnrad 4 drehbar verbunden das auf einer zweiten Zwischenwelle 33 fixiert ist.

Die dritte Untersetzungsstufe 23 weist ein drittes Antriebszahnrad 5 auf, das auf der zweiten Zwischenwelle 33 zusammen mit dem zweiten Abtriebszahnrad 4 fixiert ist. Das dritte Antriebszahnrad 5 ist mechanisch über die dritte Kette 13 mit einem dritten Abtriebszahnrad 6 drehbar verbunden, wobei das dritte Abtriebszahnrad 6 auf der Ausgangswelle 34 des Antriebs 10 fixiert ist.

In dem gezeigten Antrieb 10 sind die Motorwelle 31 und die zweite Zwischenwelle 33 zueinander fluchtend vorgesehen. Zusätzlich sind ebenfalls die Ausgangswelle 34 und die erste Zwischenwelle 32 zueinander fluchtend angeordnet.

Die zweite Zwischenwelle 33 trägt die Zahnräder 4 und 5 und ist als Hohlwelle ausgebildet und auf einem stehenden Wellenzapfen 35 drehbar und unabhängig von der Motorwelle 31 gelagert. Der Wellenzapfen 35 weist einen Wellenzapfenflansch 36 auf, der auf einer Innenseite 47 eines Gehäusedeckels 44 des Gehäuses 42 fixiert ist.

Figur 15 zeigt eine schematische Darstellung einer Lagerung 33 der zweiten Zwischenwelle 33 im Detail. Zur Fixierung des Wellenzapfens 35 weist die Innenseite 47 des Gehäusedeckels 44 eine Aussparung 46 auf, die einer Außenkontur des Wollenzapfenflansches 36 gleitverschieblich angepasst ist. Der Wellenzapfenflansch 36 ist mit Fixierschrauben 37 an dem Gehäusedeckel 44 fixiert. Dazu weist der Wollenzapfenflansch 36 Sackgewindelöcher auf.

Auf dem Wellenzapfen sind zwei Wälzlager 51 und 52 angeordnet, deren Innenringe mit einem Sprengring 53 axial auf dem Wellenzapfen 35 gehalten sind. Die Außenringe der Wälzlager 51 und 52 tragen die als Hohlwelle ausgebildete Zwischenwelle 33. Dazu sind die Außenringe der Wälzlager 51 und 53 durch einen Ansatz 38 am Innenrand der Zwischenwelle 33 und durch eine Arretierungsscheibe 54 vor einer axialen Verschiebung gesichert. Die Außenkontur der Zwischenwelle 33 weist 3 Stufen 56, 57 und 58 auf. Die Stufen 56 und 57 sind an unterschiedliche Nabenformen der Zahnräder 5 bzw. 4 angepasst. Die Stufe 58 überragt die Stufe 57 und bildet eine Ansatzflanke 59 für das Zahnrad 4, während ein Absatz zwischen den Stufen 56 und 57 eine Ansatzflanke 60 für das Zahnrad 5 bildet.

Ein Zusammenbau dieser Zwischenwellenlagerung 55 hängt mit der Montage des dreikettrigen Getriebes zusammen. Dabei werden zunächst die Zahnräder 4 und 5 auf den Stufen 57 und 56 der Zwischenwelle 33 mit ihren Naben fixiert, wobei die Ansatzflanken 59 und 60 zur Fixierung beitragen. Danach werden die Wälzlager 51 und 52 in die Hohlwelle bis zu dem Ansatz 38 eingepresst und axial durch die Arretierungsscheibe 54 gesichert. In die Innenringe der Wälzlager 51 und 52 wird dann der Wellenzapfen 35 geschoben. Die Innenringe werden durch Anbringen des Sprengrings 53 in einer Radialnut des Wellenzapfens 35 vor einer axialen Verschiebung gesichert.

Eine derart vormontierte Zwischenwelleneinheit aus Zwischenwelle 33 mit Zahnrädern 4 und 5 sowie gesichertem Wellenzapfen 35, der einseitig herausragend den Wollenzapfenflansch 36 aufweist, wird nun mit den beiden in Figur 1 gezeigten Ketten 12 und 13 verbunden. Danach wird der Gehäusedeckel 44 unter Einführen des Wellenzapfenflansches 36 in die vorgesehene Aussparung 46 eingeführt und mit den Fixierschrauben 37 am Gehäusedeckel 44 fixiert.

Das in den Figuren 14 und 15 gezeigte Ausführungsbeispiel hat den Vorteil, dass durch die von der Motorwelle unabhängige Lagerung der mit der Motorwelle fluchtenden Zwischenwelle die Motorwelle nicht zusätzlich belastet wird. Weiterhin wird durch Vormontage einer Zwischenwelleneinheit die Montage des dreikettrigen Getriebes erleichtert, wenn zunächst die Ketten der zweiten und dritten Untersetzungsstufe mit der vormontierten Zwischeneinheit verbunden werden. Erst danach wird der Gehäusedeckel unter Fixieren des Wellenzapfens sowie unter Durchführen der Ausgangswelle aufgebracht.

Anstelle der Lagerung der zweiten Zwischenwelle 33 auf einem eigenen Wellenzapfen 35 kann eine als Hohlwelle aufgebildete zweite Zwischenwelle 33 auch auf der Motorwelle 31 gelagert werden. Damit ist es möglich ein exaktes Fluchten der Zwischenwelle mit der Motorwelle unabhängig von Fertigungs- und Montagetolleranzen eines Gehäusedeckels sicherzustellen.

Anstelle einer axialen Arretierungsscheibe 54 kann ein Innensprengring in die Hohlwelle zur axialen Sicherung der Außenringe der Wälzlager 51 und 52 eingesetzt werden, wenn die Hohlwelle axial verlängert wird. Der Einsatz eines Sprengringes erfordert geringere Montagezeiten als ein Fixieren der Arretierungsscheibe.

Anstelle von Fixierschrauben 37 können für die Fixierung des Wellenzapfenflansches 36 auch eine zentrale selbsthemmende Fixierungsmutter vorgesehen werden, wenn ein entsprechender Gewindezapfen des Wellenzapfenflansches durch den Gehäusedeckel nach Außen herausragt. Dies ermöglicht eine vereinfachte Montage des Wellenzapfens am Gehäusedeckel

Die übrigen Varianten und Anwendungsbeispiele der Ausführungsbeispiele aus Figur 12 und 13 sind auch auf das vorliegende Ausführungsbeispiel anwendbar.

**Zusätzliche Bezugszeichen in Fig. 14 und Fig. 15**

| | | | |
|---|---|---|---|
| 35 | Wellenzapfen | 53 | Sprengring |
| 36 | Wellenzapfenflansch | 54 | axiale Arretierungsscheibe |
| 37 | Fixierschraube | 55 | Lagerung |
| 38 | Ansatz | 56 | Stufe auf der Zwischenwelle |
| 42 | Gehäuse | 57 | Stufe auf der Zwischenwelle |
| 44 | Gehäusedeckel | 58 | Stufe auf der Zwischenwelle |
| 46 | Aussparung in einem Gehäusedeckel | 59 | Ansatzflanke zwischen Stufe 58 und 57 |
| 47 | Innenseite eines Gehäusedeckels | 60 | Ansatzflanke zwischen Stufe 57 und 56 |
| 50 | Elektromotor | | |
| 51 | Wälzlager | | |
| 52 | Wälzlager | | |

Hier ist der Wellenzapfen 35 für sich gesehen relevant und als separater Gegenstand identifizierbar. Der Wellenzapfen 35 weist einen Wellenzapfenflansch 36 auf, der auf einer Innenseite 47 eines Gehäusedeckels 44 des Gehäuses 42 fixiert ist. Weitere mögliche Merkmale des in dem dreikettrigen Getriebe anordenbaren Wellenzapfen 35 sind in der obigen Beschreibung offenbart.

In einer weiteren Ausgestaltung kann als Alternative oder zusätzlich zum Wollenzapfenflansch auch eine Gestaltung vorgesehen sein, bei der der Wellenzapfen 35 an seinem freien Ende aus Figur 15 in Richtung auf die Motorwelle 31 hin verlängert ist. Der Wellenzapfen 35 tritt dort über eine Lagerung mit der Motorwelle 31 in Kontakt, ist aber gegenüber dieser durch die Lagerung drehbar. Dies verbessert die Haltbarkeit des Getriebes, wenn die Welle 35 für die Zahnräder 4 und 5 beidseitig gelagert ist. Voraussetzung dafür ist, daß die Motorwelle 31 für sich gesehen stabil gelagert ist. Dabei kann insbesondere eine Fest-Los-Lageranordnung für die Verbindung von Motorwelle 31 und Wellenzapfen 35 gewählt werden, wobei das Festlager auch auf der Motorwelle 31 vorgesehen werden kann. Dies begünstigt dann eine Montage des Getriebes.

### CMG 069

Figur 16 zeigt eine Prinzipskizze eines weiteren Antriebs 10 mit Elektromotor 50 und Getriebe für ein Kleinfahrzeug gemäß einem Ausführungsbeispiel der Anmeldung. Der Elektromotor 50 und das Getriebe sind in einem Gehäuse 42 angeordnet, aus dem einseitig eine Ausgangswelle 34 herausragt. Das Getriebe ist als dreikettriges Getriebe, d.h. als Getriebe mit drei Ketten 11, 12 und 13 ausgeführt.

Teile in Fig. 16 und 17, die mit Teilen der Ausführungsbeispiele in Fig. 12 bis 15 übereinstimmen, haben im Allgemeinen dieselben Bezugsziffern. Dies

Eine erste Untersetzungsstufe 21 weist ein erstes Antriebszahnrad 1 auf, das auf einer Motorwelle 31 des Elektromotors 50 fixiert ist. Das erste Antriebszahnrad 1 ist mechanisch über eine erste Kette 11 mit einem ersten Abtriebszahnrad 2 drehbar verbunden, das auf einer ersten Zwischenwelle 32 angeordnet ist.

Eine zweite Untersetzungsstufe 22 weist ein zweites Antriebszahnrad 3 auf, das auf der ersten Zwischenwelle 32 zusammen mit dem ersten Abtriebszahnrad 2 fixiert ist. Das zweite Antriebszahnrad 3 ist mechanisch über eine zweite Kette 12 mit einem zweiten Abtriebszahnrad 4 drehbar verbunden., das auf einer zweiten Zwischenwelle 33 fixiert ist.

Eine dritte Untersetzungsstufe 23 weist ein drittes Antriebszahnrad 5 auf, das auf der zweiten Zwischenwelle 33 zusammen mit dem zweiten Abtriebszahnrad 4 fixiert ist. Das dritte Antriebszahnrad 5 ist mechanisch über eine dritte Kette 13 mit einem dritten Abtriebszahnrad 6 drehbar verbunden, wobei das dritte Abtriebszahnrad 6 auf der Ausgangswelle 34 des Antriebs 10 fixiert ist.

In dem gezeigten Antrieb 10 sind die Motorwelle 31 und die zweite Zwischenwelle 33 zueinander fluchtend vorgesehen. Zusätzlich sind ebenfalls die Ausgangswelle 34 und die erste Zwischenwelle 32 zueinander fluchtend angeordnet.

Die Antriebszahnräder 1, 3 und 5 weisen in dem gezeigten Getriebe die gleiche Anzahl 21 von Zähnen auf. Auch die Abtriebszahnräder 2 und 4 haben eine gleiche Anzahl 75 von Zähnen. Das dritte Abtriebszahnrad 6 weist eine geringfügig verminderte Zähnezahl gegenüber den Abtriebszahnräder 2 und 4 von 57 auf. Aus den Verhältnissen der Anzahl der Zähne der Zahnkränze der drei Untersetzungsstufen 21, 22 und 23 ergibt sich eine Gesamtuntersetzung U von U = 75/21x75/21x57/21 ≈ 35:1.

Mit diesem Antrieb wird mit der ersten Untersetzungsstufe 21 das relativ geringe Motordrehmoment um den Faktor 75/21 auf eine höheres Drehmoment der ersten Zwischenwelle 32 erhöht, und die Drehzahl der ersten Zwischenwelle 32 um den gleichen Faktor vermindert. Da in diesem Getriebe das Untersetzungsverhältnis der ersten Untersetzungsstufe 21 gleich dem Untersetzungsverhältnis der zweiten Untersetzungsstufe 22 ist, wird mit der zweiten Untersetzungsstufe 22 das Drehmoment um den gleichen Faktor weiter erhöht und die Drehzahl der zweiten Zwischenwelle 33 um den gleichen Faktor weiter vermindert. Schließlich wird das Drehmoment mit der dritten Untersetzungsstufe 23 nochmals um einen Faktor 57/21 erhöht, sodass ein Ausgangsdrehmoment zur Verfügung steht, das um den Faktor von ca. 35 höher ist, als das Motordrehmoment und ausreicht um ein angepasstes Anfahrdrehmoment auf ein Laufrad 26 eines Kleinfahrzeugs mit Hilfe eines Kettentriebs 14 zu übertragen. Dabei ist die Ausgangsdrehzahl der Ausgangswelle 34 um die Gesamtuntersetzung des Getriebes von ca. 35 gegenüber der Motordrehzahl vermindert.

Zur Übertragung der Drehmomente von der Motorwelle 31 bis zu der Ausgangswelle 34 sind die Wellen 32 bis 34 mit den Naben 15 bis 19 der Zahnräder 2 bis 6 kraft-, stoff- oder formschlüssig verbunden. Dabei sitzen die Zahnräder 2 bis 6 mit ihren Naben 15 bis 19 auf stufenförmigen Hohlwellen, wobei die Stufen mit ihrer Außenkontur an die Formen der Nabenöffnungen der Zahnräder 2 bis 6 angepasst sind.

Figur 17 zeigt schematische Darstellungen von unterschiedlichen Nabenformen von Zahnrädern des Getriebes. Figur 17A zeigt dazu eine schematische Darstellung der Antriebszahnräder 1, 2 oder 3 wie in Figur 1 gezeigt mit einer kreisförmigen Nabenöffnung 29 und einem Zahnkranz 9 mit den 21 Zähnen. Die Antriebszahnräder mit einer kreisförmigen Nabenöffnung 29 werden kraft- oder stoffschlüssig auf einer Stufe einer Welle fixiert, um die Drehmomente der Welle auf den Zahnkranz 9 zu übertragen.

Figur 17B zeigt ein gleiches Antriebszahnrad 1, 3 oder 5 wie in Figur 1 gezeigt mit einer sechseckigen Nabenöffnung 28, die ein gleichseitiges Sechseck aufweist. Das gleichseitige Sechseck ist formschlüssig auf einer sechseckigen Stufe einer Welle fixiert und überträgt die Drehmomente der Welle auf den Zahnkranz 9.

Figur 17C zeigt eine schematische Darstellung einer gestuften Welle, wie sie für die Zwischenwellen 32 und 33 vorgesehen ist. Die Stufe 56 ist in Form und Größe an die Nabenöffnungen 28 bzw. 29 der Antriebszahnräder 3 und 5 angepasst. Die Stufe 57 ist in Form und Größe an die Nabenöffnungen der Abtriebszahnräder 2 und 4 angepasst. Zwischen Stufe 56 und 57 ist eine Absatzflanke 60 vorgesehen, mit der das Antriebszahnrad 3 bzw. 5 axial fixiert wird. Eine dritte Stufe 58 ist größer als die Stufe 57 und bildet zu der Stufe 57 hin eine Absatzflanke 59, sodass das Abtriebszahnrad 2 bzw. 4 an der Absatzflanke 59 axial fixiert ist.

Zahnradnaben mit kreisförmiger Nabenöffnung haben den Vorteil, dass ihr Sitz auf einer Welle kostengünstig hergestellt werden kann, da für den Sitz der Zahnradnabe auf der Welle lediglich eine Stufe in ein Wellenmaterial zu drehen ist. Die hier gezeigten Zahnradnaben mit sechseckiger Nabenöffnung haben den Vorteil, dass ihr Sitz auf einer Welle formschlüssig ist und über diesen formschlüssigen Sitz die Drehmomente einer Welle auf die Zahnkränze formschlüssig übertragen werden können.

Anstelle der sechseckigen Nabenöffnung sind auch Polygone mit ungerader Anzahl von Ecken bzw. Kanten einsetzbar.

Damit ist für Abtriebsräder mit kleinen Durchmessen, die in vorteilhafter Weise ungerade Zähnezahlen aufweisen, der Vorteil verbunden, dass die Polygonecken nicht auf den geschwächten Bereich einer Zahnlücke, sondern auf einen Zahnfuß ausgerichtet sind, wobei die ungerade Zähnezahl ein mehrfaches der ungeraden Polygonecken ist (5 zu 15; 5 zu 25; 7 zu 21; 7 zu 29).

Polygonförmige Nabenöffnungen haben den Vorteil, daß Zahnräder beispielsweise mit Polymerkleber auf die Nabe aufgeklebt werden können, was sehr kostengünstig ist. Auch Lötungen oder Schweißungen sind denkbar. Anstelle der polygonförmigen Nabenöffnung sind Passstifte, Nieten oder Schraubverbindungen, die in dem Zahnradblatt angeordnet sind und die in der gestuften Welle im Bereich der Absatzflanke fixiert sind, vorgesehen. Damit lassen sich auch Zahnräder mit kreisförmiger Nabenöffnung formschlüssig fixieren.

### Zusätzliche Bezugszeichen für Fig. 16 und 17:

- 15: Zahnradnabe
- 16: Zahnradnabe
- 17: Zahnradnabe
- 18: Zahnradnabe
- 19: Zahnradnabe
- 20: Zahnradnabe
- 28: Nabenöffnung 6-eckig
- 29: Nabenöffnung kreisförmig
- 31: Motorwelle
- 32: erste Zwischenwelle
- 33: zweite Zwischenwelle

Hier sind die besonderen Nabenformen für sich gesehen relevant und als separater Gegenstand identifizierbar. Dabei kann der Gegenstand besonders in dreikettrigen Getrieben zur Anwendung kommen.

### CMG 070

Figur 18 zeigt schematische Darstellungen von unterschiedlichen Nabenformen von Zahnrädern des Getriebes. Figur 2A zeigt dazu eine schematische Darstellung der Abtriebszahnräder 1, 2 oder 3 wie in Figur 1 gezeigt mit einer kreisförmigen Nabenöffnung 29 und einem Zahnkranz 9 mit den 21 Zähnen. Die Antriebszahnräder mit einer kreisförmigen Nabenöffnung 29 werden kraft- oder stoffschlüssig auf einer Stufe einer Welle fixiert, um die Drehmomente der Welle auf den Zahnkranz 9 zu übertragen.

Figur 2B zeigt ein gleiches Antriebszahnrad 1, 3 oder 5 wie in Figur 1 gezeigt mit einer sechseckigen Nabenöffnung 28, die ein gleichseitiges Sechseck aufweist. Das gleichseitige Sechseck ist formschlüssig auf einer sechseckigen Stufe einer Welle fixiert und überträgt die Drehmomente der Welle mittels Formschluss auf den Zahnkranz 9.

Figur 2C zeigt eine schematische Darstellung einer gestuften Welle, wie sie für die Zwischenwellen 32 bzw. 33 vorgesehen ist. Die Stufe 56 ist in Form und Größe an die Nabenöffnungen 28 bzw. 29 der Antriebszahnräder 3 bzw. 5 angepasst. Die Stufe 57 ist in Form und Größe an die Nabenöffnungen der Abtriebszahnräder 2 bzw. 4 angepasst. Zwischen Stufe 56 und 57 ist eine Absatzflanke 60 vorgesehen, mit der das Antriebszahnrad 3 bzw. 5 axial fixiert wird. Eine dritte Stufe 58 ist größer als die Stufe 57 und bildet zu der Stufe 57 hin eine Absatzflanke 59, sodass das Abtriebszahnrad 2 bzw. 4 an der Absatzflanke 59 axial fixiert ist.

Auf den gestuften Zwischenwellen 32 bzw. 34 sind die gleichgroßen Antriebszahnräder 3 bzw. 5, die mit einer kreisförmigen Nabenöffnung 29 versehen sind, mit ihren Zahnradblättern einseitig mit einer Klebstoffschicht 25 auf der Absatzflanke 60 fixiert. Eine weitere Klebstoffschicht 25 ist zwischen der Nabe 17 bzw. 18, der in Figur 1 gezeigten Zahnräder 3 bzw. 5 und der Mantelfläche der ersten Stufe 56 der Zwischenwelle 32 bzw. 33 vorgesehen.

Auf den gestuften Zwischenwellen 32 bzw. 34 sind die gleichgroßen Abtriebszahnräder 2 bzw. 4, die mit einer kreisförmigen Nabenöffnung 29 versehen sind, mit ihren Zahnradblättern einseitig mit einer Klebstoffschicht 25 auf der Absatzflanke 59 fixiert. Eine weitere Klebstoffschicht 25 ist zwischen der Nabe 15 bzw. 16, der in Figur 1 gezeigten Zahnräder 2 bzw. 4 und der Mantelfläche der zweiten Stufe 57 der Zwischenwelle 32 bzw. 33 vorgesehen.

Zum Verbinden der Zwischenwellen 32 bzw.33 mit den zugehörigen Abtriebzahnrädern 2 bzw. 4 wird zunächst ein Klebstoff auf die Absatzflanke 59 der Zwischenwelle 32 bzw. 33 aufgebracht. Auch die Mantelfläche der zweiten Stufe 57 wird mit Klebstoff beschichtet und das Abtriebszahnrad auf die zweite Wellenstufe 57 gepresst und der Klebstoff zu einer Klebstoffschicht 25 ausgehärtet.

Danach wird zum Verbinden der Zwischenwellen 32 bzw.33 mit den zugehörigen kleineren Antriebzahnrädern 3 bzw. 5
zunächst ein Klebstoff auf die Absatzflanke 60 der Zwischenwelle 32 bzw. 33 aufgebracht. Auch die Mantelfläche der ersten Stufe 56 wird mit Klebstoff beschichtet und das Antriebszahnrad 3 bzw. 5 auf die erste Wellenstufe 56 gepresst und der Klebstoff zu einer Klebstoffschicht 25 ausgehärtet.

Durch das Vorsehen einer Klebstoffschicht zwischen den Zahnradblättern und den Absatzflanken einer gestuften Welle entsteht eine kostengünstige und zuverlässige Verbindung zwischen Zahnradnabe und Welle, so dass Drehmomente der Welle sicher über die Zahnradnabe zu dem Zahnkranz eines Zahnrads übertragen werden können. Außerdem werden die Zahnräder durch die Absatzflanken der gestuften Welle ausgerichtet und axial fixiert, so dass eine zuverlässige Kettenführung durch den Zahnkranz gewährleistet ist.

Anstelle der Klebstoffschicht 25 kann eine Weichlot- oder Hartlotschicht vorgesehen sein. Lotschichten sind bei erhöhter Betriebstemperatur stabiler als Klebstoffschichten.

Anstelle der Klebstoffschicht 25 können Punktschweißverbindungen zwischen den Zahnradblättern und den Absatzflanken oder Schweißpunkte an dem Übergang von einer Wellenstufe zu den Zahnradblättern vorgesehen sein. Punktschweißverbindungen und Schweißpunkte beispielweise mittels Laserschweißen sind bei erhöhter Betriebstemperatur stabiler als Klebstoffschichten und verringern die Fertigungskosten.

Anstelle von Zahnrädern mit kreisförmigen Nabenöffnungen können auch Zahnräder mit sechseckiger Nabenöffnung mit einer Klebstoffschicht einseitig zwischen ihren Zahnradblättern und der Absatzflanke fixiert sein. Während nun die Übertragung des Drehmomentes von der Welle zu dem Zahnkranz über den Sechskant gewährleistet wird, sichert die Klebstoffschicht oder alternativ eine Weichlot- oder eine Hartlotschicht oder Schweißpunkte die axiale Ausrichtung und Fixierung der Zahnräder.

Anstelle von Zahnrädern mit einer sechseckigen Nabenöffnung sind Polygone mit ungerader Anzahl von Ecken bzw. Kanten einsetzbar. Damit ist für Abtriebsräder mit kleinen Durchmessen, die in vorteilhafter Weise ungerade Zähnezahlen aufweisen, der Vorteil verbunden, dass die Polygonecken nicht auf den geschwächten Bereich einer Zahnlücke, sondern auf den eines Zahnfußes ausgerichtet sind, wobei die ungerade Zähnezahl ein mehrfaches der ungeraden Polygonecken ist (5 zu 15; 5 zu 25; 7 zu 21; 7 zu 29).

Anstelle der Klebstoffschicht sind Passstifte, Nieten oder Schraubverbindungen, die in dem Zahnradblatt angeordnet sind und die in der gestuften Welle im Bereich der Absatzflanke fixiert sind, vorgesehen. Damit lassen sich auch Zahnräder mit kreisförmiger Nabenöffnung formschlüssig fixieren. Außerdem können höhere Betriebstemperaturen erreicht werden, ohne dass sich das Zahnrad auf der Welle axial nach thermische Zersetzung einer Klebstoffschicht verschieben kann.
Die übrigen Varianten und Anwendungsbeispiele der Ausführungsbeispiele insbesondere aus den Figuren 12 bis 15 sind auch auf das vorliegende Ausführungsbeispiel und das aus Fig. 16 und 17 anwendbar.

Hier sind die besonderen Nabenformen und die Klebung der Zahnräder auf den Naben für sich gesehen relevant und als separater Gegenstand identifizierbar. Dabei kann der Gegenstand besonders in dreikettrigen Getrieben zur Anwendung kommen.

### CMG 071

Figur 19 zeigt eine Prinzipskizze eines Antriebs 10 mit Elektromotor 50 und Getriebe für ein Kleinfahrzeug gemäß einem Ausführungsbeispiel der Anmeldung. Der Elektromotor 50 und das Getriebe sind in einem Gehäuse 42 angeordnet, aus dem beidseitig eine Ausgangswelle 34 drehbar in Drehdurchführungen 71 und 72 gelagert herausragt. Das Getriebe ist als dreikettriges Getriebe, d.h. als Getriebe mit drei Ketten 11, 12 und 13 ausgeführt und weist einen modularen Aufbau mit vier Baugruppen auf.

Eine Motorwellen-Baugruppe 61 umfasst als erste Baugruppe den Elektromotor 50 mit einer Motorwelle 31 auf der ein erstes Antriebszahnrad 1 angeordnet ist. Der Elektromotor 50 weist ein Elektromotorgehäuse 66 mit einem elektrischen Anschlussbereich 67, der an einem ersten Gehäusedeckel 43 angebracht ist, auf. Die Motorwelle 31 ragt gegenüberliegend zum Anschlussbereich 67 aus dem Elektromotorgehäuse 66 heraus und trägt das erste Antriebszahnrad 1.

Eine Ausgangswellen-Baugruppe 62 umfasst als zweite Baugruppe die beidseitig aus dem Gehäuse 42 herausragende Ausgangswelle 34, eine Freilaufwelle 39 und eine erste Zwischenwelle 32 des Getriebes. Die Freilaufwelle 39 ist auf der Ausgangswelle 34 drehbar gelagert und die erste Zwischenwelle 32 ist auf der Freilaufwelle 39 drehbar gelagert. Die Ausgangswelle 34 trägt innerhalb des Gehäuses 42 ein Messrad 49 zur Erfassung von Ausgangsdrehzahlen.

Die Freilaufwelle 39 trägt auf einer zum ersten Gehäusedeckel 43 gerichteten Seite einen Freilauf 40, der drehrichtungsabhängig mit der Ausgangswelle 34 klemmend in Eingriff bringbar ist. Die Freilaufwelle 39 weist auf einer zu einem zweiten Gehäusedeckel 44 hin gerichteten Seite einen Sitz 65 für eine Abtriebszahnrad-Baugruppe 64 auf. Die Zwischenwelle 32 trägt ein erstes Abtriebszahnrad 2 einer ersten Untersetzungsstufe 21 und ein zweites Antriebszahnrad 3 einer zweiten Untersetzungsstufe 22 des dreikettrigen Getriebes.

Das erste Abtriebszahnrad 2 auf der ersten Zwischenwelle 32 , ist gegenüberliegend zu dem ersten Antriebzahnrad 1 der Motorwellen-Baugruppe 61 derart ausgerichtet, dass die erste Kette 11 der ersten Untersetzungsstufe 21 mit Zahnkränzen der Zahnräder 1 und 2 in Eingriff steht.

Das zweite Antriebszahnrad 3 auf der ersten Zwischenwelle 32 ist gegenüberliegend zu einem zweiten Abtriebzahnrad 4 derart ausgerichtet, dass eine zweite Kette 12 der zweiten Untersetzungsstufe 22 mit Zahnkränzen der Zahnräder 3 und 4 in Eingriff steht.

Eine Wellenzapfen-Baugruppe 63 weist als dritte Baugruppe einen Wellenzapfen 35 und eine zweite Zwischenwelle 33 auf, die auf dem Wellenzapfen 35 drehbar gelagert ist.

Der Wellenzapfen 35 weist zu dem zweiten Gehäusedeckel 44 hin einen Wellenzapfenflansch 36 auf, mit dem der Wellenzapfen 35 an dem zweiten Gehäusedeckel 44 fixiert ist. Auf der zweiten Zwischenwelle 33 ist das zweite Abtriebszahnrad 4 und ein drittes Antriebszahnrad 5 einer dritten Untersetzungsstufe 23 fixiert.

Eine Abtriebszahnrad-Baugruppe 64 weist ein Abtriebzahnrad 6 und eine Nabe 19 des Abtriebzahnrads 6 auf. Die Nabe 19 ist auf dem Sitz 65 der Freilaufwelle 39 fixiert. Das Abtriebzahnrad 6 ist derart ausgerichtet, dass eine dritte Kette 13 der dritten Untersetzungsstufe 23 mit Zahnkränzen der Zahnräder 5 und 6 in Eingriff steht.

Zur Montage wird zunächst der erste Gehäusedeckel 43 zur Aufnahme der Motorwellenbaugruppe 61 und der Ausgangswellen-Baugruppe 62 hergestellt.

Außerdem wird die Motorwellenbaugruppe 61 mit der Motorwelle 31 und dem auf der Motorwelle 31 fixierten erstes Antriebszahnrad 1 als eingeständige erste Baugruppe gefertigt. Die Ausgangswellen-Baugruppe 62 wird mit der Ausgangswelle 34, der Freilaufwelle 39 und der erste Zwischenwelle 32 des Getriebes als eigenständige zweite Baugruppe produziert.

Dann wird die Motorwellen-Baugruppe 61 unter Zugriffsmöglichkeit auf den elektrischen Anschlussbereich 67 auf dem ersten Gehäusedeckel 43 montiert, und die Außenwelle 34 der Ausgangswellen-Baugruppe 62 wird in die erste Drehdurchführung 71 des ersten Gehäusedeckels 43 eingeführt.

Dabei werden die Baugruppen 61 und 62 derart an dem ersten Gehäusedeckel 43 angeordnet, dass das erste Antriebzahnrad 1 der Motorwellen-Baugruppe 61 auf das erste Abtriebszahnrad 2 der Ausgangswellen-Baugruppe 62 ausgerichtet ist und dass die erste Kette 11 der ersten Untersetzungsstufe 21 mit Zahnkränzen der Zahnräder 1 und 2 in Eingriff steht.

Danach wird die Wellenzapfen-Baugruppe 63 mit dem Wellenzapfen 35 und der zweiten Zwischenwelle 33 des Getriebes als eigenständige dritte Baugruppe bereitgestellt.

Die Wellenzapfen-Baugruppe 63 wird in Bezug auf die Ausgangswellen-Baugruppe 62 so ausgerichtet, dass das zweite Antriebszahnrad 3 auf der ersten Zwischenwelle 32 gegenüberliegend zu dem zweiten Abtriebzahnrad 4 der zweiten Zwischenwelle angeordnet ist, und dass eine zweite Kette 12 der zweiten Untersetzungsstufe 22 mit Zahnkränzen der Zahnräder 3 und 4 in Eingriff steht.

Die Abtriebzahnrad-Baugruppe 64 wird dann mit der Nabe 19 und dem Abtriebzahnrad 6 als eigenständige vierte Baugruppe bereitgestellt. Dann wird die Abtriebzahnrad-Baugruppe 64 auf dem Sitz 65 der Freilaufwelle 39 derart fixiert und ausgerichtet, dass die dritte Kette 13 der dritten Untersetzungsstufe 23 mit Zahnkränzen der Zahnräder 5 und 6 in Eingriff steht.

Alternativ zu der vorstehenden Sequenz kann auch in einem ersten Schritt die Motorwellen-Baugruppe 61 unter Zugriffsmöglichkeit auf den elektrischen Anschlussbereich 67 auf dem ersten Gehäusedeckel 43 montiert werden, wobei das Zahnrad 1 noch weggelassen wir und der Ausgangswellen-Baugruppe zugeschlagen wird. In einem zweiten Schritt wird dann eine Einheit aus der Ausgangswellen-Baugruppe 62, aus der Wellenzapfen-Baugruppe 63 und aus der Abtriebzahnrad-Baugruppe 64 hergestellt, wobei die einzelnen Wellen durch die Ketten 11, 12, und 13 zusammenhängen. Diese Einheit aus Ausgangswellen-Baugruppe 62, Wellenzapfen-Baugruppe 63 und Abtriebzahnrad-Baugruppe 64 wird dann in den Gehäusedeckel eingesetzt, wobei das Zahnrad 1 auf die Motorwelle 31 aufgesetzt wird.

Ein zweiter Gehäusedeckel 44 steht bereit und wird auf Abstandshalter 48 unter Einführen der Ausgangswelle 34 in die Drehdurchführung 72 aufgesetzt. Auf der zweiten Gehäusehälfte 44 wird außerdem fluchtend mit der Motorwelle 31 der Wellenzapfen 35 der Wellenzapfen-Baugruppe 63 montiert. Danach wird der Wellenzapfenflansch am zweiten Gehäusedeckel befestigt.

Das Gehäusemittelteil 45 schützt den Antrieb 10 vor Verunreinigungen und ist mediendicht mit den Gehäusedeckeln 43 und 44 verbunden. Auf die Ausgangswelle 34 wird zum Abschluss ein Ausgangszahnrad 7 in Pfeilrichtung B aufgesetzt.

Die Antriebszahnräder 1, 3 und 5 weisen in dem gezeigten Getriebe die gleiche Anzahl 21 von Zähnen auf. Auch die Abtriebszahnräder 2 und 4 haben eine gleiche Anzahl 75 von Zähnen. Das dritte Abtriebszahnrad 6 weist eine geringfügig verminderte Zähnezahl gegenüber den Abtriebszahnräder 2 und 4 von 57 auf. Aus den Verhältnissen der Anzahl der Zähne der Zahnkränze der drei Untersetzungsstufen 21, 22 und 23 ergibt sich eine Gesamtuntersetzung U von U = 75/21x75/21x57/21 ≈ 35:1.

Der modulare Aufbau des Antriebs hat den Vorteil, dass die vier Baugruppen einzeln gefertigt und gelagert werden können. Die Montage des Antriebs kann kostengünstig in einer Massenproduktion durchgeführt werden. Die Montage der Baugruppen zu Antrieben kann mit Fertigungsautomaten kostengünstig gestaltet werden. Da jede Baugruppe für sich einer Qualitätssicherung zugeführt werden kann, werden die Kosten bei Fertigungsmängeln vermindert.

Durch die von der Motorwelle unabhängige Lagerung der mit der Motorwelle fluchtenden zweiten Zwischenwelle wird die Motorwelle nicht zusätzlich belastet. Weiterhin wird durch Vormontage der Wellenzapfenbaugruppe die Montage des dreikettrigen Getriebes erleichtert. Wenn zunächst die erste Kette der ersten Untersetzungsstufe zwischen der ersten und zweiten Baugruppe aufgebracht ist, kann anschließend die Kette der zweiten Untersetzungsstufe mit der vormontierten dritten Baugruppe verbunden werden. Nach Anbringen der vierten Baugruppe kann schließlich die dritte Kette zwischen dritter und vierter Baugruppe montiert werden. Erst danach wird der zweite Gehäusedeckel unter Fixieren des Wellenzapfens im Inneren sowie unter Durchführen eines Ausgangswellenendes nach Außen aufgebracht.

Anstelle von Abstandhaltern 48 zwischen den Gehäusedeckeln, können die Gehäusedeckel zu der tragenden Konstruktion eines Rahmens eines Kleinfahrzeugs gehören und der Abstand zwischen den beiden Gehäusedeckeln wird durch die tragenden Konstruktion bereitgestellt. Damit ist es möglich, den Raumbedarf des Antriebs zu verringern und den Antrieb in die Tragkonstruktion des Kleinfahrzeugs zu integrieren.

Anstelle der Abstandhalter kann auch ein zweiteiliges Gehäusemittelteil diese Funktion übernehmen, wobei ein zweiter Teil des zweiteiligen Gehäusemittelteils eine Inspektions- und Montagehilfsöffnung abdeckt. Das hat den Vorteil, dass ein Antriebsgehäuse zur Verfügung steht, das an beliebige Kleinfahrzeuge angebaut werden kann.

Anstelle der Lagerung der zweiten Zwischenwelle 33 auf einem eigenen Wellenzapfen 35 kann eine als Hohlwelle aufgebildete zweite Zwischenwelle 33 auch auf der Motorwelle 31 gelagert werden. Damit ist es möglich ein exaktes Fluchten der Zwischenwelle 33 mit der Motorwelle 31 unabhängig von Fertigungs- und Montagetolleranzen eines Gehäusedeckels sicherzustellen.

Die übrigen Varianten und Anwendungsbeispiele der Ausführungsbeispiele insbesondere aus den Figuren 12 bis 18 sind auch auf das vorliegende Ausführungsbeispiel anwendbar.

**Bezugszeichenliste für Fig. 19**

| | | | |
|---|---|---|---|
| 1 | erstes Antriebszahnrad der ersten Untersetzungsstufe | 31 | Motorwelle |
| | | 32 | erste Zwischenwelle |
| 2 | erstes Abtriebszahnrad der ersten Untersetzungsstufe | 33 | zweite Zwischenwelle |
| | | 35 | Wellenzapfen |
| 3 | zweites Antriebszahnrad der zweiten Untersetzungsstufe | 36 | Wellenzapfenflansch |
| | | 34 | Ausgangswelle |
| 4 | zweites Abtriebszahnrad der zweiten Untersetzungsstufe | 39 | Freilaufwelle |
| | | 40 | Freilauf |
| 5 | drittes Antriebszahnrad der dritten Untersetzungsstufe | 42 | Gehäuse |
| | | 43 | erster Gehäusedeckel |
| 6 | drittes Abtriebszahnrad der dritten Untersetzungsstufe | 44 | (zweiter) Gehäusedeckel |
| | | 45 | Gehäusemittelteil |
| 7 | Antriebszahnrad des Antriebs | 48 | Abstandshalter |
| 10 | Antrieb | 49 | Messrad |
| 11 | erste Kette der ersten Untersetzungsstufe | 50 | Elektromotor |
| | | 60 | zweiter Ansatzflanke zwischen Stufe 57 und 56 |
| 12 | zweite Kette der ersten Untersetzungsstufe | | |
| | | 61 | Motorwellen-Baugruppe (erste Baugruppe) |
| 13 | dritte Kette der ersten Untersetzungsstufe | | |
| | | 62 | Ausgangswellen-Baugruppe (zweite Baugruppe) |
| 19 | Zahnradnabe von Zahnrad 6 | | |
| 21 | erste Untersetzungsstufe | 63 | Wellenzapfen-Baugruppe (dritte Baugruppe) |
| 22 | zweite Untersetzungsstufe | | |
| 23 | dritte Untersetzungsstufe | | |
| 64 | Abtriebszahnrad-Baugruppe (vierte Baugruppe) | 71 | erste Drehdurchführung |
| | | 72 | (zweite) Drehdurchführung |
| 65 | Sitz des Abtriebszahnrads | | |
| 66 | Elektromotorgehäuse | | |
| 67 | elektrischer Anschlussbereich | | |

### CMG 072

Figur 20 zeigt eine Prinzipskizze eines Antriebs 10 mit Elektromotor 50 und Getriebe für ein Kleinfahrzeug gemäß einem Ausführungsbeispiel der Anmeldung. Der Elektromotor 50 und das Getriebe sind in einem Gehäuse 42 angeordnet, aus dem beidseitig eine Ausgangswelle 34 herausragt. Das Getriebe ist als dreikettriges Getriebe, d.h. als Getriebe mit drei Ketten 11, 12 und 13 ausgeführt.

Dazu weist eine erste Untersetzungsstufe 21 ein erstes Antriebszahnrad 1 auf, das auf einer Motorwelle 31 des Elektromotors 50 fixiert ist. Das erste Antriebszahnrad 1 ist mechanisch über die erste Kette 11 mit einem ersten Abtriebszahnrad 2 drehbar verbunden, das auf einer ersten Zwischenwelle 32 angeordnet ist.

Die zweite Untersetzungsstufe 22 weist ein zweites Antriebszahnrad 3 auf, das auf der ersten Zwischenwelle 32 zusammen mit dem ersten Abtriebszahnrad 2 fixiert ist. Das zweite Antriebszahnrad 3 ist mechanisch über die zweite Kette 12 mit einem zweiten Abtriebszahnrad 4 drehbar verbunden, das auf einer zweiten Zwischenwelle 33 fixiert ist.

Die dritte Untersetzungsstufe 23 weist ein drittes Antriebszahnrad 5 auf, das auf der zweiten Zwischenwelle 33 zusammen mit dem zweiten Abtriebszahnrad 4 fixiert ist. Das dritte Antriebszahnrad 5 ist mechanisch über die dritte Kette 13 mit einem dritten Abtriebszahnrad 6 drehbar verbunden.

Die beidseitig aus dem Gehäuse 42 herausragende Ausgangswelle 34 ist in zwei Drehdurchführungen 71 und 72 von zwei sich gegenüberliegenden Gehäusedeckeln 43 und 44 gelagert. Die Antriebswelle 34 trägt zu einem ersten Gehäusedeckel 43 hin ein Messrad 49 zur Messung der Ausgangsdrehzahl der Ausgangswelle 34. Auf der Ausgangswelle 34 sind zwei Hohlwellen 32 und 39 als doppelte Hohlwelle drehbar gelagert. Eine innere Hohlwelle 68 ist als Freilaufwelle 39 ausgebildet. Die Freilaufwelle 39 trägt auf einer zu dem ersten Gehäusedeckel 43 gerichteten Seite einen Freilauf 40, der drehrichtungsabhängig mit der Ausgangswelle 34 klemmend in Eingriff bringbar ist. Die Freilaufwelle 39 weist auf einer zu einem zweiten Gehäusedeckel 44 hin gerichteten Seite einen Sitz 65 für das dritte Abtriebzahnrad 6 der dritten Untersetzungsstufe 23 auf.

Auf der Freilaufwelle 39 ist die Zwischenwelle 32 als äußere Hohlwelle 69 der doppelten Hohlwelle mit dem Abtriebszahnrad 2 und dem Antriebszahnrad 3 der Untersetzungsstufen 21 bzw. 22 drehbar gelagert. Dabei ist das Abtriebszahnrad 2 auf das Antriebzahnrad 1 der Motorwelle 31 und das Antriebszahnrad 3 auf das Abtriebszahnrad 4 der zweiten Untersetzungsstufe 22 ausgerichtet.

Die Freilaufwelle 39 ist mehrstufig aufgebaut und weist eine erste Stufe für den Sitz 65 mit einer Ansatzflanke auf, sodass eine Nabe 19 des Abtriebzahnrades 6 axial gesichert ist. Auf einer zweiten Stufe sind Lager der Zwischenwelle 32 angeordnet, die durch eine weitere Ansatzflanke zu einer dritten Stufe vor axialer Verschiebung gesichert sind. Dabei nimmt der Außendurchmesser der Freilaufwelle 39 von Stufe zu Stufe zu.

Die von der Ausgangswelle 34 getragene doppelte Hohlwelle bildet eine vormontierbare Baugruppe des dreikettrigen Getriebes und unterliegt vor dem Einbau in den Antrieb einer Qualitätskontrolle.

Die Antriebszahnräder 1, 3 und 5 weisen in dem gezeigten Getriebe die gleiche Anzahl 21 von Zähnen auf. Auch die Abtriebszahnräder 2 und 4 haben eine gleiche Anzahl 75 von Zähnen. Das dritte Abtriebszahnrad 6 auf dem Sitz 65 der Freilaufwelle 39 weist eine geringfügig verminderte Zähnezahl gegenüber den Abtriebszahnräder 2 und 4 von 57 auf. Aus den Verhältnissen der Anzahl der Zähne der Zahnkränze der drei Untersetzungsstufen 21, 22 und 23 ergibt sich eine Gesamtuntersetzung U von U = 75/21x75/21x57/21 ≈ 35:1.

Mit diesem Antrieb wird mit der ersten Untersetzungsstufe 21 das relativ geringe Motordrehmoment um den Faktor 75/21 auf eine höheres Drehmoment der ersten Zwischenwelle 32 der doppelten Hohlwelle erhöht, und die Drehzahl der ersten Zwischenwelle 32 um den gleichen Faktor vermindert. Da in diesem Getriebe das Untersetzungsverhältnis der ersten Untersetzungsstufe 21 gleich dem Untersetzungsverhältnis der zweiten Untersetzungsstufe 22 ist, wird mit der zweiten Untersetzungsstufe 22 das Drehmoment um den gleichen Faktor weiter erhöht und die Drehzahl der zweiten Zwischenwelle 33 um den gleichen Faktor weiter vermindert. Schließlich wird das Drehmoment mit der dritten Untersetzungsstufe 23 nochmals um einen Faktor 57/21 erhöht, sodass ein Ausgangsdrehmoment über die Freilaufwelle 39 der doppelten Hohlwelle an der Ausgangswelle 34 zur Verfügung steht. Das Ausgangsdrehmoment ist um den Faktor von ca. 35 höher, als das Motordrehmoment und reicht aus, um ein angepasstes Anfahrdrehmoment auf ein Laufrad eines Kleinfahrzeugs zu übertragen. Dabei ist die Ausgangsdrehzahl der Ausgangswelle 34 um die Gesamtuntersetzung des Getriebes von ca. 35 gegenüber der Motordrehzahl vermindert.

Das in Figur 1 gezeigte Ausführungsbeispiel hat den Vorteil, dass durch die doppelte Hohlwellenstruktur ein kompakter raumsparender Antrieb geschaffen wird. Dabei kann die Ausgangswelle als Tretlagerwelle eingesetzt werden, wobei der Freilauf sicherstellt, dass die Pedalen von Tretkurbeln in Ruheposition gehalten werden können, obgleich der Elektromotor das Abtriebszahnrad 6 antreibt. Durch die Anordnung des Freilaufs gegenüberliegend zu dem in den Antrieb eingebauten Elektromotor wird der dort vorhandene Raum genutzt und eine kompakte Antriebseinheit geschaffen.

Die übrigen Varianten und Anwendungsbeispiele der Ausführungsbeispiele insbesondere aus den Figuren 12 bis 19 sind auch auf das vorliegende Ausführungsbeispiel anwendbar.

**Bezugszeichenliste zu Figur 20**

| | | | |
|---|---|---|---|
| 1 | erstes Antriebszahnrad der ersten Untersetzungsstufe | 3 | zweites Antriebszahnrad der zweiten Untersetzungsstufe |
| 2 | erstes Abtriebszahnrad der ersten Untersetzungsstufe | 4 | zweites Abtriebszahnrad der zweiten Untersetzungsstufe |
| 5 | drittes Antriebszahnrad der dritten Untersetzungsstufe | 32 | erste Zwischenwelle |
| | | 33 | zweite Zwischenwelle |
| 6 | drittes Abtriebszahnrad der dritten Untersetzungsstufe | 34 | Ausgangswelle |
| | | 39 | Freilaufwelle |
| 10 | Antrieb | 40 | Freilauf |
| 11 | erste Kette der ersten Untersetzungsstufe | 42 | Gehäuse |
| | | 43 | erster Gehäusedeckel |
| 12 | zweite Kette der ersten Untersetzungsstufe | 44 | zweiter Gehäusedeckel |
| | | 50 | Elektromotor |
| 13 | dritte Kette der ersten Untersetzungsstufe | 65 | Sitz des Abtriebszahnrads |
| | | 66 | Elektromotorgehäuse |
| 19 | Zahnradnabe von Zahnrad 6 | 67 | elektrischer Anschlussbereich |
| 21 | erste Untersetzungsstufe | 68 | innere Hohlwelle |
| 22 | zweite Untersetzungsstufe | 69 | äußere Hohlwelle |
| 23 | dritte Untersetzungsstufe | 71 | erste Drehdurchführung |
| 31 | Motorwelle | 72 | (zweite) Drehdurchführung |

Hier ist das Messrad 49 zur Messung der Ausgangsdrehzahl der Ausgangswelle 34 für sich gesehen relevant und als separater Gegenstand identifizierbar. Dabei kann der Gegenstand besonders in dreikettrigen Getrieben zur Anwendung kommen, denn der hier vorgesehene Montageort ist besonders platzsparend.

### CMG 073

Figur 21 zeigt eine Prinzipskizze eines Antriebs 10 mit Elektromotor 50 und Getriebe für ein Kleinfahrzeug gemäß einem Ausführungsbeispiel der Anmeldung. Der Elektromotor 50 und das Getriebe sind in einem Gehäuse 42 angeordnet, aus dem einseitig eine Ausgangswelle 34 herausragt. Das Getriebe ist als dreikettriges Getriebe, d.h. als Getriebe mit drei Ketten 11, 12 und 13 ausgeführt.

Die einseitig aus dem Gehäuse 42 herausragende Ausgangswelle 34 trägt zu einem ersten Gehäusedeckel 43 hin ein Messrad 49 zur Messung der Ausgangsdrehzahl der Ausgangswelle 34. Auf der Ausgangswelle 34 sind eine innere Hohlwellen 68 und eine äußere Hohlwelle 69 koaxial zueinander angeordnet. Die innere Hohlwelle 68 ist mit der Ausgangswelle 34 starr verbunden. Die innere Hohlwelle 68 weist auf einer zu einem zweiten Gehäusedeckel 44 hin gerichteten Seite einen Sitz 65 für das dritte Abtriebzahnrad 6 der dritten Untersetzungsstufe 23 auf.

Auf der inneren Hohlwelle 68 ist die Äußere Hohlwelle 69 drehbar angeordnet und bildet die erste Zwischenwelle 32 mit dem Abtriebszahnrad 2 und dem Antriebszahnrad 3 der Untersetzungsstufen 21 bzw. 22. Dabei ist das Abtriebszahnrad 2 auf das Antriebzahnrad 1 der Motorwelle 31 und das Antriebszahnrad 3 auf das Abtriebszahnrad 4 der zweiten Untersetzungsstufe 22 ausgerichtet.

Die innere Hohlwelle 68 ist mehrstufig aufgebaut und weist eine erste Stufe für den Sitz 65 mit einer Ansatzflanke auf, sodass eine Nabe 19 des Abtriebzahnrades 6 axial gesichert ist. Auf einer zweiten Stufe sind Lager der Zwischenwelle 32 angeordnet, die durch eine weitere Ansatzflanke zu einer dritten Stufe vor axialer Verschiebung gesichert sind. Dabei nimmt der Außendurchmesser der inneren Hohlwelle 68 von Stufe zu Stufe zu.

Die von der Ausgangswelle 34 getragene Doppelwelle bildet eine vormontierbare Baugruppe des dreikettrigen Getriebes und unterliegt vor dem Einbau in den Antrieb einer Qualitätskontrolle. Auf der Ausgangswelle 34, die einseitig aus dem Gehäuse 42 herausragt, ist zum Antrieb des Laufrades 26 außerhalb des Gehäuses 42 ein Ausgangszahnrad 7 angeordnet. Das Ausgangszahnrad 7 ist über den Kettentrieb 14 und über ein Antriebszahnrad 8 mit einer Nabenschaltung 41 des Laufrades 26 eines Kleinfahrzeugs gekoppelt.

Das in Figur 21 gezeigte Ausführungsbeispiel hat den Vorteil, dass durch die doppelte Hohlwellenstruktur ein kompakter raumsparender Antrieb 10 geschaffen wird. Dabei wird die Ausgangswelle 34 durch die innere Hohlwelle 68 verstärkt, sodass beide zusammen eine größeres Flächenträgheitsmoment aufweisen. Außerdem kann für die äußere Hohlwelle eine robustere Lagerung gegenüber einer Lagerung direkt auf der Ausgangswelle vorgesehen werden. Mit diesem Antriebskonzept wird eine reiner Elektroantrieb verwirklicht.

Anstelle der Fixierung des Abtriebszahnrades 6 mit seiner Nabe 19 auf dem Sitz 65 der inneren Hohlwelle 68 kann das Abtriebszahnrades 6 mit seiner Nabe 19 auch auf der Abtriebswelle 34 angeordnet sein. Das hat den Vorteil, dass die Länge der inneren Hohlwelle auf die erforderliche Länge zur Führung der äußeren Hohlwelle verkürzt werden kann, womit Raum und Gewicht eingespart wird.

Die übrigen Varianten und Anwendungsbeispiele der Ausführungsbeispiele insbesondere aus den Figuren 12 bis 19 sind auch auf das vorliegende Ausführungsbeispiel anwendbar.

**Bezugszeichenliste**

| | | | |
|---|---|---|---|
| 1 | erstes Antriebszahnrad der ersten Untersetzungsstufe | 14 | Kettentrieb |
| 2 | erstes Abtriebszahnrad der ersten Untersetzungsstufe | 19 | Zahnradnabe von Zahnrad 6 |
| | | 21 | erste Untersetzungsstufe |
| 3 | zweites Antriebszahnrad der zweiten Untersetzungsstufe | 22 | zweite Untersetzungsstufe |
| | | 23 | dritte Untersetzungsstufe |
| 4 | zweites Abtriebszahnrad der zweiten Untersetzungsstufe | 26 | Laufrad |
| | | 31 | Motorwelle |
| 5 | drittes Antriebszahnrad der dritten Untersetzungsstufe | 32 | erste Zwischenwelle |
| | | 33 | zweite Zwischenwelle |
| 6 | drittes Abtriebszahnrad der dritten Untersetzungsstufe | 34 | Ausgangswelle |
| | | 41 | Nabe des Laufrads |
| 7 | Antriebszahnrad des Antriebs | 42 | Gehäuse |
| 8 | Antriebszahnrad des Laufrades | 43 | erster Gehäusedeckel |
| 10 | Antrieb | 44 | zweiter Gehäusedeckel |
| 11 | erste Kette der ersten Untersetzungsstufe | 49 | Messrad |
| | | 50 | Elektromotor |
| 12 | zweite Kette der ersten Untersetzungsstufe | 65 | Sitz des Abtriebszahnrads |
| 13 | zungsstufedritte Kette der ersten Untersetzungsstufe | 68 | innere Hohlwelle |
| | | 69 | äußere Hohlwelle |

Hier ist das das Vorsehen des Getriebes aus Fig. 20 in einem Fahrzeug für sich gesehen relevant und als separater Gegenstand identifizierbar.

### CMG 074

Figur 22 zeigt eine Prinzipskizze eines Antriebs 10 mit Elektromotor 50 und Getriebe für ein Kleinfahrzeug gemäß einem weiteren Ausführungsbeispiel der Anmeldung. Der Elektromotor 50 und das Getriebe sind in einem Gehäuse 42 angeordnet, aus dem beidseitig eine Ausgangswelle 34 herausragt. Das Getriebe ist als dreikettriges Getriebe, d.h. als Getriebe mit drei Ketten 11, 12 und 13 ausgeführt.

Dazu weist eine erste Untersetzungsstufe 21 ein erstes Antriebszahnrad 1 auf, das auf einer Motorwelle 31 des Elektromotors 50 fixiert ist. Das erste Antriebszahnrad 1 ist mechanisch über die erste Kette 11 mit einem ersten Abtriebszahnrad 2 drehbar verbunden, das auf einer ersten Zwischenwelle 32 angeordnet ist.

Die zweite Untersetzungsstufe 22 weist ein zweites Antriebszahnrad 3 auf, das auf der ersten Zwischenwelle 32 zusammen mit dem ersten Abtriebszahnrad 2 fixiert ist. Das zweite Antriebszahnrad 3 ist mechanisch über die zweite Kette 12 mit einem zweiten Abtriebszahnrad 4 drehbar verbunden, das auf einer zweiten Zwischenwelle 33 fixiert ist.

Die dritte Untersetzungsstufe 23 weist ein drittes Antriebszahnrad 5 auf, das auf der zweiten Zwischenwelle 33 zusammen mit dem zweiten Abtriebszahnrad 4 fixiert ist. Das dritte Antriebszahnrad 5 ist mechanisch über die dritte Kette 13 mit einem dritten Abtriebszahnrad 6 drehbar verbunden.

Die beidseitig aus dem Gehäuse 42 herausragende Ausgangswelle 34 ist in zwei Drehdurchführungen 71 und 72 von zwei sich gegenüberliegenden Gehäusedeckeln 43 und 44 gelagert. Die Antriebswelle 34 trägt zu einem ersten Gehäusedeckel 43 hin ein Messrad 49 zur Messung der Ausgangsdrehzahl der Ausgangswelle 34. Auf der Ausgangswelle 34 sind zwei Hohlwellen 32 und 39 als doppelte Hohlwelle drehbar gelagert. Eine innere Hohlwelle 68 ist als Freilaufwelle 39 ausgebildet. Die Freilaufwelle 39 trägt auf einer zu dem ersten Gehäusedeckel 43 gerichteten Seite einen inneren Freilauf 40, der mit der Ausgangswelle 34 klemmend in Eingriff bringbar ist. Die Freilaufwelle 39 weist auf einer zu einem zweiten Gehäusedeckel 44 hin gerichteten Seite einen Sitz 65 für das dritte Abtriebzahnrad 6 der dritten Untersetzungsstufe 23 auf.

Die Klemmrichtung des inneren Freilaufs 40 entspricht einer Vorwärts-Drehrichtung der Ausgangswelle 34. Wenn sich die Ausgangswelle 34 in der Vorwärts-Drehrichtung schneller als die Freilaufwelle 39 dreht, steht der Freilauf 40 mit der Ausgangswelle 34 in Vorwärtsrichtung klemmend in Eingriff. Wenn sich dagegen die Freilaufwelle 39 in Vorwärts-Drehrichtung schneller als die Ausgangswelle 34 dreht, löst sich der innere Freilauf 40 aus dem Eingriff.

Die Klemmrichtung des äußeren Freilaufs 41 entspricht einer Vorwärts-Drehrichtung der ersten Zwischenwelle 33. Wenn sich die erste Zwischenwelle 33 in der Vorwärts-Drehrichtung schneller als die Freilaufwelle 39 dreht, steht der äußere Freilauf 41 mit der ersten Zwischenwelle klemmend im Eingriff. Wenn sich dagegen die Freilaufwelle 39 in der Vorwärts-Drehrichtung schneller als die erste Zwischenwelle 33 dreht, löst sich der äußere Freilauf 41 aus dem Eingriff.

Auf dem aus dem Gehäuse herausragenden Enden der Ausgangswelle 34 sind Pedale 74 aufweisende Tretkurbeln 75 angeordnet. Einseitig ist zwischen einer Tretkurbel 75 und dem Gehäuse 42 ein Ausgangszahnrad 7 angeordnet das über einen nicht gezeigten Kettentrieb ein nicht gezeigtes Laufrad eines Kleinfahrzeugs antreibt.

Auf der Freilaufwelle 39 ist die Zwischenwelle 32 als äußere Hohlwelle 69 der doppelten Hohlwelle mit dem Abtriebszahnrad 2 und dem Antriebszahnrad 3 der Untersetzungsstufen 21 bzw. 22 drehbar gelagert. Dabei ist das Abtriebszahnrad 2 auf das Antriebzahnrad 1 der Motorwelle 31 und das Antriebszahnrad 3 auf das Abtriebszahnrad 4 der zweiten Untersetzungsstufe 22 ausgerichtet.

Die Freilaufwelle 39 ist mehrstufig aufgebaut und weist eine erste Stufe für den Sitz 65 mit einer Ansatzflanke auf, sodass eine Nabe 19 des Abtriebzahnrades 6 axial gesichert ist. Auf einer zweiten Stufe sind Lager der Zwischenwelle 32 angeordnet, die durch eine weitere Ansatzflanke zu einer dritten Stufe vor axialer Verschiebung gesichert sind. Dabei nimmt der Außendurchmesser der Freilaufwelle 39 von Stufe zu Stufe zu.

Die von der Ausgangswelle 34 getragene Doppelwelle bildet eine vormontierbare Baugruppe des dreikettrigen Getriebes und unterliegt vor dem Einbau in den Antrieb einer Qualitätskontrolle.

Das in Figur 22 gezeigte Ausführungsbeispiel hat den Vorteil, dass durch den schaltbaren Freilauf sowohl ein Vorwärtslauf als auch ein Rückwärtslauf des Elektromotors durch die Tretkurbeln unterstützt werden können. Außerdem ist es auch möglich die Pedalen der Tretkurbeln in einer Ruhposition beim Vorwärts- bzw. Rückwärtslauf des Elektromotors zu belassen, ohne dass die Pedalen gegen die Beine eines Fahrers des Kleinfahrzeugs schlagen. Schließlich verbessert der Antrieb mit schaltbarem Freilauf die Manövrierfähigkeit von mehrrädrigen Kleinfahrzeugen.

Darüber hinaus wird durch die doppelte Hohlwellenstruktur ein kompakter raumsparender Antrieb geschaffen. Dabei wird die Ausgangswelle als Tretlagerwelle eingesetzt, wobei der geschaltete Freilauf sicherstellt, dass die Pedalen von Tretkurbeln in Ruheposition gehalten werden können, obgleich der Elektromotor das Abtriebszahnrad 6 antreibt. Durch die Anordnung des Freilaufs gegenüberliegend zu dem in den Antrieb eingebauten Elektromotor wird der dort vorhandene Raum genutzt und eine kompakte Antriebseinheit geschaffen.

Anstelle der Anordnung des Ausgangszahnrades 7 auf dem herausstehenden Ende der Ausgangswelle 34 ist es möglich, die innere Hohlwelle 68 aus dem Gehäuse einseitig herausragen zu lassen und das Ausgangszahnrades 7 auf diesem herausragenden Ende der Freilaufwelle zu fixieren. Das hat den Vorteil, das die Motorwelle 31 unabhängig von dem Betätigen der Tretkurbeln ununterbrochen mit dem Ausgangszahnrad 7verbunden ist.

Die übrigen Varianten und Anwendungsbeispiele der Ausführungsbeispiele insbesondere aus den Figuren 12 bis 21 sind auch auf das vorliegende Ausführungsbeispiel anwendbar.

Hier ist das das Vorsehen des Freilaufs in zwei Varianten in einem dreikettrigen Getriebe für sich gesehen relevant und als separater Gegenstand identifizierbar.

**Bezugszeichenliste für Fig. 22**

| | | | |
|---|---|---|---|
| 1 | erstes Antriebszahnrad der ersten Untersetzungsstufe | 21 | erste Untersetzungsstufe |
| | | 22 | zweite Untersetzungsstufe |
| 2 | erstes Abtriebszahnrad der ersten Untersetzungsstufe | 23 | dritte Untersetzungsstufe |
| | | 31 | Motorwelle |
| 3 | zweites Antriebszahnrad der zweiten Untersetzungsstufe | 32 | erste Zwischenwelle |
| | | 33 | zweite Zwischenwelle |
| 4 | zweites Abtriebszahnrad der zweiten Untersetzungsstufe | 34 | Ausgangswelle |
| | | 39 | Freilaufwelle |
| 5 | drittes Antriebszahnrad der dritten Untersetzungsstufe | 40 | innerer Freilauf |
| | | 41 | äußerer Freilauf [Text ergänzen] |
| 6 | drittes Abtriebszahnrad der dritten Untersetzungsstufe | 42 | Gehäuse |
| | | 43 | erster Gehäusedeckel |
| 10 | Antrieb | 44 | zweiter Gehäusedeckel |
| 11 | erste Kette der ersten Untersetzungsstufe | 50 | Elektromotor |
| | | 65 | Sitz des Abtriebszahnrads |
| 12 | zweite Kette der ersten Untersetzungsstufe | 71 | erste Drehdurchführung |
| | | 72 | (zweite) Drehdurchführung |
| 13 | dritte Kette der ersten Untersetzungsstufe | 73 | Schalteinrichtung eines Freilaufs |
| | | 74 | Pedale |
| 19 | Zahnradnabe von Zahnrad 6 | 75 | Tretkurbel |

### CMG 075

Figur 23 zeigt eine Prinzipskizze eines Antriebs 10 mit Elektromotor 50 und Getriebe für ein Kleinfahrzeug gemäß einem Ausführungsbeispiel der Anmeldung.

Die beidseitig aus dem Gehäuse 42 herausragenden Enden 76 und 76' der Ausgangswelle 34 tragen jeweils ein Ausgangszahnrad 7 bzw. 7'. Die Ausgangswelle 34 ist in zwei Drehdurchführungen 71 und 72 von zwei sich gegenüberliegenden Gehäusedeckeln 43 und 44 gelagert. Auf der Ausgangswelle 34 sind zwei Hohlwellen 68 und 69 als doppelte Hohlwelle drehbar gelagert, wie aus den vorhergehenden Ausführungsbeispielen bekannt. Eine innere Hohlwelle 68 trägt auf einer zu dem ersten Gehäusedeckel 43 gerichteten Seite ein Differentialgetriebe 80. Das Differentialgetriebe 80 ermöglicht unterschiedliche Drehzahlen der beiden aus dem Gehäuse 42 herausragenden Enden 76 und 76' der Ausgangswelle 34. Die innere Hohlwelle 68 weist auf einer zu einem zweiten Gehäusedeckel 44 hin gerichteten Seite einen Sitz 65 für eine Nabe 19 des dritten Abtriebzahnrad 6 der dritten Untersetzungsstufe 23 auf.

Das Differentialgetriebe 80 weist drei miteinander in Eingriff stehende Kegelräder 77, 78 und 78' auf. Ein Antriebskegelrad 77 ist mit der inneren Hohlwelle 68 über eine Gabel 79, in der die quer zur Ausgangswelle 34 angeordnete Achse 79 des Antriebskegelrades 77 gelagert ist, gekoppelt. Die Abtriebskegelräder 78 und 78' sind jeweils mit den Enden 76 bzw. 76' der Außenwelle 34 verbunden und kämmen mit dem Antriebskegelrad 77.

Auf der inneren Hohlwelle 68 ist die Zwischenwelle 32 als äußere Hohlwelle 69 der doppelten Hohlwelle mit dem Abtriebszahnrad 2 und dem Antriebszahnrad 3 der Untersetzungsstufen 21 bzw. 22 drehbar gelagert. Dabei ist das Abtriebszahnrad 2 auf das Antriebzahnrad 1 der Motorwelle 31 und das Antriebszahnrad 3 auf das Abtriebszahnrad 4 der zweiten Untersetzungsstufe 22 ausgerichtet.

Die innere Hohlwelle 68 ist mehrstufig aufgebaut und weist eine erste Stufe für den Sitz 65 mit einer Ansatzflanke auf, sodass eine Nabe 19 des Abtriebzahnrades 6 axial gesichert ist. Auf einer zweiten Stufe sind Lager der Zwischenwelle 32 angeordnet, die durch eine weitere Ansatzflanke zu einer dritten Stufe vor axialer Verschiebung gesichert sind. Dabei nimmt der Außendurchmesser der inneren Hohlwelle 68 von Stufe zu Stufe zu.

Die von der Ausgangswelle 34 getragene Doppelwelle bildet eine vormontierbare Baugruppe des dreikettrigen Getriebes und unterliegt vor dem Einbau in den Antrieb einer Qualitätskontrolle.

Zwei Kettentriebe 14 und 14' kämmen mit den Zahnkränzen der Ausgangszahnräder 7 und 7' und treiben über Zahnräder 8 bzw. 8' Nabenschaltungen 41 bzw. 41' von Laufrädern 26 bzw. 26' eines Kleinfahrzeugs an.

Das in Figur 23 gezeigte Ausführungsbeispiel hat den Vorteil, dass durch das Differentialgetriebe der inneren Hohlwelle der Antrieb mit den beidseitig aus dem Gehäuse herausragenden Enden der Ausgangswelle ein verbesserte Kurvenfahrt für Kleinfahrzeuge mit zwei fluchtend zueinander angeordneten Laufrädern möglich wird, was die Manövrierfähigkeit des Kleinfahrzeugs verbessert. Durch die Anordnung des Freilaufs gegenüberliegend zu dem in den Antrieb eingebauten Elektromotor wird der dort vorhandene Raum genutzt und eine kompakte Antriebseinheit geschaffen.

Anstelle der Kettentriebe 14 und 14' mit den Zahnrädern 7 bzw. 7' und 8 bzw. 8' können die Enden 76 und 76' der Ausgangswelle 34 direkt mit jeweils einer Nabe oder Nabenschaltung von Laufrädern eines Kleinfahrzeugs gekoppelt sein.
Was besonders für Rollstühle, motorgetriebene Drei- und Vierräder geeignet ist.

Anstelle der Kettentriebe 14 und 14' mit den Zahnrädern 7 bzw.7' und 8 bzw. 8' können die Enden 76 und 76' der Ausgangswelle 34 über Riementriebe gekoppelt sein, wobei die Enden 76 und 76' jeweils eine Ausgangsriemenscheibe aufweisen und die Naben 41 bzw. 41' der Laufräder 26 bzw. 26' jeweils über eine Antriebsriemenscheibe mittels eines Treibriemens oder eines Keilriemens oder eines Zahnriemens angetrieben werden. Diese Alternative hat den Vorteil, dass Keilriementriebe gegenüber Kettentrieben eine verminderte Geräuschentwicklung ermöglichen, was für Kleinfahrzeuge in medizinischen Bereichen von Vorteil ist.

Die übrigen Varianten und Anwendungsbeispiele der Ausführungsbeispiele insbesondere aus den Figuren 12 bis 22 sind auch auf das vorliegende Ausführungsbeispiel anwendbar.

Hier ist das das Vorsehen des Differentials in einem dreikettrigen Getriebe für sich gesehen relevant und - neben dem damit bereitgestellten Fahrzeug - als separater Gegenstand identifizierbar.

**Bezugszeichenliste**

| | | | |
|---|---|---|---|
| 1 | erstes Antriebszahnrad der ersten Untersetzungsstufe | 22 | zweite Untersetzungsstufe |
| | | 23 | dritte Untersetzungsstufe |
| 2 | erstes Abtriebszahnrad der ersten Untersetzungsstufe | 26 | erstes Laufrad |
| | | 26' | zweites Laufrad |
| 3 | zweites Antriebszahnrad der zweiten Untersetzungsstufe | 31 | Motorwelle |
| | | 32 | erste Zwischenwelle |
| 4 | zweites Abtriebszahnrad der zweiten Untersetzungsstufe | 33 | zweite Zwischenwelle |
| | | 34 | Ausgangswelle |
| 5 | drittes Antriebszahnrad der dritten Untersetzungsstufe | 39 | Freilaufwelle |
| | | 41 | Nabenschaltung |
| 6 | drittes Abtriebszahnrad der dritten Untersetzungsstufe | 41' | Nabenschaltung |
| | | 42 | Gehäuse |
| 7 | erstes Ausgangszahnrad | 43 | erster Gehäusedeckel |
| 7' | zweites Ausgangszahnrad | 44 | zweiter Gehäusedeckel |
| 10 | Antrieb | 50 | Elektromotor |
| 11 | erste Kette der ersten Untersetzungsstufe | 65 | Sitz des Abtriebszahnrads |
| | | 71 | erste Drehdurchführung |
| 12 | zweite Kette der ersten Untersetzungsstufe | 72 | (zweite) Drehdurchführung |
| | | 76 | Ende der Ausgangswelle 34 |
| 13 | dritte Kette der ersten Untersetzungsstufe | 76' | Ende der Ausgangswelle 34 |
| | | 77 | Antriebskegelrad |
| 14 | erster Kettentrieb | 78 | Abriebskegelrad |
| 14' | zweiter Kettentrieb | 78' | Abtriebskegelrad |
| 19 | Zahnradnabe von Zahnrad 6 | 79 | Gabel |
| 21 | erste Untersetzungsstufe CMG 076 | 80 | Differentialgetriebe |

Figur 24 zeigt eine Prinzipskizze eines Zweirads 110 mit einer Schwinge 150 für ein Laufrad 26. Ein Stoßdämpfer 142 mit Federelement 143 verbindet die Schwinge 150 gelenkig mit einem Rahmen 81 des Zweirads 110. Das Laufrad 26 wird von einem Antrieb 10 mit Elektromotor und Getriebe über den Kettentrieb 14 angetrieben. Von dem Elektromotor, der in einem Gehäuse 42 mit dem Getriebe angeordnet ist, wird in Figur 24 der elektrische Anschlussbereich 67 gezeigt.

Der Kettentrieb 14 verbindet ein Ausgangszahnrad 7 des Antriebs 10 mit einem Antriebszahnrad 8 einer Nabenschaltung 41 des Laufrads 26. Eine Schwenkachse 151 der Schwinge 150 ist koaxial mit der Ausgangswelle 34 des Antriebs 10 angeordnet.

Figur 25 zeigt einen schematischen Querschnitt durch das Zweirad 110 im Bereich des Antriebs 10 entlang der Schnittlinie A-A in Figur 1. Der Elektromotor 50 und das Getriebe sind in einem Gehäuse 42 angeordnet, aus dem beidseitig die Ausgangswelle 34 herausragt, die gleichzeitig als Schwenkachse 151 für die Schwinge vorgesehen ist. Das Gehäuse 42 des Antriebs 10 ist entsprechend in den Rahmen 81 des Zweirads integriert. Das Getriebe ist als dreikettriges Getriebe, d.h. als Getriebe mit drei Ketten 11, 12 und 13 ausgeführt.

Dazu weist eine erste Untersetzungsstufe 21 ein erstes Antriebszahnrad 1 auf, das auf einer Motorwelle 31 des Elektromotors 50 fixiert ist. Das erste Antriebszahnrad 1 ist mechanisch über die erste Kette 11 mit einem ersten Abtriebszahnrad 2 drehbar verbunden, das auf einer ersten Zwischenwelle 32 angeordnet ist.

Die zweite Untersetzungsstufe 22 weist ein zweites Antriebszahnrad 3 auf, das auf der ersten Zwischenwelle 32 zusammen mit dem ersten Abtriebszahnrad 2 fixiert ist. Das zweite Antriebszahnrad 3 ist mechanisch über die zweite Kette 12 mit einem zweiten Abtriebszahnrad 4 drehbar verbunden, das auf einer zweiten Zwischenwelle 33 fixiert ist.

Die dritte Untersetzungsstufe 23 weist ein drittes Antriebszahnrad 5 auf, das auf der zweiten Zwischenwelle 33 zusammen mit dem zweiten Abtriebszahnrad 4 fixiert ist. Das dritte Antriebszahnrad 5 ist mechanisch über die dritte Kette 13 mit einem dritten Abtriebszahnrad 6 drehbar verbunden.

Die beidseitig aus dem Gehäuse 42 herausragende Ausgangswelle 34 ist in zwei Drehdurchführungen 71 und 72 von zwei sich gegenüberliegenden Gehäusedeckeln 43 und 44 gelagert. Die Antriebswelle 34 trägt zu einem ersten Gehäusedeckel 43 hin ein Messrad 49 zur Messung der Ausgangsdrehzahl der Ausgangswelle 34. Auf der Ausgangswelle 34 sind zwei Hohlwellen 32 und 39 als doppelte Hohlwelle drehbar gelagert. Eine innere Hohlwelle ist als Freilaufwelle 39 ausgebildet. Die Freilaufwelle 39 trägt auf einer zu dem ersten Gehäusedeckel 43 gerichteten Seite einen Freilauf 40, der drehrichtungsabhängig mit der Ausgangswelle 34 klemmend in Eingriff bringbar ist. Die Freilaufwelle 39 weist auf einer zu einem zweiten Gehäusedeckel 44 hin gerichteten Seite einen Sitz für das dritte Abtriebzahnrad 6 der dritten Untersetzungsstufe 23 auf.

Auf der Freilaufwelle 39 ist die Zwischenwelle 32 als äußere Hohlwelle der doppelten Hohlwelle mit dem Abtriebszahnrad 2 und dem Antriebszahnrad 3 der Untersetzungsstufen 21 bzw. 22 drehbar gelagert. Dabei ist das Abtriebszahnrad 2 auf das Antriebzahnrad 1 der Motorwelle 31 und das Antriebszahnrad 3 auf das Abtriebszahnrad 4 der zweiten Untersetzungsstufe 22 ausgerichtet.

Das in Figur 24 gezeigte Ausführungsbeispiel hat den Vorteil, dass die Länge der Kette 14 in allen Schwenkwinkeln der Schwinge 150 konstant bleibt, so dass ein federnd vorgespannter Längenausgleich des Kettentriebs 14 nicht vorzusehen ist und Nabenschaltungen kostengünstig, betriebssicher und wartungsgerecht für das Laufrad eingesetzt werden können.

Dieser Antrieb ist nicht nur für Fahrradantriebe geeignet sondern für alle Kleinfahrzeuge mit einer schwingenden Aufhängung ihrer Laufradachsen.

Die übrigen Varianten und Anwendungsbeispiele der Ausführungsbeispiele insbesondere aus den Figuren 12 bis 23 sind auch auf das vorliegende Ausführungsbeispiel anwendbar. Besonders kann die Hohlwelle 39 auf die Außenseite des Getriebes gelegt werden, wobei das Zahnrad 7 auf der Hohlwelle 39 angeordnet ist-

Die übrigen Varianten und Anwendungsbeispiele der Ausführungsbeispiele insbesondere aus den Figuren 12 bis 23 sind auch auf das vorliegende Ausführungsbeispiel anwendbar.

Hier ist das das Vorsehen der folgenden Merkmalskombinationen für sich gesehen relevant und als separater Gegenstand identifizierbar:
Ziffer 1. Zweirad mit Elektromotor (50) und mehrstufigem Getriebe, wobei das mehrstufige Getriebe ein dreistufiges Untersetzungsgetriebe aufweist, das die Drehzahl n_{M} einer Motorwelle (31) des Elektromotors (M) auf die Drehzahl n_{A} einer Ausgangswelle (34) des Elektroantriebs (10) um ein Verhältnis n_{M} : n_{A} heruntersetzt, wobei n_{A} kleiner als n_{M} ist, wobei die Achse der Ausgangswelle (34) im Bereich einer Schwenkachse (151) einer Schwinge (150), die ein Laufrad (26) des Zweirades trägt, angeordnet ist.
Ziffer 2. Verfahren zum Anbringen eines Elektroantrieb (10) aus mindestens einem Elektromotor (50) und einem mehrstufigen Getriebe an ein Zweirad, das folgende Verfahrensschritte aufweist:
   - Herstellen eines Zweiradrahmens für den Elektroantrieb (10) unter vorsehen einer Schwinge;
   - Anbringen des Elektroantrieb (10) mit seinem Gehäuse unter Ausrichten einer Schwingenachse (151) der Schwinge (150) auf die Achse der Ausgangswelle (34) des Elektroantrieb (10).

| | | | |
|---|---|---|---|
| | Bezugszeichenliste | 10 | Antrieb |
| | | 11 | erste Kette der ersten Untersetzungsstufe |
| 1 | erstes Antriebszahnrad der ersten Untersetzungsstufe | | |
| | | 12 | zweite Kette der ersten Untersetzungsstufe |
| 2 | erstes Abtriebszahnrad der ersten Untersetzungsstufe | | |
| | | 13 | dritte Kette der ersten Untersetzungsstufe |
| 3 | zweites Antriebszahnrad der zweiten Untersetzungsstufe | | |
| | | 19 | Zahnradnabe von Zahnrad 6 |
| 4 | zweites Abtriebszahnrad der zweiten Untersetzungsstufe | 21 | erste Untersetzungsstufe |
| | | 22 | zweite Untersetzungsstufe |
| 5 | drittes Antriebszahnrad der dritten Untersetzungsstufe | 23 | dritte Untersetzungsstufe |
| | | 26 | Laufrad |
| 6 | drittes Abtriebszahnrad der dritten Untersetzungsstufe | 31 | Motorwelle |
| | | 32 | erste Zwischenwelle |
| 33 | zweite Zwischenwelle | 67 | elektrischer Anschlussbereich |
| 34 | Ausgangswelle | 71 | erste Drehdurchführung |
| 39 | Freilaufwelle | 72 | (zweite) Drehdurchführung |
| 40 | Freilauf | 110 | Elektrofahrrad bzw. Zweirad |
| 41 | Nabenschaltung | 142 | Stoßdämpfer |
| 42 | Gehäuse | 143 | Federelement |
| 43 | erster Gehäusedeckel | 150 | Schwinge |
| 44 | zweiter Gehäusedeckel | 151 | Schwenkachse der Schwinge |
| 50 | Elektromotor | | |

### CMG 078

Die Figuren 26 bis 33 zeigen ein weiteres Ausführungsbeispiel.

Figur 26 zeigt eine Prinzipskizze eines ersten Gehäusedeckels 43, an dem erste Zahnräder 1, 2 und 3 eines dreiteiligen Antriebsgehäuses gemäß eines ersten Ausführungsbeispiels angeordnet sind. Dabei ist an dem ersten Gehäusedeckel 43 ein Elektromotor 50 mit einer Motorwelle 31 auf der eine erstes Antriebszahnrad 1 angeordnet ist, aufgebracht..

Außerdem ist an dem ersten Gehäusedeckel 43 unterhalb des Elektromotor 50 eine Ausgangswelle 34 angeordnet, deren erstes Ende 76' aus dem ersten Gehäusedeckel 43 herausragt und deren zweites Ende 76 aus einem zum ersten Gehäusedeckel 43 gegenüberliebenden zweiten Gehäusedeckel hinausragt. Auf der Ausgangswelle 34 ist eine doppelte Hohlwelle drehbar gelagert. Eine Freilaufwelle 39 mit einem Freilauf 40 ist als innere Hohlwelle auf der Ausgangswelle 34 und eine erste Zwischenwelle 32 ist als äußere Hohlwelle auf der Freilaufwelle 39 drehbar gelagert. Die Ausgangswelle 34 trägt innerhalb des Gehäuses 42 zwischen dem Freilauf 40 und dem ersten Gehäusedeckel 43 ein Messrad 49 zur Erfassung von Ausgangsdrehzahlen.

Die Freilaufwelle 39 weist auf einer zu einem zweiten Gehäusedeckel hin gerichteten Seite einen Sitz 65 für ein Abtriebszahnrad auf. Die Zwischenwelle 32 trägt ein erstes Abtriebszahnrad 2 einer ersten Untersetzungsstufe 21 und ein zweites Antriebszahnrad 3 einer zweiten Untersetzungsstufe 22 des dreikettrigen Getriebes. Das erste Abtriebszahnrad 2 auf der ersten Zwischenwelle 32, ist gegenüberliegend zu dem ersten Antriebzahnrad 1 der Motorwellen 31 derart ausgerichtet, dass eine erste Kette 11 mit Zahnkränzen der Zahnräder 1 und 2 in Eingriff steht.

Figur 27 zeigt eine Prinzipskizze von weiteren drei Zahnrädern 4, 5 und 6 eines Gehäusemittelteils 45 des dreiteiligen Antriebsgehäuses 42 gemäß Figur 1. Dabei ist ein zweites Abtriebszahnrad 4 und ein drittes Antriebszahnrad 5 auf einer zweiten Zwischenwelle 33 fixiert. Eine zweite Kette 12 des Gehäusemittelteils 45 verbindet drehbar das zweite Abtriebszahnrad 4 und das zweite Antriebszahnrad 5. Eine dritte Kette 13 des Gehäusemittelteils 45 verbindet drehbar das dritte Antriebszahnrad 5 mit einem dritten Abtriebszahnrad 6 einer dritten Untersetzungsstufe 23.

Figur 28 zeigt eine Prinzipskizze des dreiteiligen Antriebsgehäuses 42 nach Zusammenbau des ersten Gehäusedeckels 43 mit dem Gehäusemittelteil 45 und einem zweiten Gehäusedeckel 44. Das Gehäusemittelteil 45 ist als stabile beidseitig offene Hohlform ausgebildet, die seitlich durch die beiden Gehäusedeckel 43 und 44 mediendicht geschlossen ist. Auf beiden Seiten ragt die Ausgangswelle 34 mit ihren Enden 76 und 76' herausragt. Die zweite Zwischenwelle 33 ist an dem zweiten Gehäusedeckel 44 drehbar angebracht. Das dritte Abtriebzahnrad 6 ist auf dem Sitz 65 der Freilaufwelle 39 fixiert.

Figur 29 zeigt eine Prinzipskizze des dreiteiligen Antriebsgehäuses 42, wobei das Mittelteil bereits Teil eines Zweiradrahmen 81 ist. Das Gehäusemittelteil 45 ist in diesem ersten Ausführungsbeispiel derart stabil aufgebaut, dass es ein tragendes Teil des Zweiradrahmens 81 bildet, wobei die Krafteinleitung von dem Antrieb in den Zweiradrahmen 81 über das Gehäusemittelteil 45 erfolgt. Außerdem sind auf den Enden 76' und 76, die aus dem dreiteiligen Gehäuse 42 herausragen, Pedale 74 aufweisende Tretkurbeln 75 fixiert. Zwischen dem zweiten Gehäusedeckel 44 und der Tretkurbel 75 ist ein Ausgangszahnrad 7 angebracht.

Figur 30 zeigt eine Prinzipskizze eines ersten Gehäusedeckels 43, an dem erste Zahnräder 1, 2 und 3 eines dreiteiligen Antriebsgehäuses 42 gemäß eines zweiten Ausführungsbeispiels angeordnet sind. Komponenten mit gleichen Funktionen wie in den Figuren 1 bis 4 werden in den nachfolgenden Figuren 5 bis 8 mit gleichen Bezugszeichen gekennzeichnet und nicht extra erörtert.

Der Gehäusedeckel 43 in Figur 30 unterscheidet sich von dem Gehäusedeckel der Figur 1, darin dass er als tragendes Teil für den Rahmen des Kleinfahrzeugs eine größere Materialstärke aufweist, als der Gehäusedeckel in Figur 1. Die übrigen Komponenten sind identisch, sodass sich eine erneute Beschreibung erübrigt.

Figur 31 zeigt eine Prinzipskizze von weiteren drei Zahnrädern 4, 5 und 6 eines Gehäusemittelteils 45 wie bereits in Figur 27 gezeigt.

Figur 32 zeigt eine Prinzipskizze des dreiteiligen Antriebsgehäuses 42 nach Zusammenbau des ersten Gehäusedeckels 43 mit dem Gehäusemittelteil 45 und einem zweiten Gehäusedeckel 44. Die Gehäusedeckel 43 und 44 bilden stabile geschlossene Gehäuseschalen aus denen die Enden 76 und 76' der Ausgangsachse 34 herausragen. Die Gehäusedeckel 43 und 44 sind im Unterschied zu Figur 28 zur Kraftübertragung mittels Abstandstiften 48 verbunden.

Figur 33 zeigt eine Prinzipskizze des dreiteiligen Antriebsgehäuses 42 nach Einbau in einen Zweiradrahmen 81. Die Gehäusedeckel 43 und 44 sind in diesem zweiten Ausführungsbeispiel derart stabil aufgebaut, dass die Krafteinleitung von dem Antrieb 10 in den Fahrzeugrahmen 81 über die Gehäusedeckel 43 und 44 erfolgt. Das Gehäusemittelteil 45 ist nicht als stabile beidseitig offene Hohlform gebildet, wie in Figur 29, sondern ist aus einem Kunststoff gefertigt und schließt den Gehäusemittenbereich des Getriebes mediendicht ab.

Der dreiteilige Aufbau des Antriebs hat den Vorteil, dass Motor und Getriebe in einzelnen Baugruppen gefertigt und gelagert werden können. Die Montage des Gehäuses mit den Baugruppen kann kostengünstig in einer Massenproduktion durchgeführt werden. Die Montage der Baugruppen, wie Motor mit Zahnrad, Hohlwellen mit Zahnrädern und Freilauf sowie Zwischenwellen kann mit Fertigungsautomaten kostengünstig produziert werden. Im Prinzip kann nach einer Vormontage von erstem Gehäusedeckel, Mittelteil und zweitem Gehäusedeckel das dreiteilige Gehäuse zu dem Antrieb zusammengeschoben werden, wie es die Figuren 28 und 32 zeigen.

Anstelle von Abstandhaltern 48 zwischen den Gehäusedeckeln, können die Gehäusedeckel zu der tragenden Konstruktion eines Rahmens eines Kleinfahrzeugs gehören und der Abstand zwischen den beiden Gehäusedeckeln wird durch die tragenden Konstruktion bereitgestellt. Damit ist es möglich, den Raumbedarf des Antriebs zu verringern und den Antrieb in die Tragkonstruktion des Kleinfahrzeugs zu integrieren.

Anstelle der Abstandhalter kann auch ein zweiteiliges Gehäusemittelteil diese Funktion übernehmen, wobei ein zweiter Teil des zweiteiligen Gehäusemittelteils eine Inspektions- und Montagehilfsöffnung abdeckt. Das hat den Vorteil, dass ein Antriebsgehäuse zur Verfügung steht, das an beliebige Kleinfahrzeuge angebaut werden kann.

Anstelle eines Gehäusemittelteils aus Kunststoff kann in dem zweiten Ausführungsbeispiel das Gehäusemittelteil aus faserverstärktem Kunststoff, wie Glasfaser oder Kohlefaser verstärktem Kunststoff und als Teil des Rahmens ausgeführt sein. Der Vorteil ist eine höhere Zugfestigkeit, Biegefestigkeit und Dauerbruchsicherheit.

Anstelle der Lagerung der zweiten Zwischenwelle 33 auf einem eigenen Wellenzapfen 35 kann eine als Hohlwelle aufgebildete zweite Zwischenwelle 33 auch auf der Motorwelle 31 gelagert werden. Damit ist es möglich ein exaktes Fluchten der Zwischenwelle 33 mit der Motorwelle 31 unabhängig von Fertigungs- und Montagetoleranzen eines Gehäusedeckels sicherzustellen.

Die übrigen Varianten und Anwendungsbeispiele der Ausführungsbeispiele insbesondere aus den Figuren 12 bis 25 sind auch auf das vorliegende Ausführungsbeispiel anwendbar.

Hier ist der dreiteilige Aufbau des Antriebs für sich gesehen relevant und als separater Gegenstand für sich identifizierbar, besonders im Zusammenhang mit dem dreikettrigen Getriebe.

### CMG 079

Figur 34 zeigt eine Prinzipskizze eines Antriebs 10 mit Elektromotor 50 und dreikettrigem Getriebe 100 mit Ölabdichtung für ein Kleinfahrzeug gemäß einem Ausführungsbeispiel der Anmeldung. Der Elektromotor 50 und das Getriebe 100 sind in einem dreiteiligen Gehäuse 42 angeordnet, aus dem beidseitig eine Ausgangswelle 34 als Tretlagerwelle 30 herausragt. Das Gehäuse 42 weist ein beidseitig offenes Gehäusemittelteil 45 auf, das von einem ersten und einem zweiten Gehäusedeckel 43 bzw. 44 beidseitig mediendicht geschlossen ist. Das Getriebe ist ein dreikettriges Getriebe 100, d.h. das Getriebe 100 ist mit drei Ketten 11, 12 und 13 ausgeführt.

Innerhalb des Gehäuses 42 ist ein erster Bereich 85 vorgesehen, der vor Kettenöl geschützt ist, in dem der Elektromotor 50, ein Freilauf 40, ein Messrad 49 und die Ausgangswelle 34 als Tretlagerwelle 30 angeordnet sind. Ein zweiter Bereich 95 ist innerhalb des Gehäuses 42 durch eine Trennwand 82 von dem ersten Bereich 85 abgeschottet und weist die drei Kettentriebe von drei Untersetzungsstufen 21, 22 und 23 mit den Ketten 11, 12 und 13 auf. In dem zweiten Bereich 95 ist ein Kettenöl für die drei Kettentriebe vorgesehen.

Die Motorwelle 31 ragt durch die Trennwand 82 in den zweiten Bereich 95 und wird mit einem ersten Dichtring 91 abgedichtet. Der zweite Bereich 95 weist eine doppelte Hohlwelle mit einer inneren Hohlwelle 68 und einer äußeren Hohlwelle 69 auf, die auf der Tretlagerwelle 30 gelagert sind und mit drei weiteren Dichtungen die Tretlagerwelle 30 und den ersten Bereich 85 vor Kettenöl schützen.

Die äußere Hohlwelle erstreckt sich bis zu der Trennwand 82. Ein zweiter Dichtring 92 ist zwischen der äußeren Hohlwelle 69 und der Trennwand 82 angeordnet. Die innere Hohlwelle erstreckt sich von dem Freilauf 40 bis zu dem zweiten Gehäusedeckel 44. Ein dritter Dichtring 93 ist zwischen der äußeren und der inneren Hohlwelle 69 bzw. 68 vorgesehen. Ein vierter Dichtring 94 ist zwischen der inneren Hohlwelle 68 und dem zweiten Gehäusedeckel 44 angeordnet. Mit den drei Dichtringen 92, 93 und 94 wird eine ölfreie Durchführung der Tretlagerwelle 30 durch das Gehäuse 42 erreicht.

In diesem Antrieb wird mit der ersten Untersetzungsstufe 21 das relativ geringe Motordrehmoment aufgrund eines Zahnkranzverhältnisses eines ersten Antriebszahnrads 1 auf der Motorwelle 31 zu einem ersten Abtriebszahnrad 2 auf der äußeren Hohlwelle 69 um den Faktor 75/21 auf eine höheres Drehmoment der äußeren Hohlwelle 69 erhöht, und die Drehzahl der äußeren Hohlwelle 69 um den gleichen Faktor vermindert. Da in diesem Getriebe 100 das Untersetzungsverhältnis der ersten Untersetzungsstufe 21 gleich dem Untersetzungsverhältnis der zweiten Untersetzungsstufe 22 ist, wird mit der zweiten Untersetzungsstufe 22 das Drehmoment um den gleichen Faktor weiter erhöht und die Drehzahl einer Zwischenwelle 33 um den gleichen Faktor weiter vermindert.

Schließlich wird das Drehmoment mit der dritten Untersetzungsstufe 23 aufgrund eines Zahnkranzverhältnisses eines dritten Antriebszahnrads 5 auf der Zwischenwelle 33 zu einem dritten Abtriebszahnrad 6 auf der inneren Hohlwelle 68 nochmals um einen Faktor 57/21 erhöht, sodass ein Ausgangsdrehmoment über die innere Hohlwelle 68 und den Freilauf 40 an der Tretlagerwelle 30 zur Verfügung steht. Das Ausgangsdrehmoment ist um den Faktor von ca. 35 höher, als das Motordrehmoment und reicht aus, um ein angepasstes Anfahrdrehmoment auf ein Laufrad eines Kleinfahrzeugs zu übertragen. Dabei ist die Ausgangsdrehzahl der Tretlagerwelle 30 um die Gesamtuntersetzung des Getriebes von ca. 35 gegenüber der Motordrehzahl vermindert.

Das in Figur 34 gezeigte Ausführungsbeispiel hat den Vorteil, dass durch die Aufteilung des Gehäuses 42 in einem ersten Bereich 85 und einen zweiten Bereich 95 durch Einfügen einer Trennwand 82 nur die Kettentriebe mit den Ketten 11, 12 und 13 mit Kettenöl versorgt werden, wobei vier Dichtringe 91 bis 94 dafür ausreichen, dass der erste Bereich 85 und die Tretlagerwelle mit Tretlagern vor Kettenöl geschützt sind. Dazu ist die äußere Hohlwelle sich bis zu der Trennwand 82 verlängert während sich eine verlängerte innere Hohlwelle von dem Freilauf 40 bis zu dem zweiten Gehäusedeckel 44 erstreckt.

Anstelle des dritten Dichtringes 93 kann ein Öldichtes Lager zwischen äußerer Hohlwelle und innerer Hohlwelle eingesetzt werden. Das hat den Vorteil einer Raumersparnis, einer Konstruktionsvereinfachung und einer Kosteneinsparung durch Wegfall des dritten Dichtrings.

Die übrigen Varianten und Anwendungsbeispiele der Ausführungsbeispiele insbesondere aus den Figuren 12 bis 33 sind auch auf das vorliegende Ausführungsbeispiel anwendbar.

Hier ist der Aufbau des Antriebs mit geschlossener Ölkammer für sich gesehen relevant und als separater Gegenstand für sich identifizierbar, besonders im Zusammenhang mit dem dreikettrigen Getriebe. Dabei ist besonders die Kombination mit einer dreifachen Hohlwelle relevant, wobei das Ritzel 7 unter Verwendung eines Freilaufs auf der inneren Hohlwelle angeordnet wird, so daß der Fahrer nicht mittreten muß, wenn der Elektromotor antreibt.

**Bezugszeichenliste**

| | | | |
|---|---|---|---|
| 1 | erstes Antriebszahnrad der ersten Untersetzungsstufe | 30 | Tretlagerwelle |
| | | 31 | Motorwelle |
| 2 | erstes Abtriebszahnrad der ersten Untersetzungsstufe | 33 | Zwischenwelle |
| | | 34 | Ausgangswelle |
| 3 | zweites Antriebszahnrad der zweiten Untersetzungsstufe | 40 | Freilauf |
| | | 42 | Gehäuse |
| 4 | zweites Abtriebszahnrad der zweiten Untersetzungsstufe | 43 | erster Gehäusedeckel |
| | | 44 | zweiter Gehäusedeckel |
| 5 | drittes Antriebszahnrad der dritten Untersetzungsstufe | 50 | Elektromotor |
| | | 68 | innere Hohlwelle |
| 6 | drittes Abtriebszahnrad der dritten Untersetzungsstufe | 69 | äußere Hohlwelle |
| | | 82 | Trennwand |
| 10 | Antrieb | 85 | erster Bereich (ölfrei) |
| 11 | erste Kette der ersten Untersetzungsstufe | 91 | erster Dichtring |
| | | 92 | zweiter Dichtring |
| 12 | zweite Kette der ersten Untersetzungsstufe | 93 | dritter Dichtring |
| | | 94 | vierter Dichtring |
| 13 | dritte Kette der ersten Untersetzungsstufe | 95 | zweiter Bereich (mit Kettenöl) |
| | | 100 | dreikettriges Getriebe |
| 21 | erste Untersetzungsstufe | | |
| 22 | zweite Untersetzungsstufe | | |
| 23 | dritte Untersetzungsstufe | | |

### CMG 080

Figur 35 zeigt eine Prinzipskizze eines Antriebs 10 mit Elektromotor 50 und Getriebe für ein Kleinfahrzeug gemäß einem Ausführungsbeispiel der Anmeldung. Der Elektromotor 50 und das Getriebe sind in einem Gehäuse 42 angeordnet, aus dem einseitig eine Ausgangswelle 34 herausragt. Das Getriebe ist als dreikettriges Getriebe, d.h. als Getriebe mit drei Ketten 11, 12 und 13 ausgeführt.

Eine erste Untersetzungsstufe 21 weist ein erstes Ritzel 1 auf, das auf einer Motorwelle 31 des Elektromotors 50 fixiert ist. Das erste Ritzel 1 ist mechanisch über eine erste Kette 11 mit einem ersten Abtriebszahnrad 2 drehbar verbunden, das auf einer ersten Zwischenwelle 32 angeordnet ist.

Eine zweite Untersetzungsstufe 22 weist ein zweites Ritzel 3 auf, das auf der ersten Zwischenwelle 32 zusammen mit dem ersten Abtriebszahnrad 2 fixiert ist. Das zweite Ritzel 3 ist mechanisch über eine zweite Kette 12 mit einem zweiten Abtriebszahnrad 4 drehbar verbunden, das auf einer zweiten Zwischenwelle 33 fixiert ist.

Eine dritte Untersetzungsstufe 23 weist ein drittes Ritzel 5 auf, das auf der zweiten Zwischenwelle 33 zusammen mit dem zweiten Abtriebszahnrad 4 fixiert ist. Das dritte Ritzel 5 ist mechanisch über eine dritte Kette 13 mit einem dritten Abtriebszahnrad 6 drehbar verbunden, wobei das dritte Abtriebszahnrad 6 auf der Ausgangswelle 34 des Antriebs 10 fixiert ist.

In dem gezeigten Antrieb 10 sind die Motorwelle 31 und die zweite Zwischenwelle 33 zueinander fluchtend vorgesehen. Zusätzlich sind ebenfalls die Ausgangswelle 34 und die erste Zwischenwelle 32 zueinander fluchtend angeordnet.

Die Ritzel 1, 3 und 5 weisen in dem gezeigten Getriebe die gleiche Anzahl 21 von Zähnen auf. Auch die Abtriebszahnräder 2 und 4 haben eine gleiche Anzahl 75 von Zähnen. Das dritte Abtriebszahnrad 6 weist eine geringfügig verminderte Zähnezahl gegenüber den Abtriebszahnräder 2 und 4 von 57 auf. Aus den Verhältnissen der Anzahl der Zähne der Zahnkränze der drei Untersetzungsstufen 21, 22 und 23 ergibt sich eine Gesamtuntersetzung U von U = 75/21x75/21x57/21 ≈ 35:1.

Mit diesem Antrieb wird mit der ersten Untersetzungsstufe 21 das relativ geringe Motordrehmoment um den Faktor 75/21 auf eine höheres Drehmoment der ersten Zwischenwelle 32 erhöht, und die Drehzahl der ersten Zwischenwelle 32 um den gleichen Faktor vermindert. Da in diesem Getriebe das Untersetzungsverhältnis der ersten Untersetzungsstufe 21 gleich dem Untersetzungsverhältnis der zweiten Untersetzungsstufe 22 ist, wird mit der zweiten Untersetzungsstufe 22 das Drehmoment um den gleichen Faktor weiter erhöht und die Drehzahl der zweiten Zwischenwelle 33 um den gleichen Faktor weiter vermindert.

Schließlich wird das Drehmoment mit der dritten Untersetzungsstufe 23 nochmals um einen Faktor 57/21 erhöht, sodass ein Ausgangsdrehmoment zur Verfügung steht, das um den Faktor von ca. 35 höher ist, als das Motordrehmoment. Zur Übertragung der Drehmomente von der Motorwelle 31 bis zu der Ausgangswelle 34 sind die Wellen 32 bis 34 mit den Naben 15 bis 19 der Zahnräder 2 bis 6 kraft-, stoff- oder formschlüssig verbunden. Die Ausgangswelle 34 trägt auf dem aus den Gehäuse 42 herausragenden Ende ein Ausgangsritzel 7, das über einen Kettentrieb 14 ein Anfahrmoment über eine Nabenschaltung 41 auf ein Laufrades 26 des Kleinfahrzeugs überträgt. Dabei ist die Ausgangsdrehzahl des Ausgangsritzels 34 um die Gesamtuntersetzung des Getriebes von ca. 35 gegenüber der Motordrehzahl vermindert.

Figur 36 zeigt eine Prinzipskizze einer Ritzelnabe für ein dreikettriges Getriebe. Das Ritzel 1 weist eine polygonale Nabenöffnung 27 auf, die auf einer entsprechend angepassten Wellenstufe mit gleichem polygonalem Profil formschlüssig mit der Welle zur Übertragung von Drehmomenten verbunden ist. Der Zahnkranz 9 des Ritzels 1 ist gegenüber der Nabenöffnung 27 des Ritzels 1 derart angeordnet, dass jeder Ecke 84 der polygonalen Nabenöffnung 27 ein Zahnfuß 86 gegenübersteht.

Wie die Figur 2 zeigt, sind zwischen zwei benachbarten Ecken der polygonale Nabenöffnung 29 jeweils drei Zähne 87 des Zahnkranzes 9 angeordnet, sodass bei dem gezeigten Ritzel 1 mit einer Nabenöffnung 27 mit sieben Ecken 84 ein Zahnkranz 9 mit 21 Zähnen 87 eine optimale Anpassung zwischen der jeweiligen Ecke 84 und einer Zahnfußmitte 83 vorhanden ist. In gleicher Weise sind die Ritzel 3 und 5 ausgeführt, zumal die Ritzel 3 und 5 die gleiche Zähnezahl 21 aufweisen, wie das Ritzel 1.

In diesem Ausführungsbeispiel wird ein Ritzel für die Kettentriebe eingesetzt, das eine Schwächung eines Ritzels mit polygonaler Nabenöffnung dadurch vermindert, dass die Eckenzahl und die Zähnezahl derart aufeinander abgestimmt und zueinander ausgerichtet sind, dass jede Ecke der polygonalen Nabenöffnung einem Zähnefuß gegenüber angeordnet ist. Bei der eingesetzten Zähnezahl und Eckenzahl sind die Ecken der polygonalen Nabenöffnung exakt mittig zu jedem Zahnfuß ausgerichtet. Ein weiterer Vorteil ist, dass das gezeigte Ritzel eine ungerade Zähnezahl auf dem Zahnkranz aufweist, so dass die Häufigkeit des Auftreffens eines Kettengliedes der Kette auf den gleichen Zahn des Zahnkranzes vermindert ist. Ein weiterer Vorteil des gezeigten Ritzels ist, dass eine theoretische Mindestzähnezahl nicht unterschritten wird, so dass die Lärmentwicklung vernachlässigbar gering ist.

Anstelle von Zahnrädern mit einer siebeneckigen Nabenöffnung sind Polygone mit einer anderen Anzahl von Ecken bzw. Kanten einsetzbar. Damit ist für Ritzel mit kleinen Durchmessen, die in vorteilhafter Weise ungerade Zähnezahlen aufweisen, der Vorteil verbunden, dass die Polygonecken nicht auf den geschwächten Bereich einer Zahnlücke, sondern auf den eines Zahnfußes ausgerichtet sind, wobei die ungerade Zähnezahl ein mehrfaches der ungeraden Polygonecken ist (5 zu 15; 5 zu 25; 7 zu 29 usw.).

Anstelle einer Ausrichtung der Ecken auf eine Zahnfußmitte kann auch eine Toleranzbreite angestrebt werden, wobei nicht mehr als 10% bis 20% von der Zahnfußmitte für die Positionierung der polygonalen Ecken abgewichen wird. Das hat den Vorteil, dass die Ecken in keinem Fall auf Zahnlücken treffen und damit das Ritzel schwächen.

Die Zähneanzahl pro Zahnkranz der Ritzel 1, 3 und 5 sollte eine Mindestzahl nicht unterschreiten und kann zwischen 19 und 25, vorzugsweise zwischen 19 bis 23 liegen ohne dass eine Lärmentwicklung dominiert. Die Zähneanzahl pro Zahnkranz der Abtriebzahnräder der Untersetzungsstufen 21, 22 und 23 kann zwischen 45 und 85 liegen ohne dass der Umschlingungswinkel der Ketten auf den zugehörigen Abtriebszahnädern zu gering wird. Dieses ermöglicht eine verbesserte Variationsbreite der Untersetzungen ohne gravierende Änderungen des Raumbedarfs für den Antrieb.

Die übrigen Varianten und Anwendungsbeispiele der Ausführungsbeispiele insbesondere aus den Figuren 12 bis 34 sind auch auf das vorliegende Ausführungsbeispiel anwendbar.

Hier ist der Aufbau des Ritzels 1 für sich gesehen relevant und als separater Gegenstand für sich identifizierbar, besonders im Zusammenhang mit dem dreikettrigen Getriebe.

**Bezugszeichenliste zu Figs. 35 und 36:**

| | | | |
|---|---|---|---|
| 1 | erstes Ritzel der ersten Untersetzungsstufe | 13 | dritte Kette der ersten Untersetzungsstufe |
| 2 | erstes Abtriebszahnrad der ersten Untersetzungsstufe | 14 | Kettentrieb |
| | | 21 | erste Untersetzungsstufe |
| 3 | zweites Ritzel der zweiten Untersetzungsstufe | 22 | zweite Untersetzungsstufe |
| | | 23 | dritte Untersetzungsstufe |
| 4 | zweites Abtriebszahnrad der zweiten Untersetzungsstufe | 26 | Laufrad |
| | | 31 | Motorwelle |
| 5 | drittes Ritzel der dritten Untersetzungsstufe | 32 | erste Zwischenwelle |
| | | 33 | zweite Zwischenwelle |
| 6 | drittes Abtriebszahnrad der dritten Untersetzungsstufe | 34 | Ausgangswelle |
| | | 41 | Nabenschaltung des Laufrads |
| 7 | Ritzel des Antriebs | 42 | Gehäuse |
| 8 | Ritzel des Laufrades | 50 | Elektromotor |
| 10 | Antrieb | 83 | Zahnfußmitte |
| 11 | erste Kette der ersten Untersetzungsstufe | 84 | Ecke eines Polygons |
| | | 86 | Zahnfuß |
| 12 | zweite Kette der ersten Untersetzungsstufe | 87 | Zahn eines Zahnkranzes |

### CMG 081

Figur 37 zeigt eine Prinzipskizze eines Antriebs 10 mit Elektromotor 50 und Getriebe für ein Kleinfahrzeug gemäß einem Ausführungsbeispiel der Anmeldung. Der Elektromotor 50 und das Getriebe sind in einem Gehäuse 42 angeordnet, aus dem einseitig eine Ausgangswelle 34 herausragt. Das Getriebe ist als dreikettriges Getriebe, d. h. als Getriebe mit drei Ketten 11, 12 und 13 ausgeführt.

Über drei Untersetzungsstufen 21, 22 und 23 wird die Drehzahl der Motorwelle 31 auf die Drehzahl einer Freilaufwelle 39 reduziert. Die Freilaufwelle steht über einen Freilauf 40 mit der Ausgangswelle 34 in Verbindung, die mit der gleichen Drehzahl dreht, sobald der Freilauf auf der Ausgangswelle 34 klemmt.

Auf der Ausgangswelle 34 ist ein Messrad 49 angeordnet, mit dem die Drehzahl der Ausgangswelle 34 von einem Sensor 88 erfasst wird. Dazu wird der Raum genutzt, der unterhalb des Elektromotors 50 zur Verfügung steht, so dass die Drehzahlmessung nicht außerhalb des Gehäuses 42 erfolgen muss. Über eine Messleitung 96 innerhalb des Gehäuses 42 steht der Sensor 88 mit einem elektrischen Anschlussbereich 67 des Elektromotors 50 in Verbindung. Eine externe Messleitung 97 verbindet den elektrischen Anschlussbereich 67 mit einem Steuergerät 90, an das eine Anzeige 89 über eine Anzeigeleitung 98 angeschlossen ist.

Sobald die Ausgangswelle 34 von dem Elektromotor 50 oder von Tretkurbeln 75 angetrieben wird, erfasst das Messrad 49 über den Sensor 88 die Drehzahl. Die Messwerte werden über die interne Leitung 96 zu dem elektrischen Anschlussbereich 67 geleitet. Über die externe Messleitung 97 werden die Messwerte an ein Steuergerät 90 geliefert und ausgewertet. Über eine Anzeigeleitung 98 werden die Daten einer Anzeige 89 zugeführt und kundenspezifisch angezeigt.

Mit diesem Antrieb wird mit der ersten Untersetzungsstufe 21 das relativ geringe Motordrehmoment um den Faktor 75/21 auf ein höheres Drehmoment einer ersten Zwischenwelle 32 erhöht, und die Drehzahl einer ersten Zwischenwelle 32 um den gleichen Faktor vermindert. Da in diesem Getriebe das Untersetzungsverhältnis der ersten Untersetzungsstufe 21 gleich dem Untersetzungsverhältnis der zweiten Untersetzungsstufe 22 ist, wird mit der zweiten Untersetzungsstufe 22 das Drehmoment um den gleichen Faktor weiter erhöht und die Drehzahl einer zweiten Zwischenwelle 33 um den gleichen Faktor weiter vermindert. Schließlich wird das Drehmoment mit der dritten Untersetzungsstufe 23 nochmals um einen Faktor 57/21 erhöht, sodass ein Ausgangsdrehmoment zur Verfügung steht, das um den Faktor von ca. 35 höher ist, als das Motordrehmoment. Dabei ist die Ausgangsdrehzahl der Ausgangswelle 35 um die Gesamtuntersetzung des Getriebes von ca. 35 gegenüber der Motordrehzahl vermindert.

Figur 38 zeigt eine Prinzipskizze eines Messrades 49 zur optischen Drehzahlabtastung. Dazu weist das Messrad 49 auf seinem Umfang gleichmäßig verteilt Abdeckzähne 101 auf. Die Abdeckzähne 101 decken einen in Achsrichtung strahlenden optischen Geber 99, beispielsweise einer Lichtschranke ab. Bei Zahnlücken 102 zwischen den Abdeckzähnen 101 werden Messsignale an das Steuergerät geleitet und ausgewertet. Die Messsignale lösen in dem Steuergerät Steuerfunktionen aus und liefern Zustandsinformationen der Ausgangswelle.

Figur 39 zeigt eine Prinzipskizze eines Messrades 49 zur elektromagnetischen Drehzahlabtastung mit einem Hallsensor 103. Dazu sind auf den Abdeckzähnen 101 Permanentmagnetplättchen 104 angeordnet, die von dem Hallsensor 103 beim Vorbeidrehen des Messrades 49 berührungsfrei erfasst werden. Der Hallsensor 103 liefert Spannungsimpulse, die als Messsignale an das Steuergerät übertragen werden.

Das Ausführungsbeispiel gemäß Figur 37 hat den Vorteil, dass eine optische sowie eine elektromagnetische Erfassung nicht außerhalb des Antriebs erfolgt, sondern innerhalb des Antriebsgehäuses der freie Raum unterhalb des Elektromotors für eine vor Umwelteinflüssen geschützte Messung genutzt wird. Das Ausführungsbeispiel gemäß Figur 37 (optische Drehzahlerfassung) hat den Vorteil, dass als Messrad auch preiswerte Kunststoffräder einsetzbar sind. Das Ausführungsbeispiel gemäß Figur 38 benötigt Permanentmagnetplättchen, die ein Hallsignal auslösen können. Das hat den Vorteil, dass dieser Sensor keine optische Sicht erfordert, um Messsignale zu liefern.

Anstelle eines Messrades kann auch eine Messspule eingesetzt werden, die einen drehzahlabhängigen Strom liefert. Das hat den Vorteil, dass ein analoges Messsignal zur Drehzahlerfassung zur Verfügung steht.

Die übrigen Varianten und Anwendungsbeispiele der Ausführungsbeispiele insbesondere aus den Figuren 12 bis 36 sind auch auf das vorliegende Ausführungsbeispiel anwendbar.

Hier ist die Drehzahlabtastung für sich gesehen relevant und als separater Gegenstand für sich identifizierbar, besonders im Zusammenhang mit dem dreikettrigen Getriebe. Dabei ist besonders die Kombination mit einer dreifachen Hohlwelle relevant, wobei das Ritzel 7 unter Verwendung eines Freilaufs auf der inneren Hohlwelle 39 angeordnet wird, so daß der Fahrer nicht mittreten muß, wenn der Elektromotor antreibt.

**Bezugszeichenliste zu Figs. 37 bis 39**

| | | | |
|---|---|---|---|
| 10 | Antrieb | 40 | Freilauf |
| 11 | erste Kette der ersten Untersetzungsstufe | 42 | Gehäuse |
| | | 49 | Messrad |
| 12 | zweite Kette der ersten Untersetzungsstufe | 50 | Elektromotor |
| | | 88 | Sensor |
| 13 | dritte Kette der ersten Untersetzungsstufe | 89 | Anzeige |
| | | 90 | Steuergerät |
| 21 | erste Untersetzungsstufe | 96 | Messleitung (intern) |
| 22 | zweite Untersetzungsstufe | 97 | Messleitung (extern) |
| 23 | dritte Untersetzungsstufe | 98 | Anzeigeleitung |
| 31 | Motorwelle | 99 | optischer Geber |
| 32 | erste Zwischenwelle | 101 | Abdeckzahn |
| 33 | zweite Zwischenwelle | 102 | Zahnlücke des Messrades |
| 34 | Ausgangswelle | 103 | Hallsensor |
| 39 | Freilaufwelle | 104 | Permanentmagnetplättchen |

## Patentansprüche

1. Getriebeeinheit für ein sowohl mit Menschenkraft als auch mit einem Elektromotor angetriebenes Fahrzeug, wobei das Getriebe die folgenden Merkmale aufweist:
- eine durch Menschenkraft betätigbare Kurbelwelle,
- eine Eingangswelle zum Anschluß an eine Rotorwelle eines Elektromotors
- eine Ausgangswelle zum Anschluß an ein Abtriebselement eines Fahrzeugs,
wobei im Kraftfluß zwischen der Kurbelwelle und der Ausgangswelle eine erste Freilaufeinrichtung vorgesehen ist, die die folgenden Merkmale aufweist:
- ein erstes Einleitungselement, das mit der Kurbelwelle in Verbindung steht,
- ein erstes Ausleitungselement, das mit der Ausgangswelle in Verbindung steht,
und wobei im Kraftfluß zwischen der Eingangswelle und der Ausgangswelle eine zweite Freilaufeinrichtung vorgesehen ist, die die folgenden Merkmale aufweist:
- ein zweites Einleitungselement, das mit der Eingangswelle in Verbindung steht,
- ein zweites Ausleitungselement, das mit der Ausgangswelle in Verbindung steht,
wobei das erste Ausleitungselement und das zweite Ausleitungselement permanent miteinander verbunden sind, und wobei ferner zwischen der Eingangswelle und der Ausgangswelle ein dreistufiges Untersetzungsgetriebe vorgesehen ist, das drei Untersetzungsstufen mit jeweils zwei Zahnrädern aufweist, wobei die Untersetzungsstufen jeweils ein Abtriebszahnrad und ein Antriebszahnrad aufweisen, von denen ein Abtriebszahnrad einer ersten Untersetzungsstufe konzentrisch zu einer Achse der Eingangswelle angeordnet ist und von denen ein Abtriebszahnrad der ersten Untersetzungsstufe, ein Antriebszahnrad der zweiten Untersetzungsstufe und ein Abtriebszahnrad der dritten Untersetzungsstufe konzentrisch zu der Kurbelwelle angeordnet sind, wobei sich die erste Untersetzungsstufe im Kraftfluss zwischen dem Elektromotor und dem ersten Einleitungselement befindet und wobei sich die zweite Untersetzungsstufe und die dritte Untersetzungsstufe im Kraftfluss zwischen dem ersten Ausleitungselement der ersten Freilaufeinrichtung und dem zweiten Einleitungselement der zweiten Freilaufeinrichtung befindet.

2. Getriebeeinheit nach Anspruch 1, wobei das erste Einleitungselement als Außenring der ersten Freilaufeinrichtung ausgebildet ist und das erste Ausleitungselement als Innenring der ersten Freilaufeinrichtung ausgebildet ist, und wobei das zweite Einleitungselement als Außenring der zweiten Freilaufeinrichtung ausgebildet ist und das zweite Ausleitungselement als Innenring der zweiten Freilaufeinrichtung ausgebildet ist.

3. Getriebeeinheit nach Anspruch 1, wobei das erste Einleitungselement als Außenring der ersten Freilaufeinrichtung ausgebildet ist und das erste Ausleitungselement als Innenring der ersten Freilaufeinrichtung ausgebildet ist, und wobei das zweite Einleitungselement als Innenring der zweiten Freilaufeinrichtung ausgebildet ist und das zweite Ausleitungselement als Außenring der zweiten Freilaufeinrichtung ausgebildet ist.

4. Getriebeeinheit nach einem der vorhergehenden Ansprüche, wobei das Abtriebszahnrad der ersten Untersetzungsstufe und das Antriebszahnrad der zweiten Untersetzungsstufe auf einer gemeinsamen Hohlwelle gelagert sind und das Abtriebszahnrad der zweiten Untersetzungsstufe und das Antriebszahnrad der dritten Untersetzungsstufe auf einer gemeinsamen Welle gelagert sind.

5. Getriebeeinheit nach Anspruch 4, wobei das Abtriebszahnrad der ersten Untersetzungsstufe und das Antriebszahnrad der zweiten Untersetzungsstufe mittels einer ersten Lagerung gelagert sind und wobei das Abtriebszahnrad der zweiten Untersetzungsstufe und das Antriebszahnrad der dritten Untersetzungsstufe mittels einer zweiten Lagerung gelagert sind und wobei die erste Lagerung und die zweite Lagerung jeweils als zwei entgegengesetzt orientierte Schräglager ausgebildet sind.

6. Getriebeeinheit nach Anspruch 4 oder Anspruch 5, wobei die Abtriebswelle als innere Hohlwelle ausgebildet ist und wobei das Abtriebszahnrad der ersten Untersetzungsstufe und das Antriebszahnrad der zweiten Untersetzungsstufe auf einer äußeren Hohlwelle angeordnet sind, die drehbar auf der inneren Hohlwelle angeordnet ist.

7. Getriebeinheit gemäß Anspruch 6, wobei die erste Freilaufeinrichtung an einem Ende der inneren Hohlwelle zwischen der Hohlwelle und der Kurbelwelle angeordnet ist

8. Getriebeinheit gemäß Anspruch 6 oder Anspruch 7, wobei die zweite Freilaufeinrichtung zwischen dem Abtriebszahnrad der ersten Untersetzungsstufe und der äußeren Hohlwelle angeordnet ist.

9. Getriebeinheit gemäß einem der Ansprüche 4 bis 8, wobei die innere Hohlwelle als Ausgangswelle zur Verbindung mit einem Abtriebsrad für eine Abtriebsstufe eines Fahrzeugs ausgebildet ist.

10. Getriebeeinheit nach Anspruch 9, wobei die innere Hohlwelle an einer Seite in einem Gehäuse der Getriebeeinheit gelagert ist.

11. Getriebeeinheit nach einem der Ansprüche 4 bis 9, wobei die Kurbelwelle an einer Seite in einem Gehäuse der Getriebeeinheit und an der gegenüberliegenden Seite in der inneren Hohlwelle gelagert ist.

12. Getriebeeinheit nach einem der vorhergehenden Ansprüche, wobei wenigstens eine Untersetzungsstufe eine Rollenkette aufweist.

13. Getriebeeinheit nach einem der vorhergehenden Ansprüche, wobei wenigstens eine Untersetzungsstufe einen Zahnriemen aufweist.

14. Getriebeeinheit nach einem der vorhergehenden Ansprüche, wobei wenigstens eine Zentrifugalfreilaufeinrichtung vorgesehen ist.

15. Fahrzeug mit Getriebe-Einheit nach einem der vorhergehenden Ansprüche, wobei die Ausgangswelle mit einem Laufrad des Fahrzeugs verbunden ist und wobei die Eingangswelle mit einem Elektromotor verbunden ist.

## Claims

1. Gear unit for a vehicle, the vehicle being driven by human power as well as by an electric motor, wherein the gear comprises the following features:
- a crankshaft that is operable by human power,
- an input shaft for connection with a rotor shaft of an electric motor,
- an output shaft for connection with an output element of a vehicle,
wherein a first free wheel means is provided in the power flow between the crankshaft and the output shaft, the first free wheel means comprising the following features:
- a first input transfer element, which is in connection with the crankshaft,
- a first output transfer element, which is in connection with the output shaft,
and wherein a second free wheel means is provided in the power flow between the input shaft and the output shaft, the second free wheel means comprising the following features:
- a second input transfer element, which is in connection with the input shaft,
- a second output transfer element, which is in connection with the output shaft,
wherein the first output transfer element and the second output transfer element are permanently connected to each other, and wherein furthermore a three stage reduction gear is provided between the input shaft and the output shaft, the three stage reduction gear comprising three reduction stages with two gear wheels, respectively, wherein the reduction stages comprise an output gear wheel and an input gear wheel, respectively, of which an output gear wheel of a first reduction stage is arranged concentrically to an axis of the input shaft and of which an output gear wheel of the first reduction stage, an input gear wheel of the second reduction stage and an output gear wheel of the third reduction stage are arranged concentrically to the crankshaft, wherein the first reduction stage is located in the power flow between the electric motor and the first input transfer element, and wherein the second reduction stage and the third reduction stage are located in the power flow between the first output transfer element of the first free wheel means and the second input transfer element of the second free wheel means.

2. Gear unit according to claim 1, wherein the first input transfer element is formed as outer race of the first free wheel means and the first output transfer element is formed out as inner race of the first free wheel means, and wherein the second input transfer element is formed out as outer race of the second free wheel means and the second output transfer element is formed out as inner race of the second free wheel means.

3. Gear unit according to claim 1, wherein the first input transfer element is formed out as outer race of the first free wheel means and the first output transfer element is formed out as inner race of the first free wheel means, and wherein the second input transfer element is formed out as inner race of the second free wheel means and the second output transfer element is formed out as outer race of the second free wheel means.

4. Gear unit according to one of the preceding claims, wherein the output gear wheel of the first reduction stage and the input gear wheel of the second reduction stage are supported on a common hollow shaft and the output gear wheel of the second reduction stage and the input gear wheel of the third reduction stage are supported on a common shaft.

5. Gear unit according to claim 4, wherein the output gear wheel of the first reduction stage and the input gear wheel of the second reduction stage are supported by a first bearing, and wherein the output gear wheel of the second reduction stage and the input gear wheel of the third reduction stage are supported by a second bearing, and wherein the first bearing and the second bearing are formed out as two oppositely oriented angular contact bearings.

6. Gear unit according to claim 4 or claim 5, wherein the output shaft is formed out as an inner hollow shaft and wherein the output gear wheel of the first reduction stage and the input gear wheel of the second reduction stage are arranged on an outer hollow shaft, which is rotatably arranged on the inner hollow shaft.

7. Gear unit according to claim 6, wherein the first free wheel means is arranged at one end of the inner hollow shaft between the hollow shaft and the crankshaft.

8. Gear unit according to claim 6 or claim 7, wherein the second free wheel means is arranged between the output gear wheel of the first reduction stage and the outer hollow shaft.

9. Gear unit according to one of the claims 4 to 8, wherein the inner hollow shaft is formed as an output shaft for connection with an output wheel for a drive stage of a vehicle.

10. Gear unit according to claim 9, wherein the inner hollow shaft is supported at one side in a casing of the gear unit.

11. Gear unit according to one of the claims 4 to 9, wherein the crankshaft is supported at one side in a casing of the gear unit and is supported in the inner hollow shaft at the opposite side.

12. Gear unit according to one of the preceding claims, wherein at least one reduction stage comprises a roller chain.

13. Gear unit according to one of the preceding claims, wherein at least one reduction stage comprises a tooth belt.

14. Gear unit according to one of the preceding claims, wherein at least one centrifugal free wheel means is provided.

15. Vehicle with a gear unit according to one of the preceding claims, wherein the output shaft is connected with a drive wheel of the vehicle and wherein the input shaft is connected with an electric motor.

## Revendications

1. Unité d'engrenage pour un véhicule, le véhicule étant entraîné par force humaine et par un moteur électrique, dans laquelle l'engrenage comprend les caractéristiques suivantes:
- un vilebrequin qui est opérable par force humaine,
- un arbre d'entrée pour connexion à un arbre de rotor d'un moteur électrique,
- un arbre de sortie pour connexion à un élément de sortie d'un véhicule,
dans laquelle un premier dispositif de roue libre est disposée dans le flux de force entre le vilebrequin et l'arbre de sortie, avec les caractéristiques suivantes:
- un premier élément d'introduction qui est connecté au vilebrequin,
- un premier élément de sortie qui est connecté à l'arbre de sortie,
dans laquelle un second dispositif de roue libre est disposé dans le flux de force entre l'arbre d'entrée et l'arbre de sortie avec les caractéristiques suivantes:
- un second élément d'introduction qui est en connexion avec l'arbre d'entrée,
- un second élément de sortie, qui est en connexion avec l'arbre de sortie,
dans laquelle le premier élément d'introduction et le second élément de sortie sont reliés entre eux de manière permanente,
et dans laquelle un engrenage réducteur à trois étages est pourvue entre l'arbre d'entrée et l'arbre de sortie, l'engrenage réducteur comprenant trois étages de réduction, chacun avec deux roues dentées, dans lequel chacun des étages de réduction comprend une roue dentée de sortie et une roue dentée d'entrée, dont lesquelles une roue dentée de sortie du premier étage de réduction est disposée concentriquement par rapport à une axe de l'arbre d'entrée et dont lesquelles une roue dentée de sortie du premier étage de réduction, une roue dentée d'entrée du second étage de réduction et une roue dentée de sortie du troisième étage de réduction sont disposées concentriquement par rapport au vilebrequin, dans lequel le premier étage de réduction est disposée dans le flux de force entre le moteur électrique et le premier élément d'introduction, et dans laquelle le second étage de réduction et le troisième étage de réduction et disposée dans le flux de force entre le premier élément de sortie du premier dispositif de roue libre et le second élément d'introduction du second dispositif de roue libre.

2. Unité d'engrenage selon revendication 1, dans laquelle le premier élément d'introduction est formé comme bague extérieure du premier dispositif de roue libre et le premier élément de sortie et formé comme bague intérieure du premier dispositif de roue libre, et dans laquelle le second élément d'entrée est formé comme bague extérieure du second dispositif de roue libre et le second élément de sortie est formée comme bague intérieure du second dispositif de roue libre.

3. Unité d'engrenage selon revendication 1, dans laquelle le premier élément d'introduction est formé comme bague extérieure du premier dispositif de roue libre et le premier élément de sortie est formé comme bague intérieure du premier dispositif de roue libre, et dans laquelle le second élément d'entrée est formé comme bague intérieure du second dispositif de roue libre et le second élément de sortie est formé comme bague extérieure du second dispositif de roue libre.

4. Unité d'engrenage selon une des revendications précédentes, dans laquelle la roue dentée de sortie du premier étage de réduction et la roue dentée d'entrée du second étage de réduction sont montées sur un arbre creux commun, et dans laquelle la roue dentée de sortie du second étage de réduction et la roue dentée d'entrée du troisième étage de réduction sont montées sur un arbre commun.

5. Unité d'engrenage selon revendication 4, dans laquelle la roue dentée de sortie du premier étage de réduction et la roue dentée d'entrée du second étage de réduction sont montée par un premier roulement et dans laquelle la roue dentée de sortie du deuxième étage de réduction et la roue dentée d'entrée du troisième étage de réduction sont montées par un second roulement et dans laquelle le premier roulement et le second roulement sont formés comme des roulements à contact oblique qui sont orientés de manière opposée.

6. Unité d'engrenage selon revendication 4 ou revendication 5, dans laquelle l'arbre d'entrée est formé comme arbre creux intérieur et dans laquelle la roue dentée de sortie du premier étage de réduction et la roue dentée d'entrée du second étage de réduction sont disposées sur un arbre creux extérieur qui est disposée de manière rotative sur l'arbre creux intérieur.

7. Unité d'engrenage selon revendication 6, dans laquelle le premier dispositif de roue libre est disposé à un bout de l'arbre creux intérieur entre l'arbre creux et le vilebrequin.

8. Unité d'engrenage selon revendication 6 ou revendication 7, dans laquelle le second dispositif de roue libre est disposé entre la roue dentée de sortie du premier étage de réduction et l'arbre creux extérieur.

9. Unité d'engrenage selon une des revendications 4 à 8, dans laquelle l'arbre creux intérieur est formé comme arbre de sortie pour connexion avec une roue dentée de sortie d'un étage de sortie d'un véhicule.

10. Unité d'engrenage selon revendication 9, dans lequel l'arbre creux intérieur est monté à un côté dans une boîte de l'unité d'engrenage.

11. Unité d'engrenage selon une des revendications 4 à 9, dans laquelle le vilebrequin est monté à un côté dans une boîte de l'unité d'engrenage et à un côté opposé dans l'arbre creux intérieur.

12. Unité d'engrenage selon une des revendications précédentes, dans laquelle au moins un étage de réduction comprend une chaîne à rouleaux.

13. Unité d'engrenage selon une des revendications précédentes, dans laquelle au moins un des étages de réduction comprend une courroie dentée.

14. Unité d'engrenage selon une des revendications précédentes, l'unité d'engrenage comprenant au moins un dispositif de roue libre centrifuge.

15. Véhicule avec l'unité d'engrenage selon une des revendications précédentes, dans lequel l'arbre de sortie est connecté à une roue motrice du véhicule et dans lequel l'arbre d'entrée est connecté au moteur électrique.
